# EUROPÄISCHE PATENTSCHRIFT

(11) **EP 3 384 733 B1**
(45) Veröffentlichungstag und Bekanntmachung des Hinweises auf die Patenterteilung: **20.03.2024**
(21) Anmeldenummer: 16806043.2
(22) Anmeldetag: 01.12.2016
(51) Int. Cl.: H05B 45/10, H05B 39/04, H05B 45/18

(54) **LEISTUNGSSTEUERVORRICHTUNG**
POWER CONTROL DEVICE
DISPOSITIF DE COMMANDE DE PUISSANCE

(30) Priorität: 01.12.2015 DE 102015223953; 11.03.2016 DE 102016204045; 01.04.2016 DE 102016205461; 03.04.2016 DE 102016003773; 19.10.2016 DE 102016220526
(43) Veröffentlichungstag der Anmeldung: 10.10.2018
(73) Patentinhaber: Dr. Ralf Hinkel Holding GmbH, 67657 Kaiserslautern (DE)
(72) Erfinder: HINKEL, Ralf, 67657 Kaiserslautern (DE); HINKEL, René, 67657 Kaiserslautern (DE)
(74) Vertreter: Pietruk, Claus Peter
(86) Internationale Anmeldenummer: PCT/EP2016/079473
(87) Internationale Veröffentlichungsnummer: WO 2017/093425

(56) Entgegenhaltungen:
- US-A1- 2008 284 350
- US-A1- 2014 312 773

## Beschreibung

Die vorliegende Erfindung betrifft das oberbegrifflich Beanspruchte und bezieht sich somit auf Leistungssteuervorrichtungen, die unter anderem bei Haustechnikanordnungen verwendbar sind.

Es gibt eine Reihe von Haustechnikanordnungen, die von einem Benützer bedient werden müssen. Hierzu zählen Haustechnikanordnungen nicht nur in privaten Wohngebäuden, sondern auch in Bürogebäuden beliebiger Größe, öffentlichen Gebäuden usw. Zu den von einem Benützer zu benutzenden Haustechnikanordnungen gehören unter anderem Türöffner, Rollläden, Lüftungen, Heizungen, Licht usw. Daneben ist es oftmals wünschenswert, einen Benützer oder eine bestimmte Person oder Personengruppe darauf hinzuweisen, wenn im Gebäude Gefahren drohen, Eingriffe erforderlich, Kontrollen sinnvoll sind oder dergleichen. Was Haustechnikanordnungen, deren Montage und Aufbau angeht, sowie die allgemeine Bedienung, sei unter anderem hingewiesen auf die folgenden Schutzrechte PCT/EP2015/072878, DE 10 2016 204 045, DE 10 2016 204 056 und DE 10 2015 223 953 sowie die mit diesen Schutzrechten über Prioritäten verbundenen Parallelanmeldungen. Die vorgenannten Schutzrechte gehen zum Teil auf dieselbe Anmelderin und/oder auf gleiche oder zum Teil gleiche Erfinder wie das vorliegende Schutzrecht zurück. Die Schutzrechte sind vollumfänglich zu Offenbarungszwecken eingegliedert und es wird ersichtlich, dass hier nützliche Grundlagen und Details zu bestimmten Techniken, wie Aufbau von Dimmern, Kommunikation von Einheiten untereinander und/oder mit einem einzelnen Nutzer oder mehreren Benützern, einer Zentrale und/oder mit einer entfernt von einem Aktor, Taster oder Schalter bzw. Sensor befindlichen Person aus den vorgebannten Dokumenten zumindest zum Teil offenbart sind.

In den vorbekannten Schutzrechten wird unter anderem beschrieben, dass Schalter auf bestimmte Art und Weise konstruiert werden können, um besser bedienbar zu sein, um eine preiswerte Herstellung zu ermöglichen, eine leichte Konfigurierung insbesondere durch eine Zentrale zu erlauben usw. Es wird auch beschrieben, wie etwa eine Dimmeranordnung konstruiert werden kann, um platzsparend große Leistungen mit geringem Verlustleistungen ausgeben zu können.

Es wird für den Fachmann einsichtig sein, dass ungeachtet der in den referenzierten Dokumenten beschriebenen fortschrittlichen Techniken weitere Verbesserungen wünschenswert sein werden, insbesondere um eine Sicherheit gegen Fremdeingriffe zu erhöhen und/oder um die Bedienung zu vereinfachen und/oder um die Konfigurierung zu vereinfachen und/oder um die Funktionalität zu verbessern. Es wird auch einsichtig sein, dass es wünschenswert ist, den Gesamtaufwand für den Betrieb eines Systems zu verringern und/oder die Kosten zu senken. Es wird wünschenswert, zumindest einige der oben genannten, anzustrebenden Verbesserungen wenigstens partiell zu erzielen.

Elektrische Verbraucher in den erwähnten und anderen Haustechnikanordnungen sollen oftmals nicht einfach an- und ausgeschaltet werden, sondern es soll die an sie gespeiste bzw. von ihnen abgegebene Leistung gesteuert und somit verändert werden. Dies gilt beispielsweise bei Lampen in einem Raum, die zu bestimmten Zeiten nicht mit voller Helligkeit leuchten, sondern gedimmt werden sollen. Andere Beispiele sind etwa Deckenventilatoren oder Belüftungsventilatoren, die je nach Wunsch eines Benutzers schneller oder langsamer laufen sollen oder elektrische (Zusatz) -Heizungen in Bädern und dergleichen.

Es ist per se bekannt, für elektrische Lampen Dimmer vorzusehen. Das Dimmen der Helligkeit geschieht, indem die dem Leuchtmittel der elektrischen Lampe zugeführte Leistung reduziert wird. Während es prinzipiell möglich wäre, dies bei Wechselspannungsnetzen durch Verringerung der maximalen Spannungen zu bewirken, wird bei herkömmlichen, aktuell gebräuchlichen Dimmern der zum Leuchtmittel fließende Strom in einer bestimmten Phase während des Wechselspannungsverlaufs unterbrochen. Eine entsprechende Beeinflussung der an die elektrische Lampe gespeisten Leistung wird auch vorliegend vorgenommen. Die Beeinflussung der elektrischen Leistung ist, wie einsichtig ist, nicht nur bei elektrischen Lampen sinnvoll, sondern kann generell für eine Vielzahl elektrischer Verbraucher angewendet werden. Die hier in der vorliegenden Anmeldung verwendete Bezeichnung "Dimmer" beschränkt sich also nicht auf Lichtdimmer oder Lampendimmer. Auch ist einsichtig, dass dort, wo von Haustechnikanordnungen die Rede ist, keinesfalls nur eine Verwendung im privaten Wohnungsbereich angedacht ist. Vielmehr wird einzusehen sein, dass unter Haustechnikanordnung ganz allgemein Anwendungen in Gebäuden, insbesondere zu Wohn- und Arbeitszwecken dienenden Gebäuden, aber auch Funktionsbauten wie Industrieanlagen, Parkhäusern und dergleichen zu verstehen sind.

Es wird einzuschätzen sein, dass mit Lichtnetz, bzw. Licht- Wechselspannungsnetz die in Gebäuden gebräuchlichen Anschlüsse mit beispielsweise 110 V, 120 V, 220 V, 230 V oder 240 V und typisch 50 bis 60 Hertz Frequenz gemeint sind. Derartige Lichtnetze werden typisch zweiphasig ausgelegt, wobei ein zusätzlicher Erdleiter vorhanden sein kann.

Als Beispiele für vorbekannte Dimmerschaltungen seien die Anordnungen genannt, die aus den Dokumenten US 2008/284350 A1, US 2014/312773 A1, US 2010/ 0 264 838 A1, US 2013 / 0 057 163 A1, und US 2014 / 0 265 898 A1 bekannt sind. Das Dimmen in Licht-Wechselspannungs-Netzen erfolgt wie erwähnt typisch so, dass Strom und Spannung nicht während der Dauer einer ganzen Wechselspannungs-Phase an einen Verbraucher gespeist werden, sondern eine Beschränkung dieser Dauern stattfindet.

Je nachdem, während welchem Teil der elektrischen Wechselspannungsschwingungen die Unterbrechung erfolgt, wird von Phasenanschnitt- bzw. Phasenabschnitt gesprochen; dabei sollten kapazitive Lasten per Phasenabschnitt gedimmt werden, während induktive und ohmsche Lasten per Phasenanschnitt gedimmt werden sollen. Es sind bereits Dimmer bekannt, deren Elektronik die Lastcharakteristik erkennt und automatisch eine entsprechende Ansteuerung wählt.

Die bekannten Leistungssteuer-Vorrichtungen sind im Regelfall gerade für Vielkanal-Anordnungen baulich sehr groß, etwa in der professionellen Lichttechnik, wo als Lichtmischpulte bezeichnete Steuergeräte z.B. gemäß DMX-Standard digitale Signale erzeugen, die dann über geeignete Datenleitungen bis zu einer Lichtquelle wie einem Scheinwerfer übertragen und dort ausgewertet werden, um den jeweiligen Scheinwerfer auf die gewünschte Helligkeit zu dimmen. Dies ist vergleichsweise aufwändig.

Es gibt auch seit langem Dimmer für den Hausgebrauch, die einen Einbau in Unterputzdose und damit die Verwendung mit herkömmlichen Schaltern erlauben. Die typische Auslegung derartiger Dimmer und die bei Phasenan- bzw. -abschnitt entstehende Wärme führen jedoch dazu, dass handelsübliche Dimmer für Unterputzdosen nur als Einkanaldimmer ausgelegt sind, was bedeutet, dass alle Verbraucher, die an den Dimmer angeschlossen werden, gemeinsam in gleicher Weise heruntergedimmt werden.

Es ist wünschenswert, eine leistungssteuernde Vorrichtung anzugeben, bei der viele Lasten in einem Lichtnetz unabhängig voneinander betrieben, aber gemeinsam kontrolliert werden können. Es ist auch wünschenswert, dass eine solche Leistungssteuervorrichtung einfach aufgebaut ist. Es ist auch wünschenswert, dass eine solche Leistungssteuervorrichtung preiswert ist. Es ist auch wünschenswert, dass eine solche Leistungssteuervorrichtung hochintegriert ist.

Es wäre vorteilhaft, zumindest einem Teil dieser Wünsche zumindest partiell genügen zu können.

Die Aufgabe der vorliegenden Erfindung besteht darin, Neues für die gewerbliche Anwendung bereitzustellen.

Die Lösung dieser Aufgabe wird unter anderem durch die Vorschläge in den Ansprüchen erzielt.

Gemäß einem ersten Aspekt der vorliegenden Erfindung wird eine Anordnung nach Anspruch 1 vorgeschlagen.

Es sei erwähnt, dass eine Leistungssteuervorrichtung für eine Vielzahl unabhängig betreibbarer Lasten eines zweiphasigen Wechselstrom-Lichtnetzes so ausgebildet werden kann, dass sie für die unabhängig betreibbaren Lasten eine gemeinsame Kontrollanordnung und separate Leistungsschaltungsanordnungen aufweist, wobei die Leistungsschaltungsanordnungen jeweils ein Leistungshalbleiterpaar, eine Ansteuerschaltung. die als die Leistungshalbleiter leitend oder nichtleitend steuernde Treiberschaltung gebildet ist, und eine zugeordnete Netzteilschaltung aufweisen, und wobei die Kontrollanordnung eine Netzteilschaltung aufweist, wobei die Netzteilschaltungen separate Bezugspotentiale für die Leistungsschaltungsanordnungen und die Kontrollanordnung aufweisen, und zwar derart, dass von einer ersten Lichtnetzphase die Bezugspotenziale für die Leistungsschaltungsanordnungs-Netzteile bzw. Netzteischaltungen abgeleitet sind, und von der zweiten Lichtnetzphase das Bezugspotenzial für die Netzteilschaltung der Kontrollanordnung abgeleitet ist, wobei das Bezugspotenzial für die Netzteilschaltung der Kontrollanordnung jeweils von dem Potentialpunkt zwischen dem Leistungshalbleiterpaar differiert, und wobei für die Übertragung von Ansteuersignalen aus der Kontrollanordnung an die Ansteuerschaltungen zwischen Kontrollanordnung und Ansteuerschaltungen jeweils ein Optokoppler oder z.B. ein Übertrager, d.h. jedenfalls ein elektrisches Trennmittel, vorgesehen ist.

Bei der erfindungsgemäßen Leistungssteuervorrichtung wird es sich typisch um einen Dimmer handeln, der eine Dimmung durch Phasenschnitt mittels der Ansteuerungsschaltung erreicht. Neben Leuchtmitteln, die gedimmt werden sollen, können aber auch Heizungen, Ventilatoren und dergleichen Verbraucher gesteuert werden. Daneben ist es ohne weiteres möglich, die Leistungssteuervorrichtung auch dort einzusetzen, wo die Leistung nicht in einer quasi kontinuierlichen Weise geregelt werden soll, sondern an- oder ausgeschaltet werden soll, wie dies bei Rollläden usw. der Fall ist. Hier kann etwa ein Kanal zur Auf- und ein Kanal zur Ab-Steuerung eines Rollladens verwendet werden.

Die Steuerung der Leistungen, d.h. die Veränderung der Verbrauchern und somit Lasten zugeführten Leistungen kann in sehr kleinen Stufen erfolgen, indem der Zeitpunkt des Phasenabschnittes quasi kontinuierlich verändert wird. Es wird einzuschätzen sein, dass in einem 50 Hz oder 60 Hz-Wechselstromnetz, wie es herkömmliche Lichtnetze typisch darstellen, eine Festlegung des Anschnittzeitpunktes auf 1 ms bereits o.w. ausreicht, um eine sehr große Anzahl von Steuerungsschritten zu realisieren. Derartig präzise Vorgaben einer Phasenanstiegszeit lassen sich aber mit Mikroprozessoren in Kontrollanordnungen selbst dann völlig problemfrei realisieren, wenn diese sehr langsam, also im Bereich einiger weniger Megahertz getaktet sind. Oftmals sind die Genauigkeiten sogar höher. Indem die Ansteuerungsschaltungen Leistungshalbleiter leitend oder nichtleitend steuern, und zwar entsprechend der über Optokoppler, galvanisch trennende Anordnungen wie Übertrager und dergl. elektrisch isoliert von der Kontrollanordnung erhaltenen, gegebenenfalls über einen Puffertreiber oder dergleichen angepassten Schaltsignale, kann die Ansteuerschaltung besonders einfach ausgestaltet werden und es ist nicht erforderlich, die Ansteuerschaltung mit komplexen Logiksignalen zu beaufschlagen, die einem Protokoll folgen wie bei der DMX-Lichttechnik. Die Ansteuerungsschaltungen der vorliegenden Erfindung sind also dazu ausgelegt, protokollfreie Signale zu erhalten und dazu, die Leistungshalbleiter auf Signale aus der Kontrollanordnung unmittelbar leitend oder nichtleitend zu steuern, und die Kontrollanordnung gibt Signale aus, die unmittelbar den Phasenan- bzw. -abschnittszeitpunkt selbst bestimmen. Insbesondere kann ein digitales Signal ausgegeben werden, das so lange einen ersten binären Wert (0 oder 1) besitzt, wie ein leitender Zustand für die Leistungshalbleiter gewünscht wird, d.h. von der Steuerung vorgegeben und so lange den zweiten binären Wert (1 oder 0) besitzt, wie ein nichtleitender Zustand für die Leistungshalbleiter gewünscht wird.

Durch die Verwendung protokollfreier Signale ist es nicht erforderlich, die Signale als einem Telekommunikationsprotokoll voll gehorchende Abfolge von wechselnden Signalpegeln auszugeben oder mehrere einzelne Signalpegel parallel zu erzeugen, damit die Kontrollanordnung leitend oder nichtleitend gesteuert wird. Vielmehr bestimmt der Pegel des einzelnen protokollfreien Signals unmittelbar, ob die Leistungshalbleiter leitend oder nichtleitend gesteuert werden sollen.

Die Ansteuerbarkeit unabhängig betreibbarer Lasten bedeutet, dass es sich bei der Leistungs-steuervorrichtung der vorliegenden Erfindung um ein Mehrkanalgerät handelt, d.h. die Leistungssteuervorrichtung ist ein Gerät, das mehrere unabhängig voneinander betreibbare Lasten ansteuern kann und somit mehrere Kanäle besitzt. Es sei darauf hingewiesen, dass später noch erläutert wird, dass die Leistungssteuervonichtung der vorliegenden Erfindung vorteilhaft mit mindestens einer Drahtlosschnittstelle wie Bluetooth oder WLAN ausgebildet sein kann; es ist bekannt, dass das für die Übertragung von derartigen Funksignalen zur Verfügung stehende Band in mehrere "Funk-Kanäle" unterteilt wird. Die Bezugnahme auf Kanäle in der vorliegenden Erfindung bezieht sich vorliegend jedoch regelmäßig auf Kanäle anzusteuernder Lasten, nicht auf Funkkanäle, sofern nichts anderes unmittelbar ersichtlich ist.

Dass die Lasten unabhängig voneinander betreibbar sind, bedeutet zunächst, dass im wesentlichen die Leistungsausgabe in einem Kanal nicht beeinflusst wird von der Leistungsausgabe, die für einen anderen Kanal vorgesehen ist. Hier ist es durch die unabhängige Betreibbarkeit möglich, dass die Leistungsvorgabe in den Kanälen sich nicht wechselseitig beeinflusst. Grenzen findet diese Unabhängigkeit allerdings dort, wo etwa sichere Betriebsbedingungen zu beachten sind; dies kann dort der Fall sein, wo bei einer gegebenen Last vergleichsweise viel Wärme innerhalb des Dimmers erzeugt wird. Die im Dimmer erzeugte Wärme wird ab- hängen von der Leistung, die ausgegeben wird, d.h. beispielsweise dem gesamtfließenden Strom durch die Last, sowie davon, wo der Phasenschnitt erfolgt. Müssen sehr große Ströme durch die Last unterbrochen werden, wird die Erwärmung höher sein. Dies kann bei mehreren Kanälen, die alle in einem Bereich betrieben werden, wo die im Dimmer abfallende Leistung besonders hoch ist, dazu führen, dass die maximal im Dimmer zulässige Verlustleistung überschritten würde. In einem solchen Fall ist dann zu beachten, dass die Gesamtleistung nicht überschritten werden darf. Auch durch den Zwang, hochfrequente Störungen zu begrenzen, kann die Unabhängigkeit Grenzen finden, wie weiter unten ersichtlich sein wird. Dies begrenzt insoweit die Unabhängigkeit des Betreibens verschiedener Lasten; wo dies unkritisch ist, ist eine vollständige Unabhängigkeit gegeben.

Es sei übrigens erwähnt, dass - sofern nichts weiteres ersichtlich und verständlich- dort, wo auf Bluetooth -fähige Geräte Bezug genommen wird, der herkömmliche Bluetooth-Standard ebenso verwendet werden kann wie neuere Bluetooth-Standards, etwa Bluetooth-LowEnergy usw., was bevorzugt ist. Die Verwendbarkeit kommender Kommunikationsstandards wird antizipiert.

Die Kontrollanordnung wird typisch als Logikschaltung ausgebildet sein und eine CPU bzw. einen Mikrokontroller oder dergleichen umfassen, um eine Vielzahl von unterschiedlichen Ansteuerungsmöglichkeiten zu realisieren und zuzulassen. Es wird dabei erfindungsgemäß für alle Kanäle eine gemeinsame Kontrollanordnung, d.h. eine gemeinsame CPU, ein gemeinsamer Mikrokontroller oder dergleichen vorgesehen. Es kann so auch leicht vermieden werden, dass mehrere Kanäle zu einem exakt gleichen Zeitpunkt mit zu hoher Leistung geschaltet werden, weil nur eine Instanz vorhanden ist, die alle Kanäle kontrolliert.

Es wird einzuschätzen sein, dass die Hardwareimplementierung auf unterschiedliche Weise geschehen kann. Prinzipiell wäre es möglich, zur Implementierung ASICs oder dergleichen einzusetzen. Mit solchen ASICs können sämtliche Funktionalitäten ohne weiteres implementiert werden, die in der vorliegenden Anmeldung diskutiert werden. Nachteilig ist jedoch, wie prinzipiell bei ASICs, dass Änderungen der Funktionalität, ggf. von verwendeten Protokollen, Anpassungen an neue Anforderungen sowohl seitens der Benützer als auch der Sicherheit kontrollierenden Instanzen schwierig sind und die Herstellung von ASICs im Regelfall sehr teuer ist, sodass sich dies nur für extrem große Stückzahlen amortisiert. Es wird daher in einer bevorzugten Variante mit Mikrokontrollern bzw. CPUs gearbeitet werden, wobei der Fachmann erkennen wird, dass damit typisch verbunden ist, dass zur Implementierung bestimmter, vorliegend vorgeschlagener Vorgehensweisen, Kommunikationsarten, Signalübertragen usw. eine CPU bzw. ein Mikrokontroller, ein Speicher für abzuarbeitende Anweisungen, deren Abarbeitung das Ausführen von bestimmten Verfahrensschritten bewirkt, ein Taktgeber, der einen im Vergleich zur Lichtnetzfrequenz hochfrequenten Takt erzeugt, typisch mit wenigstes einigen 1000 Takten je Halbwelle vorhanden sein werden; es werden typisch Schnittstellen vorhanden sein, wie Eingänge für analoge Signale, die zu digitalisieren sind, und/oder für binäre, bereits digitalisierte Signale von Tastern, Analogdigitalwandlern, Kommunikationsschnittstellen wie Bluetooth-Bausteinen, Ausgängen zu Optokopplern usw., die jeweils einen Teil der Hardware der Leistungssteuervorrichtung bilden können.

Was die Netzteilschaltungen angeht, so wird einsichtig sein, dass die Kontrollanordnung einen Leistungsbedarf aufweisen wird, der größer ist als jener der mit Treiberschaltungen realisierten Ansteuerungsschaltungen. Dementsprechend wird die Netzteilschaltung für die Kontrollanordnung etwas aufwändiger gestaltet sein, während die Netzteilschaltung für die den Leistungshalbleitern zugeordnete Treiberschaltung sehr einfach gestaltet sein kann, weil sich einerseits geringe Spannungsschwankungen kaum auswirken und andererseits die für die Treiberschaltung benötigten Leistungen gering sind. Die (womöglich als galvanisch bezeichnete, aber nicht zwingend tatsächlich galvanische) elektrisch isolierende Trennung könnte zwar durch Übertrager wie Transformatoren oder dergleichen realisiert sein, wird aber im Regelfall mit opto-elektronischen Bauelementen implementiert werden, d.h. mittels sog. Optokoppler. Im vorliegenden Fall ist es ausreichend, wenn die Optokoppler je Kanal ein binäres Ansteuerungssigial übertragen, das anzeigt, ob momentan ein leitender oder nichtleitender Zustand der Leistungshalbleiter erforderlich ist. Es wird aus dem obigen bereits einsichtig sein, dass es ausreicht, von der Kontrollanordnung die binären Steuersignale gewünschter Dauer an die Optokoppler zu übertragen, ohne dass ein Rückkanal von der Ansteuerschaltung oder dem Optokoppler an die Kontrollanordnung vorhanden sein muss. Typische, auch einfache und preiswerte Optokoppler erlauben ohne weiteres Anstiegs-und Abfallzeiten, welche für eine Phasenschnitt- Steuerung ohne weiteres ausreichend sind.

Indem eine elektrisch isolierende Trennung zwischen der Kontrollanordnung und dem Leistungshalbleiter jedes Kanals bzw. dem Leistungshalbleiterpaar jedes Kanals erfolgt, werden auch die Kanäle untereinander wechselseitig wie erforderlich voneinander isoliert sein. Wie verständlich sein wird, sind unterschiedliche Möglichkeiten der elektrischen Isolation gegeben. Optokoppler sind besonders einfach, preiswert und fiir Zwecke der vorliegenden Erfindung ausreichend schnell. Deswegen sind sie besonders bevorzugt.

Es ist im Übrigen nicht erforderlich, die Kontrollanordnung vollständig gegen die Lastkreise zu isolieren; typisch wird z.B. eine elektrisch leitende Verbindung zum Shunt-Widerstand vorliegen.

Es sei darauf hingewiesen, dass in einer besonders bevorzugten Variante die Treiberstufe an das Leistungsschalterpaar gleichstromgekoppelt ist und auch zwischen Shunt und Strommessungslogikschaltung typisch keine elektrische Gleichstromtrennung, kein Optokoppler oder dergleichen vorgesehen ist, sondern beispielsweise allenfalls (evtl: hinreichend groß dimensionierte) Kondensatoren. Auch Kondensatoren werden aber typisch nicht erforderlich sein.

Es sei erwähnt, dass prinzipiell an bestimmten Stellen durchaus Kondensatoren im Dimmer eingesetzt werden können, etwa im Netzteil zur Entstörung usw. Eine weitere mögliche Anwendung ist dort gegeben, wo sichergestellt werden soll, dass ein Dimmer nach einer nur kurzen Unterbrechung der Stromzufuhr, d.h. einem sogenannten "Brownout", auf der korrekten Dimmstufe wieder einschaltet, während er nach einer längeren Unterbrechung der Stromzufuhr nicht wieder einschaltet oder auf einer von der vorherigen unabhängigen Dimmstufe. Die dafür erforderliche Unterscheidung zwischen längerer und kürzerer Ausschaltdauer kann beispielsweise durch ein RC-Glied gewährleistet werden, wenn dieses während eines normalen Betriebs aufgeladen wird und nach Wegfall der Spannungsversorgung, also etwa bei einem Stromausfall, der geladene Kondensator langsam über den Widerstand des RC-Gliedes entladen wird. Es muss dann lediglich beim Wiedereinschalten die vorteilhafte Spannung am Kondensator erfasst werden. Eine weitere Alternative, ein vorteilhaftes Wiedereinschalten durch den Einsatz von Kondensatoren zu unterstützen, besteht darin, zumindest einen Takt- bzw. Zeitgeber während einer Stromunterbrechung für eine bestimmte Zeit lang aus einem Kondensator oder dergleichen mit Leistung zu versorgen und die Zeit seit einem Stromausfall bzw. die Anzahl an Takten während des Stromausfalles zu bestimmen und ggf. nichtflüchtig weg zu speichern. Bei einer hinreichend großen Leistungsversorgung, d.h. beispielsweise einem hinreichend großen Pufferkondensator, kann gewährleistet werden, dass dann der Takt beziehungsweise Zeitgeber zumindest so lange läuft, wie ein Wiedereinschalten des Dimmers auf der vorherigen Dimmstufe noch als sinnvoll angesehen wird. Dies kann im Bereich zwischen einigen Minuten bis eventuell mehrere Stunden der Fall sein; wenn dann auch die Leistungspufferspeicher für die Taktung bzw. den Zeitgeber erschöpft sind, kann durch das Setzen eines Flags und/oder das Wegschreiben des Zählwertes, der einen hinreichend hohen Wert erreicht hat, sichergestellt werden, dass zwischen einem Fall kurzer und längerer Stromunterbrechung trotzdem sicher unterschieden werden kann. Die entsprechende Information d.h. z.B. der Zählerwert, wird nach dem Wiedereinschalten ausgelesen und im Ansprechen darauf entweder der Dimmer auf der vorherigen Stufe oder einen anderen, vorbestimmten Stufe wieder eingeschaltet oder ausgelassen. Es sei im Übrigen erwähnt, dass es dort, wo per se die absolute Zeit benützt wird, um etwa Heizungen zu bestimmten Zeiten an- und auszuschalten, Rollläden zu bestimmten Zeiten zu senken oder anzuheben usw. vorteilhaft ist, auch längere Netzausfälle überbrücken zu können, falls nicht nach Wiedereinschalten eine zentrale Zeit über geeignete Kommunikationsstellen hinreichend schnell und sicher erhalten werden kann.

Es ist vorteilhaft, wenn bei einer erfindungsgemäßen Leistungssteuervorrichtung zusätzlich und/oder alternativ vorgesehen ist, dass die jeweiligen Leistungshalbleiter Leistungshalbleiterpaare, bevorzugt MOSFETs, umfassen, wobei bevorzugt die Ansteuerschaltung als Treiberschaltung dazu ausgebildet ist, die Leistungshalbleiterpaare leitend oder nichtleitend zu steuern, und bevorzugt als TTL-Schaltung gebildet ist.

Bei einer Ausbildung der Leistungshalbleiter mit Leistungshalbleiterpaaren wird die Treiberschaltung typisch einen zwischen diesen liegenden Bezugspunkt bzw. Ansteuerpunkt aufweisen. Es wird einsichtig sein, dass auch bei sehr einfacher Ausbildung der Treiberschaltung, etwa, wie hier bevorzugt, als TTL-Schaltung, die Anstiegs-und Abfall-Flanken der Treiberschaltung hinreichend steil sein werden, um eine problemfreie und ausreichende Ansteuerung der Leistungshalbleiter zuzulassen.

Es sei im Übrigen erwähnt, dass dort wo etwa für die elektrische Isolierung zwischen Leistungshalbleiterpaar und Kontrollschaltung ein Optokoppler verwendet wird, dessen Ausgangssignale unmittelbar zur Ansteuerung der Leistungshalbleiter geeignet wären, auf eine separate Ansteuerschaltung verzichtet werden könnte.

Bei Ausbildung der Ansteuerschaltung als Treiberschaltung wird diese ihr Eingangssignal wiederum unmittelbar (gegebenenfalls abgesehen von einer Signalpufferung, Signalkonditionierung, Filterung und dergleichen) bevorzugt von einem Optokoppler erhalten, der eine besonders einfache Ausbildung der für die elektrisch Potenzial-Trennung verwendeten Mittel erlaubt. Es sei erwähnt, dass trotz der sehr einfachen Ausbildung der Ansteuerschaltung als reine Treiberschaltung gleichwohl ein Phasenan- bzw. -abschnitt je nach Lastart implementierbar ist, indem die Phasenverschiebung zwischen Strom und Spannung an der Last erfasst wird. Die vorliegende Erfindung erlaubt die Messung von Strömen durch die Last und zwar derart, dass eine Phasenbestimmung möglich ist, so dass kapazitive, induktive und ohmsche Lasten als solche erkannt werden können.

Dies wiederum ist auch bei Mehrkanal-Ausbildung der Leistungssteuervorrichtung ohne weiteres möglich, weil die separaten Bezugspotenziale für die Netzteilschaltung der Leistungssteuervorrichtung und der Kontrollanordnung ohne weiteres eine einfache Phasenvorgabe erlaubt.

Es ist vorteilhaft, dass bei einer erfindungsgemäßen Leistungssteuervorrichtung das Bezugspotenzial für die Netzteilschaltung der Kontrollanordnung von dem Potentialpunkt zwischen dem Leistungshalbleiterpaar differiert.

Während herkömmlich in Dimmer-Anordnungen Leistungshalbleiterpaare verwendet wurden, zwischen denen ein Potenzialpunkt als Bezugspotenzial für eine Kontrollanordnung dient, wird dabei vorliegend das Bezugspotenzial für die Kontrollanordnung anders gewählt werden. Im wesentlichen wird Spannung für die Treiber, d.h. für die Ansteuerschaltung der Leistungshalbleiter, unter Heranziehung einer von zwei Phasen eines Zweiphasen-Wechselstrom-Lichtnetzes hergeleitet, während die Netzteilschaltung für die Kontrollanordnung als Bezugspotential die andere Phase des Zweiphasen-Wechselstrom-Lichtnetzes verwendet. Dass die jeweiligen Netzteilschaltungen im Vorfeld zur Lichtnetzspannung niedrige Spannungen und Gleich- statt Wechselspannung bereitstellt, sei erwähnt. Typisch wird die jeweils bereitgestellte Niedervolt-Gleichspannung unter 12V liegen, bevorzugt um oder unter 5V.

Obwohl somit unterschiedliche Phasen eines Zweiphasen-Wechselstrom-Lichtnetzes für die Definition und Festlegung der Bezugspotentials verwendet werden, ist der zusätzliche Bauteilaufwand und der zusätzliche Energieaufwand extrem gering, weil die Treiberschaltungen nur minimale Ströme und sehr niedrigen Leistungen erfordern, also Netzteil-Schaltungen extrem einfach gebildet werden können.

Es ist vorgesehen, dass eine erfindungsgemäße Leistungssteuervorrichtung für ein zweiphasiges Wechselstrom-Lichtnetz, bevorzugt ein zweiphasiges Wechselstrom-Lichtnetz mit einem zusätzlichen Erdungsleiter, ausgelegt ist und die Bezugspotenziale für die Lasten von einer ersten Lichtnetzphase abgeleitet sind, während das Bezugspotenzial für die Kontrollanordnung von der zweiten Lichtnetzphase abgeleitet sind.

Wenn vorliegend von einem Zweiphasen-Wechselstrom-Lichtnetz gesprochen wird, so wird zu verstehen sein, dass neben den zwei Phasen des Lichtnetzes aus Sicherheitsgründen ein zusätzlicher Erdungsleiter vorhanden sein kann. Es wird auch für den Fachmann einzuschätzen sein, dass gegebenenfalls ein solcher zusätzlicher Erdungsleiter auf geeignete Weise mit der erfindungsgemäßen Leistungssteuervorrichtung oder Teilen davon verbunden sein kann, um die Betriebssicherheit zu erhöhen, dass aber eben im Normalbetrieb ohne Störung und dergleichen der Erdungsleiter keine leitende Verbindung zu den funktionalen Schaltkreisen der Leistungssteuervorrichtung aufweist.

Es ist vorteilhaft, wenn bei einer erfindungsgemäßen Leistungssteuervorrichtung zusätzlich und/oder alternativ vorgesehen ist, dass jeder der unabhängigen Lasten ein Shunt-Widerstand zugeordnet ist, der zwischen der Phase, aus der die Kontrollanordnung im Betrieb leistungsversorgt wird, und den Leistungshalbleitern dieses Kanals vorgesehen ist.

In einer besonders bevorzugten Variante ist also ein Shunt-Widerstand vorgesehen. Dieser wird bevorzugt, anders als im Stand der Technik üblich, nicht zwischen den Leistungshalbleitern des Paares angeordnet, sondern vielmehr zwischen einerseits der Phase, aus der die Kontrollanordnung im Betrieb leistungsversorgt wird, und andererseits dem von der Last abgewandten Ausgang der Leistungshalbleiterpaares dieses Kanals angeordnet.

Da die Kontrollanordnung für alle Kanäle die gleiche ist und ergo eine von zwei Phasen des Zweiphasen-Wechselstrom-Lichtnetzes für die Versorgung der Kontrollanordnung herangezogen wird, während die Netzteilschaltungen bzw. Spannungsversorgungen für die Ansteuerschaltungen an der anderen Phase liegen werden, und zwar jeweils für alle Leistungskanäle, werden auch die Shunt-Widerstände alle einseitig auf der gleichen Phase angeschlossen sein, nämlich jener, an der auch die Kontrollanordnung im Betrieb ihr Bezugspotential herleitet.

Damit wird es ohne weiteres möglich, jedem Leistungskanal einen eigenen Shunt zuzuordnen und die Ströme durch jeden Shunt einzeln zu messen und die Strommess-Signale jeweils an die Kontrollanordnung zu speisen. Damit wird aber der Strom durch jede einzelne Last messbar; es wird zugleich bestimmbar, wie hoch die Leistung durch eine bestimmte Last ist, welche Phasenverschiebung zwischen Strom und Spannung an einer jeweiligen Last auftritt, wie hoch der Gesamtleistungsverbrauch ist und so weiter.

Es sei darauf hingewiesen, dass bei der Dimmer-Anordnung in vorteilhafter Weise die Größe eines Shunt-Widerstandes so gewählt ist, dass sich bei der maximal zulässigen Leistung, d.h. auch dem maximal zulässigen Strom durch den Shunt Widerstand, eine gute Ausnutzung der Genauigkeit des oder der verwendeten ADC-Wandler ergibt.

Es ist im Übrigen ohne weiteres möglich, einerseits die Null-Durchgänge der Wechselspannung zwischen den beiden Phasen eines Zweiphasen-Wechselstrom-Lichtnetzes zu ermitteln; dazu kann die alternierende Spannung verglichen werden mit einer gegen eine Phase bestimmten, konstanten Referenzspannung. Wenn die alternierende Spannung geeignet heruntergeteilt wird und an einen ersten Eingang einer Vergleichsschaltung gespeist wird und an den anderen Eingang dieser Vergleichsschaltung die fest gegen eine Phase bezogene konstante Referenzspannung gespeist wird, kann mit der Vergleichsschaltung festgestellt werden, wann die heruntergeteilte Spannung größer als die konstante Referenzspannung ist und wann sie kleiner als die konstante Referenzspannung ist. Damit ist die Feststellung des Nulldurchganges der alternierenden Spannung möglich. Zugleich ist ergo die Phasenlage der Wechselspannung auf dem Lichtnetz bekannt. Es kann dann der (Wechsel--)Stromverlauf durch den Shunt bestimmt werden. Dieser Stromverlauf wird einsichtiger Weise auch alternieren; die Phasenlage relativ zur Wechselspannung auf dem Lichtnetz ist somit bekannt. Wenn aber die Phasenlage zwischen Strom und Spannung am Shunt bekannt ist, können induktive von ohmschen bzw. kapazitiven Lasten unterschieden werden und es ist somit einfach, eine Entscheidung darüber vorzunehmen, ob eine Phasenanschnitt- oder Phasenabschnitt-Steuerung für einen gegebenen Kanal erforderlich ist.

Wenn im vorstehenden - und auch im nachfolgenden - Text davon gesprochen wird, dass eine bestimmte Feststellung möglich ist oder ein bestimmter Wert, ein Verhältnis oder dergleichen bekannt sind, so wird für den Fachmann einzuschätzen sein, dass dies gleichbedeutend damit ist, dass eine Anordnung vorgesehen ist, bzw. die vorhandene Schaltung dazu ausgelegt ist, einen Wert, ein Verhältnis oder dergleichen zu bestimmen und ein dafür indikatives Signal zu erzeugen, das auswertbar ist. Wenn also beispielsweise beschrieben wird, dass die Feststellung des Nulldurchganges der alternierenden Spannung möglich ist, so bedeutet dies, dass eine Nulldurchgangsfeststellungsstufe zur Detektion des Nulldurchganges vorgesehen ist. Damit wird ein nulldurchgangsindikatives Signal erzeugt, das ausgewertet werden kann. In entsprechender Weise ist damit, dass der Stromverlauf durch den Shunt bestimmt wird, gemeint, dass eine Folge sukzessiver Stromwerte generiert werden, die indikativ für einen durch den Shunt fließenden Strom sind. Entsprechend bedeutet die Aussage, dass die Phasenlage relativ zur Wechselspannung auf dem Lichtnetz bekannt ist, dass mit den bestehenden Schaltungen ein Wert bestimmbar ist, der für die Phasenlage relativ zur Wechselspannung auf den Lichtnetzt indikativ ist und ein solches Signal vorliegt. Die Aussage, dass induktive von ohmschen bzw. kapazitiven Lasten unterschieden werden können, bedeutet entsprechend, dass anhand des phasenlagenindikativen Signals entschieden werden kann, ob eine induktive, ohmsche oder kapazitive Last vorliegt. Es versteht sich, dass derartige Entscheidungen, Feststellungen usw. automatisch insbesondere durch Abarbeitung geeigneter Programmschritte, Programmstufen usw. mit einer digitalen programmierbaren Schaltung möglich ist, dass also kein Eingriff des menschlichen Verstandes erforderlich ist.

Es wird ohne weiteres verständlich sein, dass ein Mikrokontroller oder dergleichen eine Vielzahl von Ausgängen besitzen wird und somit eine Vielzahl von Leistungsquellen ansteuern kann. Da zwecks Ansteuerung der Leistungsquellen lediglich zeitlich festgelegt an- oder absteigende Ansteuerungssignale über den Optokoppler übertragen werden müssen, können digitale Ausgangssignale aus dem Mikrokontroller evtl. über eine jeweilige Lastsschaltstufe wie einen Pufferschaltkreis bzw. direkt an einen jeweiligen Optokoppler übertragen werden.

Es sei erwähnt, dass bevorzugt nicht nur der Ausgangsstrom an einem Shunt zu messen ist, sondern auch die Eingangsspannung respektive, was in der Regel gleich ist, die Ausgangsspannung am Dimmer unabhängig vom Strom gemessen wird. Dies erlaubt durch insbesondere numerische Berechnung nach Multiplikation von Strom- und Spannungsmesswerten die Bestimmung von (mittleren) Leistungskurven und damit eine genaue Bestimmung der aktuellen tatsächlichen Leistungen. Um die tatsächliche Leistung noch genauer zu messen, können bei der Strommessung unterschiedliche Verstärkungszweige vorgesehen werden, mit welchen das am Shuntwiderstand erfasste stromindikative Signal verstärkt wird, z.b. ein Niederstromzweig und, zur Verwendung, sobald der Niederstromzweig einen bestimmten Messwert überschreitet, ein Hochstromzweig. Dies erlaubt es, einen vorhandenen strommessenden Analog-Digitalkonverter optimal anzusteuern und somit eine besonders hohe Genauigkeit zu erzielen.

Es wird einsichtig sein, dass für Strom bzw. Spannung indikative Werte mit einem Analog-Digital- Wandler bzw. mehreren Analog-Digital-Wandlern bereitgestellt werden können. Dazu kann der Strom gemessen werden über die an einem Shunt-Widerstand bekannten Widerstandswertes abfallende Spannung, während die Eingangsspannung per se als Spannung zwischen den beiden Phasen des Lichtnetzes über einen geeigneten Spannungsteiler mit einem Analog-Digital-Konverter gemessen werden kann. Die entsprechenden, für Strom und Spannung indikativen Werte können dann an den Microcontroller bzw. an die CPU gespeist werden, wo geeignete Rechenwerke zur Durchführung von Multiplikationen und Additionen vorhanden sind.

Die Leistungsaufnahme wird genauer erfasst und es ist auch möglich, eine Leistungskurve - Leistung gegen Dimmgrad- exakt zu erfassen, beispielsweise die Leistungsaufnahme für eine bestimmte Dimmstufe und/oder eine bestimmte Dauer nach einem (im Dimmer ohne hinzu erfassenden) Phasen-Nulldurchgang der gedimmten Wechselspannung. Dass eine Leistungskurve im Übrigen auch dann sinnvoll erfasst werden kann, wenn nicht die exakten Eingangsspannungen, die am Dimmer anliegen, erfasst werden, sondern mit einer mittleren erwarteten Leistung oder dergleichen gerechnet werden kann, sei erwähnt. Die Bestimmung einer Leistungskurve - Leistung gegen Dimm-Grad - ist besonders bei LEDs vorteilhaft, wo sich über einen kleinen Spannungsbereich große Helligkeitsänderungen können.

Zudem ist besonders, aber nicht ausschließlich, bei LEDs die Verwendung oder Bestimmung nicht nur von Kennlinien Leistung gegen Dimmgrad sondern z.B. auch und/oder alternativ Leistung gegen Helligkeit vorteilhaft, also dort, wo eine große Helligkeitsänderung über die Variation eines sehr kleinen Spannungsbereiches erwartet wird. Dass eine Ausgangsleistung durch Varianten des Phasenanschnittpunktes bei Eingangsspannungsschwankungen stabilisiert werden kann, sei als bevorzugt erwähnt.

Es sei angemerkt, dass, obwohl die Verwendung mit LEDs besonders vorteilhaft ist, diese Verwendung keinesfalls zwingend ist. Per se ist die Erfindung mit einer Vielzahl von elektrischen Verbrauchern und insbesondere vielen unterschiedlichen Leuchtmitteln einsetzbar; bei LEDs bieten sich aber besondere Vorteile, insbesondere dort, wo eine Kalibrierung erfolgen soll.

Es sei auch erwähnt, dass ggf. eine Kalibrierung der Helligkeit möglich ist. Wenn eine Kennlinie "Leistung gegen Dimmgrad" oder dergleichen gespeichert wird, können zusätzlich zu einem bestimmten Dimmgrad Helligkeitswerte mit einem geeigneten Sensor erfasst werden. Der Sensor kann am Schalter, im Raum oder aber durch die Kamera eines als zur Bediengung verwendeten Mobilteils eingesetzten Smartphones realisiert werden. Dort, wo ein festinstallierter Helligkeitssensor vorhanden ist, kann die mit diesem jeweils erfasste Helligkeit herangezogen werden. Es versteht sich, dass typisch und bevorzugt eine Grundhelligkeit im Raum bei der Kalibrierung berücksichtigt wird, um Fehikalibrierungen durch unterschiedliche Tageshelligkeiten und dergleichen zu berücksichtigen. Bei Aufnahme einer Helligkeitskurve mit einer Smartphonekamera kann die jeweilige Helligkeit von einer App an den Dimmer übertragen werden respektive zunächst der jeweilige Dimmgrad an das Smartphone.

Es ist darauf zu achten, dass die Kennlinien nicht zu schnell aufgenommen wird, um eine Messung z.B. durch Synchronisation zwischen Smartphone und Dimmer zu erleichtern. Es kann berücksichtigt werden, dass die Kamera unterschiedlich zu den Leuchtmitteln ausgerichtet ist und/oder unterschiedlich weit von den Leuchtmitteln entfernt ist, so dass einerseits eine Grundhelligkeit abzuziehen ist und andererseits die maximale Helligkeit, die von einer Smartphonekamera bei voller Leistung gesehen wird, nicht immer gleich sein wird. Es sind aber für Zwecke der Aufnahme einer Kennlinie "Dimmgrad gegen Helligkeit" ohne Weiteres Relativwerte ausreichend.

Bei Aufnahme einer Helligkeitskurve mit einer Smartphonekamera kann die jeweilige Helligkeit von einer App an den Dimmer übertragen werden und/oder zunächst der (jeweilige) Dimmgrad an das Smartphone. Es wäre alternativ und/oder zusätzlich eine Bestimmung von Kalibrationsparametern wie Kurvenverläufen usw. und Übertragung dieser Parameter möglich.

Es versteht sich, dass dort, wo unter Verwendung eines Smartphones oder dergleichen Mobileinheit eine Kalibrierung der Helligkeit erfolgen soll, zu irgendeinem Zeitpunkt eine Kommunikation direkt oder mittelbar zwischen Dimmer und Smartphone erfolgen muss. Besonders bevorzugt ist es, wenn der Dimmer eine Schnittstelle aufweist, über welche er mit dem Smartphone kommunizieren kann, beispielsweise eine direkte Bluetooth-Schnittstelle oder eine Anbindung zu einem WLAN-Gateway, an dem wiederum das Smartphone eingeloggt ist; der Aufbau anderer Kommunikationswege sei als möglich offenbart. Es ist nun einerseits möglich, dass ein klarer Zusammenhang zwischen dem Verlauf der Helligkeit wie sie am Smartphone erfasst wird und einer Dimmstufe, wie sie am Dimmer eingestellt wird, bekannt ist, hergeleitet werden kann oder dergleichen. Dies kann auf unterschiedliche Weise geschehen. In einer bevorzugten Variante werden das Smartphone und die Helligkeitssteuerung aufeinander synchronisiert. Dies kann durch Ausgabe von Taktbefehlen, Information über den Beginn einer Helligkeitsveränderung und die Geschwindigkeit der Helligkeitsänderung usw. oder auch beispielsweise durch automatische Synchronisierung auf eine Helligkeit am Smartphone geschehen.

Wenn Signale ausgetauscht werden, die den Beginn einer Helligkeitsvariation anzeigen, so kann dies unmittelbar mit dem Beginn der Helligkeitsänderung geschehen, d.h. indem zeitgleich die Helligkeit verändert wird und beispielsweise ein Bluetooth-Signal vom Dimmer an die Kamera abgesetzt wird. Alternativ und/oder zusätzlich ist es möglich, eine Aufsynchronisation automatisch zu bewirken, was besonders leicht fällt, wenn mehrfach die Dimmkurven durchgefahren werden. Bevorzugt ist es dann, wenn Helligkeitssprünge auftreten, beispielsweise durch sägezahnartige wiederholte Veränderung des Dimmwertes. In einem solchen Fall kann die Helligkeitsänderung, die am Handy erfasst wird, ausreichen, um eine Aufsynchronisation zu bewirken.

Es ist bevorzugt, wenn mehrfach Helligkeitskurven hintereinander aufgenommen werden, um Messfehler heraus zu mitteln. Es wird typisch eine Grundhelligkeit bestimmt und subtrahiert. Es wird einzusehen sein, dass eine besonders präzise Kalibration, d.h. die Aufnahme einer besonders exakten Kennlinie, dann möglich ist, wenn die Grundhelligkeit gering ist, weil sich dann die bei niedrigen Dimmstufen beobachtete Helligkeit stärker vom Untergrund abhebt. Dass eine Aufsynchronisation des Smartphones auf den Dimmer auch im Ansprechen auf eine Modulation der Leuchthelligkeit möglich ist, sei erwähnt.

Nach Aufnahme einer Mess- bzw. Kalibrationskurve, d.h. einer Vielzahl von am Smartphone bestimmten Helligkeitswerten für eine Vielzahl von Dimmstufen, kann mit den erhaltenen Daten auf unterschiedliche Weise umgegangen werden. Es ist möglich, die entsprechenden Helligkeitswerte selbst einfach vom Smartphone an den Dimmer zu übertragen. Da dort die Dimmstufen bekannt sind, kann dort auch die Kalibrationsstufe hergeleitet werden. Alternativ ist es möglich, am Smartphone den Kurvenverlauf selbst zu bestimmen und dann nur die Kurve beschreibende Parameter an den Dimmer zu übertragen. Alternativ und/oder zusätzlich können über mehrere Kurven gemittelte Messwerte, die Einzelmesswerte oder Kurven beschreibende Parameter übertragen werden. Es sei erwähnt, dass anstelle der übertragenen Kurve auch lediglich die verschiedenen Signalstufen am Smartphone bestimmt werden müssen, während die eigentliche Kalibrationskurve dazu in der Steuerung des Dimmers ausgerechnet wird. Dies ist jedoch einsichtigerweise nicht zwingend.

Es sei erwähnt, dass ggf. eine Kalibrationskurve in mehreren Durchgängen insoweit aufgenommen werden kann, als zunächst in einem ersten Durchlauf überprüft wird, in welchem (Dimmstufen-)Intervall besonders starke Änderungen einer erfassten Helligkeit zu beobachten sind und danach innerhalb dieses Intervalls an den Stufenwerten präziser gemessen wird. Angesichts der typischen Wechselspannungsfrequenzen wird abzuschätzen sein, dass auch eine dementsprechend genauere Messung nicht mehr als eine Minute in Anspruch nehmen muss, typisch weniger als 30 sec.

Es sei im Übrigen erwähnt, dass es in einer bevorzugten Variante möglich ist, eine Warnung auszugeben, wenn die Kalibration, etwa aufgrund einer zu hohen Grundhelligkeit, als zu ungenau angesehen wird.

In einer bevorzugten Variante wird eine Kalibration mit etwa 5 bis 10 Kalibrationswerten innerhalb eines Bereiches, indem sich die Heiligkeit um etwa 20 bis 30 % ändert, ausreichen.

Die Erfassung einer entsprechenden kalibrierenden Kurve zwischen Leistungsaufnahme und abgegebener Leistung kann insbesondere beim Einschalten quasi unbemerkt erfolgen, insbesondere dort, wo initial eine hohe Leistung abgerufen wird. Die so aufgenommenen oder auf andere Art und Weise erfassten Leistungskurven können auch verwendet werden, um Hinweise darauf zu erhalten, dass sich bei Verbrauchern eine Änderung ergeben hat. Dies kann beispielsweise der Fall sein, weil ein Benützer eine Glühbirne gegen einen Verbraucher geringerer Leistungsaufnahme ausgetauscht hat oder weil ein Leuchtmittel defekt geworden ist. Wenn bei gleicher Dimmgradeinstellung, beispielsweise einem Phasenabschnitt nach 87% der Halbwellendauer, eine zu stark veränderte Leistung festgestellt wird, kann eine Meldung erzeugt werden, damit entweder eine vom Benützer tatsächlich vorgenommene Änderung bestätigt wird oder eine Wartung etwa durch Austausch von Leuchtmitteln zwecks Ersatz defekt gewordener Leuchtmittel vorgenommen wird.

Vorteilhaft kann die Aufnahme von Kalibrationskurven wie "Helligkeit gegen Dimmgrad" auch dort sein, wo nur wenig Dimmstufen vorgesehen werden sollen, an denen aber eine sinnvolle Helligkeitsvariation erhalten werden soll. Dies ist besonders dort wichtig, wo durch Tastendrücke zwischen verschiedenen Dimmstufen mit hinreichend großer Geschwindigkeit zykliert werden soll.

In einem typischen Dimmer, in welchem etwa durch die Dauer des Tastendruckes die erreichte Dimmstufe bestimmt werden soll, wird es bevorzugt sein, zwischen einer sehr hellen und einer sehr dunklen, ggf. der hellsten bzw. dunkelsten Dimmstufe binnen nicht mehr als 5 sec. mittels Tastendruck zu gelangen. Eine noch längere, zum Durchlaufen aller Dimmstufen erforderliche Betätigungszeit, wird als unkomfortabel lang anzusehen sein. Für viele Benützer wird eine 5 sekündige Betätigungszeit schon unakzeptabel lang sein. In einer bevorzugten Variante wird daher die Betätigungszeit kürzer sein. Dabei ist zu beachten, dass bei Zeiten von weniger als 1 sec. für das Durchlaufen der Helligkeitsstufen zwischen der hellsten und der dunkelsten Stufe die Genauigkeit, mit der eine gewünschte Dimmstufe bzw. Helligkeit erreicht wird, leidet. Dies gilt besonders dort, wo keine Kalibrationskurven aufgenommen wurden. Die Kalibrationskurvenaufnahme erlaubt es, Kalibrationsstufen linear über eine bestimmte Dauer zu durchlaufen, wobei die Linearität so ist, dass für das Auge eine mit der Zeit linear zunehmende oder abnehmende Helligkeit eingestellt wird. Wo keine Kalibrationskurve aufgenommen wurde, kann es passieren, dass die Helligkeit sich, wie bei LEDs, über nur vergleichsweise wenig Dimmstufen hinweg stark ändert, was bei zeitlich linearem Durchlaufen der Dimmstufen dazu führt, dass erst eine vergleichsweise lange Zeit ohne Änderung erhalten wird, dann sehr schnell eine große Änderung auftritt und dann wieder längere Zeit die Helligkeit sich kaum noch ändert. Dies wird als unkomfortabel angesehen. Insofern kann es dort, wo keine Kalibrationskurven aufgenommen werden, sinnvoll sein, für bestimmte Anwendungen wie LEDs typische Kurven zu hinterlegen oder für eine Anwendung, die besonders kritisch ist, eine typische Kurve, die die erzielte Helligkeit gegen Tastendruck daher durch Vorgabe nichtlinear ansteigender Phasenschnittzeiten linearisiert, zu hinterlegen, sodass ein im Mittel sinnvolles Steuerverhalten erzielt wird. Ggf. kann es ohne Aufnahme von Kalibrationskurven auch sinnvoll sein, in solchen Systemen, bei welchen die Dauer eines Tastendrucks die Anzahl durchlaufender Dimmstufen bestimmt, eine längere Zeit für das vollständige Durchlaufen der Dimmstufen zwischen hellster und dunkelster Einstellung vorzusehen.

Es wird weiter unten noch beschrieben werden, dass ggf. zwischen verschiedenen Stufen durch wiederholten kurzen Tastendruck zykliert werden soll. Hier ist es sinnvoll, nicht zu viele unterschiedliche Helligkeitsstufen anzubieten, sondern beispielsweise 3 bis 5 unterschiedliche Helligkeitsstufen, sodass eine geringe Helligkeit, eine mittlere Helligkeit und eine große Helligkeit angeboten werden kann, bzw. hierzu noch Zwischenstufen. Eine zu geringe Anzahl an Helligkeitsstufen wird als unbefriedigend ebenso anzusehen sein, wie eine zu große Anzahl von Dimmstufen, die ein zu häufiges Tasten erfordern. Es kann allerdings auch möglich sein, nur zwischen hell und dunkel, also "an" und "aus" zu wechseln bzw. ggf. sogar zwischen unterschiedlich langen Tastendrücken dort zu unterscheiden, wo diese auch bei kurzfristig unterbrochener Spannungsversorgung eine erfassbare Dauer besitzen.

Es sei erwähnt, dass bevorzugt nicht nur der Ausgangsstrom am Shunt, sondern auch die Eingangsspannung respektive, was in der Regel gleich ist, die Ausgangsspannung am Dimmer unabhängig vom Strom gemessen wird. Dies erlaubt durch insbesondere nummerische Berechnung nach Multiplikation von Strom- und Spannungsmesswerten und Addition dieser Werte über der Zeit die Bestimmung von (mittleren) Leistungskurven und damit eine genaue Bestimmung der aktuellen tatsächlichen Leistungen.

Es sei darauf hingewiesen, dass die Dimmeranordnung vorteilhafter Weise einen Shuntwiderstand aufweist, der so gewählt ist, dass sich bei der maximal zulässigen Leistung eine gute Ausnutzung der ADC-Genauigkeit ergibt.

In einer bevorzugten Variante wird der vorbekannte Dimmer einen Temperatursensor aufweisen, und einen einzelnen Microcontroller für alle Kanäle. Zwischen dem Microcontroller und den Stromsteuerungen sind separate Optokoppler (bzw. andere elektrisch isolierte Komponenten) vorgesehen; auch zu den Tasten - bzw. digitalen Steuereingängen können Optokoppler vorgesehen werden. Es sei allerdings darauf hingewiesen, dass ggf. anstelle eines einzelnes Microcontrollers zwei separate Microcontroller je Kanal vorgesehen werden können, wobei es dann bevorzugt ist, die beiden Microcontroller (oder bei mehr als zwei Kanälen, alle Microcontroller) ggf. zu koppeln.

Die vorbekannte Dimmeranordnung erlaubt, wie aus den unter Bezug genommenen Dokumenten ersichtlich und aus dem vorstehenden ebenfalls bekannt, eine Rückkopplung bzw. Regelung auf erfasste Werte und eine automatische Reaktion hierauf. Es sei erwähnt, dass es, je nach Ausbildung auch auf mehrere Arten, möglich ist, dass der vorbeschriebene und/oder in den vorbekannten Dokument offenbarte Dimmer nach einem Stromausfall ggf. seinen letzten Dimmgrad bzw. seine letzte Schaltstellung wieder einnimmt. Dies ist insbesondere bei einem sogenannten Brownout der Fall, also einem sehr kurzfristigen Ausfall eines Stromes. Hier kann sofort wieder in die richtige Helligkeitsstufe eingeschaltet werden. Dazu wird ein Speicher vorgesehen, indem der aktuelle Schaltzustand, d.h. der aktuelle Dimmgrad, vermerkt ist. Dieser Speicher wird stromausfallsicher implementiert.

Als Brownout wird eine kurzzeitige Spannungsabsenkung beispielsweise in Folge von Überlastung aufgrund unvorhergesehener Ereignisse bezeichnet, weil es u.a. zu einer starken Abschwächung von Glühlampenbeleuchtung kommt. Er tritt insbesondere in kleineren oder unterdimensionierten Stromnetzen mit zu gering verfügbarer Regelleistung auf. In der Regel kommt es dabei zu keinen ernstzunehmenden Schäden; gleichwohl reagieren elektronische Geräte durchaus unterschiedlich auf einen Brownout: Bei manchen kommt es zu überhaupt keinen Beeinträchtigungen, wohingegen andere Gerätschaften empfindlicher auf einen kurzzeitigen Spannungsabfall antworten. Beispielsweise kann ein fehlender Batteriespeicher zu einem Daten- oder Funktionsverlust führen. Vorgeschlagen wurden bereits Brownout-Detectoren, um einem solchen Szenario vorzubeugen. Brownouts sind beispielsweise im japanischen Stromversorgungsnetz relativ häufig, auch aufgrund der gemischten Netzfrequenz von 50 Hz und 60 Hz, während im europäischen Verbundsystem überregionale Brownouts nur sehr selten vorkommen. Brownouts können auch unmittelbar vor einem Totalausfall als Vorbote auftreten.

Im vorliegenden Fall könnte ein Brownout dazu führen, dass der Dimmer seine vorherige Dimmerstufe verliert bzw. verändert, beispielsweise indem er bei einer sehr großen Helligkeitsstufe einschaltet, während er zuvor auf einer stark gedimmten Stufe betrieben wurde. In einem solchen Fall kann ein Brownout erfordern, dass der Benützer die Helligkeit wieder herunter regeln muss, was als unkomfortabel angesehen wird.

Als vorteilhaft offenbart wird daher unter anderem auch ein Dimmer, der dazu ausgebildet ist, Licht auf einer erforderlichen Helligkeit einzuschalten, und der einen Speicher für einen aktuellen Dimmergrad aufweist, wobei der Speicher als strom-ausfallsicherer Speicher gebildet ist und der Dimmer zur Gewährleistung des Einschaltens auf einer sinnvollen Schalterstellung nach Stromausfällen dazu gebildet ist, die Stromausfalldauer zu bestimmen und, wenn die Stromausfalldauer nur kurz war, den vorherigen Schaltzustand zu gewährleisten. Dabei braucht der Dimmer nicht einfach nach einem Ausfall des Stroms bzw. nach einem Spannungsausfall wieder bei der letzten Dimmstufe eingeschaltet werden, sondern es kann auch abgefragt werden, wie lange ein Stromausfall gedauert hat. War etwa der Strom mehrere Stunden ausgefallen, wird es oftmals nicht erforderlich sein, ein zuvor eingeschaltetes Licht sofort wieder auf die ggf zuvor gewählte volle Helligkeit einzuschalten.

Was den Begriff des nur kurzen Stromausfalls angeht, so sei auf folgendes hingewiesen: Wenn ein Dimmer nicht mit Spannung versorgt wird, so kann dies unterschiedliche Gründe haben. Zum einen ist möglich, dass der Dimmer längere Zeit bewusst vom Netz getrennt wurde, etwa weil es sich um eine Anordnung in einer längere Zeit nicht benützen Ferienwohnung handelt oder weil über mehrere Stunden aufgrund einer großen, schwerwiegenden Netzstörung der Strom insgesamt ausfällt. In beiden Fällen ist es nicht sinnvoll, auf das Wiedereinsetzen der Stromversorgung etwa Licht sofort vollständig hell zu schalten. Dies könnte nämlich bei einer Wiederinbetriebnahme einer Ferienwohnung z.B. dazu führen, dass der Benützer zunächst alle nach Einschalten der Sicherung wieder mit Spannung versorgten Dimmer ausschalten muss bzw. Licht in einem Haus nach einem Stromausfall brennt, bis der Besitzer dazu gekommen ist, alle Dimmer auszuschalten. Dies wird als nicht sinnvoll angesehen. Zu unterscheiden ist daher die längerfristige Trennung des Dimmers vom Netz einerseits und die kurzfristige Unterbrechung einer Leistungsversorgung andererseits. Die kurzfristige Unterbrechung kann zwei Gründe haben. Zum einen kann dort, wo etwa in Altbauten nachgerüstet wird, eine Austastung erfolgen, um zwischen verschiedenen Schaltstufen zu zyklieren. Zum anderen könnte ein sehr kurzfristiger Stromausfall, ein sogenanntes Brownout von einigen Sekunden bzw. ein bis wenige Minuten andauender Blackout auftreten. Überschreitet die Stromausfalldauer einen bestimmten Zeitraum, so wird der Benützer klassisch kein Interesse mehr daran haben, dass der Dimmer wieder bei der vorherigen Schalterstellung einschaltet. Diese maximale Zeitdauer wird typisch weniger als 10, oftmals weniger als 5 Minuten betragen. Nur in besonderen Ausnahmefällen wäre auch eine Dauer von etwa einer halben Stunde noch denkbar, bis zu der eine Wiedereinschaltung auf der alten Schalterstellung gewünscht ist. Es ist daher bevorzugt, wenn ein Dimmer zwischen wenigstens zwei, möglicherweise etwa bei der Altbau-Sanierungsvariante zwischen drei Ausfalldauern diskriminieren kann, d.h. er wird feststellen, ob die Stromausfalldauer jeweils eine bestimmte Zeit überschritten hat, bevor er wieder mit Strom versorgt wird, was hier als "wieder einschalten" verstanden wird. Bei Wiedereinschalten kann dazu vorgesehen sein, dass zunächst bestimmt wird, wie lange die Spannung weggeblieben war und, abhängig vom Ergebnis der Diskriminierung der Stromausfalldauer gegen einen oder zwei vorgegebene Werte entweder ein vorheriger Wert aus dem Speicher ausgelesen wird und der Dimmer bei dieser Dimmstufe wieder in Betrieb genommen wird, oder gegebenenfalls um eine Dimmstufe verändert wieder in Betrieb genommen wird, oder andernfalls ausbleibt.

Zur Messung der Stromausfalldauer sind mehrere Möglichkeiten gegeben.

Es wurde als vorteilhaft erkannt, wenn ein Dimmer dazu ausgebildet ist, Temperaturen sukzessive zu erfassen und ein Wiederanschaltverhalten im Ansprechen auf den Temperaturverlauf der sukzessiven Messungen festzulegen.

In einem solchen Fall, bei dem die Messung über einen Temperaturverlauf erfolgt, kann dort, wo zwischen zwei vermeintlich dicht aufeinander folgenden, jedenfalls im Dimmer sukzessive erfassten Temperaturwerten ein großer Temperaturabfall aufgetreten ist, darauf geschlossen werden, dass der Dimmer sich abgekühlt hat, was angesichts gegebener Wärmekapazitäten typisch einige Zeit in Anspruch nehmen wird, insbesondere bei Einbauten in Unterputzdosen oder dergleichen. Daher kann jedenfalls ein Abfallen der Temperatur als Hinweis auf eine zu lange Stromunterbrechung aufgefasst werden und dementsprechend ein Wiedereinschalten bei der vorherigen Dimmstufe als nicht sinnvoll erachtet werden. Im Umkehrschluss kann bei nur geringen Abweichungen der Temperatur nach unten gefolgert werden, dass der Spannungsausfall allenfalls kurz war und demnach der Dimmer wieder bei der vorherigen Dimmstufe eingeschaltet werden, nachdem dieser aus dem Speicher ausgelesen wurde. Ist hingegen nach einem Wiederanschalten eine deutlich höhere Temperatur bzw. ein klarer Temperaturanstieg unmittelbar auf das Wiederanschalten zu beobachten, spricht auch dies für einen längeren Stromausfall, da ohne Strom keine Abwärme im Dimmer entsteht, ergo also ein Temperatursprung nur auf einen Umgebungstemperaturanstieg zurückzuführen ist und, was, sofern der Temperatursprung hinreichend groß ist, entsprechend lange Zeiten und ergo lange Stromausfallzeiten voraussetzt. In einer alternativen Variante kann alternativ und/oder zusätzlich der Anstieg der Temperatur nach dem Einschalten erfasst werden. Steigt die Temperatur schnell an, spricht dies ebenfalls für einen vorher lange andauernden Stromausfall und es kann dann gegebenenfalls der Dimmer vollständig ausgeschaltet werden, nachdem dies erkannt wurde.

Es wurde somit als vorteilhaft erkannt, wenn dabei zusätzlich und/oder alternativ zu dem vorstehenden vorgesehen ist, dass ein Dimmer so ausgebildet ist, dass eine längere Ausphase im Ansprechen auf eine abrupte Temperaturabnahme zwischen zwei nacheinander beobachteten Temperaturmessungen erfasst wird.

Es wurde weiter als vorteilhaft erkannt, wenn dabei zusätzlich und/oder alternativ zu dem vorstehenden vorgesehen ist, dass ein Dimmer dazu ausgebildet ist, auf einen schnellen Temperaturanstieg nach dem Einschalten auf eine längere auszeichnende Auszeit zu schließen.

Es wurde als vorteilhaft erkannt, wenn dabei zusätzlich und/oder alternativ zu dem vorstehenden vorgesehen ist, dass ein Dimmer zum Einbau in eine Unterputzdose ausgebildet ist.

Insoweit vorliegend von einer Unterputzdose gesprochen wird, wird auf übliche, beispielsweise DIN-gemäße Unterputzdosen für Elektroinstallationen Bezug genommen.

Es sei im Übrigen erwähnt, dass gegebenenfalls die Dauer eines Stromausfalls auch unmittelbar gemessen werden kann, wenn etwa eine puffernde Stromversorgung im Dimmer vorhanden ist, mit der Zeit gemessen werden kann und/oder zumindest Takte oder dergleichen gezählt werden, ein Spannungsabfall an einem RC-Glied bestimmt wird und so weiter. Wenn etwa vorgesehen wird, dass bei Einschalten eine Spannung an einem RC-Glied bzw. dem Kondensator eines RC-Gliedes bestimmt wird, bevor dieses wieder an eine Versorgungsspannung aus einem Niedervoltnetzteil angeschlossen wird, kann ein für die Dauer eines Stromausfalls indikatives Signal ebenso erhalten werden.

Insoweit also vorliegend davon gesprochen wird, dass eine Stromausfalldauer bestimmt wird, reicht es also offenbarungsgemäß, einen für die Stromausfalldauer indikativen Wert zu bestimmen bzw. ein für die Stromausfalldauer indikatives Signal zu ermitteln und auszuwerten. Wie dargelegt, wird zwischen Stromausfalldauern unterschiedlicher Länge diskriminiert und davon ausgegangen, dass die Stromausfalldauer nur kurz ist, wenn bestimmte Schwellwerte nicht überschritten werden, dass d.h. Schwellwertindikativsignale bestimmte Werte nicht überschreiten oder dergleichen.

Es wird einzusehen sein, dass der Dimmer seine aktuelle Dimmstufe bevorzugt bei jeder Veränderung in den stromausfallsicheren Speicher schreibt und möglich ist, zum Wiedereinschalten im Fall, dass die Stromausfalldauer als nur kurz bestimmt wurde, den entsprechenden Speicherwert auszulesen und den Dimmer bei der entsprechenden Dimmstufe weiter zu betreiben. Dies kann durch Abarbeitung bestimmter, insbesondere bei Inbetriebnahme und/oder Initialisierung des Dimmers abzuarbeitender Programmschritte geschehen.

Es sei im Übrigen darauf hingewiesen, dass die Aufnahme von Temperaturkurven d.h. die Bestimmung des zeitlich veränderlichen Temperaturverlaufs auch deshalb sinnvoll ist, weil damit ggf. Temperaturen besser erfasst werden können. Prinzipiell ist nämlich z.B. die Erfassung einer Raumtemperatur einerseits sinnvoll für Steuerungszwecke wie für die Steuerung von Rollläden und/oder der Heizung. Andererseits ist es im Regelfall erwünscht, Temperaturen nicht separat erfassen zu müssen mit eigens angebrachten externen Sensoren, die oftmals als optisch unschön empfunden werden, insbesondere wenn sie zwingend an zur Temperaturmessung besonders geeigneten Stellen angebracht werden müssen. Es ist daher schon vorgeschlagen worden, Temperatursensoren innerhalb einer Regelung anzuordnen; es gibt dann aber Probleme durch die in der Anordnung anfallende und erzeugte elektrische Leistung.

Aus diesem Grund wurde beispielsweise mit der US 8,280,673 B2 ein System zur Bestimmung einer Umgebungstemperatur vorgeschlagen, bei dem eine räumliche Verteilung innerhalb eines Gehäuses mit mehreren Temperatursensoren bestimmt wird und daraus auf eine Umgebungstemperatur geschlossen werden soll.

In dem vorerwähnten, durch Bezugnahme eingegliederten Dokument war auch ausgeführt, dass die Leistungsaufnahme einer oder aller Komponenten ermittelt werden kann; dabei wurde im referenzierten Dokument etwa auf einen CPU-Takt, eine CPU-Auslastung oder eine Leistungsaufnahme aufgrund einer Helligkeit einer Displaybeleuchtung, eine mit einem Audioverstärker eingestellte Leistung und/oder die Auslastung von Kommunikationsstellen Bezug genommen.

Erwähnt sei nun, dass bei einem Dimmer vorteilhaft der durch einen Shunt fließende Strom gemessen werden kann und daraus eine Abwärmeleistung durch Summenbildung ermittelt werden kann. Damit ergibt sich eine besonders genaue Bestimmung der in einem Dimmer gegebenen Verlustleistung, insbesondere, wenn die Leistungsaufnahme weiterer Verbraucher in dem Dimmer wie bestimmt durch Microcontrollertakt, anhand der Einstellung von Audioverstärkern usw. zusätzlich berücksichtigt werden.

Alternativ und/oder zusätzlich kann die Abwärmeleistung unter Berücksichtigung des aktuellen Spannungswertes erfasst werden. Die Berücksichtigung derartiger Größen bei der Temperaturbestimmung bzw. der Bestimmung einer Temperaturänderung ist auch vorteilhaft, um ungeachtet einer ungünstigen Einbausituation aus internen Temperaturen eine Raumtemperatur zu erschließen. Es sei überdies darauf hingewiesen, dass ggf. mehrere der Dimmer untereinander Temperaturen austauschen können, um eine bestimmte Steuerung vorzunehmen. So kann dort, wo eine Heizung zu steuern ist, nicht nur auf die Innentemperatur Bezug genommen werden, sondern es können ggf. auch Temperaturen von einem Außentemperatursensor erhalten werden und/oder von einem Dimmer, der am oder beim Außenbereich angeordnet ist, etwa bei einem Gartentor, einer Garage, einer nicht beheizten Vorratskammer und dergleichen. Dies erlaubt es, einbaubedingte und/oder verlustleistungsbedingte Einflüsse auf die tatsächliche Temperatur besser zu berücksichtigen. Dies ist insbesondere dort vorteilhaft, wo vergleichsweise träge Systeme zu steuern sind, beispielsweise Wandheizungen und/oder Fußbodenheizungen; je nach Trägheit des zu steuernden bzw. zu regelnden Systems können demnach unterschiedliche Sensoren an unterschiedlichen Stellen gemeinsam ausgewertet werden. So kann es ausreichend sein, lediglich einen Sensor innerhalb eines Raumes oder lediglich alle Temperatursensoren innerhalb eines Raumes zu berücksichtigen, wenn kurzfristig zur Vermeidung von sonneneinstrahlungsbedingten Temperaturerhöhungen Rollläden gesteuert werden sollen, während ftir Heizungen, z.B. Heizregler von Fußbodenheizungen, Wandheizungen und/oder Zentralheizungsbrenner etc. mehr und großflächiger Sensoren abgefragt werden können. Die Berücksichtigung von Temperaturen in anderen Sensoren kann auf unterschiedliche Art und Weise erfolgen. Einerseits können dort, wo viele Temperatursensoren in Geräten verbaut sind, die über kurze Distanz, etwa über Bluetooth dauernd miteinander kommunizieren können, die Temperaturwerte regelmäßig ausgetauscht werden, entweder in festen Intervallen, in variierenden, aber nicht zu großen, d.h. durch eine Obergrenze festgelegten Intervallen, und/oder wenn wenigstens ein Sensor eine erhebliche Temperaturänderung erfasst, die nicht ohne Weiteres oder nicht ausschließlich oder nur eventuell auf eine Änderung der im zugeordneten Dimmer oder dergleichen auftretenden Verlustleistung beobachtet wird.

Dass die Abwärmeleistung besonders genau bestimmt werden kann, wenn die Eingangsspannung, d.h. die Netzspannung am Dimmer erfasst wird, über mehrere Periodenphasenlagen, Spannungen, Strömen usw. gemittelt werden bzw. Leistungsmittelwerte gebildet werden, sei als vorteilhafte Vorgehensweise erwähnt.

Dort, wo Außentemperatursensoren vorhanden sind, ist es nicht immer möglich, Temperaturwerte unmittelbar sofort drahtlos zu übertragen. In einem solchen Fall kann es besonders vorteilhaft sein, die entsprechenden Temperaturdaten, bevorzugt versehen mit einem Zeitstempel, einem Benützer durch Übertragung auf dessen bluetoothfähiges oder auf andere Weise drahtlos an den Sensor bzw. dessen ansteuernde Schaltung temporär angekoppeltes Gerät mitzugeben und dann die so "rucksackartig" übertragenen Daten entweder jedem einer Vielzahl vernetzter Sensoren wie in einem Haus, also z.B. bei Annäherung des entsprechenden, die Daten rucksackartig mitnehmenden Mobilgerätes an den jeweiligen Dimmer oder dergleichen, zu übertragen oder aber eine einmalige Übertragung der rucksackartig im Mobilgerät aufgenommenen Daten an ein festes oder zufällig erstes Gerät in der Haustechnikanordnung zu übertragen und es von dort insbesondere netz- und meshartig weiter zu übertragen.

Unter anderem für die "datenrucksackartige" Übertragung wird daher ein (nicht beanspruchtes) Verfahren zum Datenabgleich zwischen einer zentralen Einheit und einer Station offenbart, die zur zentralen Einheit keine dauerhafte direkte Verbindung aufweist, wobei unter Verwendung mobiler Einheiten Daten zunächst drahtlos zwischen der zentralen Einheit und mehreren mobilen Einheiten übertragen werden und Daten von zumindest einer mobilen Einheit bei Annäherung derselben an die Station an diese übertragen werden. Ein Datenabgleich kann auch erforderlich und/oder vorteilhaft sein, um beispielsweise Aktualisierungen von Programmversionen vorzunehmen, und zwar sowohl für Anwendungen wie auch für Betriebssysteme. Weiter kann es erforderlich sein, Betriebsparameter, beispielsweise ftir die Konfiguration zu übertragen, etwa von einer zentralen Einheit zu einer entfernt gelegenen Station, zu der keine dauerhafte direkte Verbindung besteht und die neu konfiguriert werden soll. Es kann sein, dass bestimmte Daten wie Zugangsdaten, Zugangscodes usw. geändert werden sollen. Als mobile Einheiten werden alle Einheiten geeignet sein, die mit wenigstens einer, mit der zentralen Einheit in Verbindung stehenden festen Einheit oder der zentralen Einheit selbst temporär kommunizieren können und die mit der entfernten Station zumindest bei Annäherung an dieselbe temporär kommunizieren können. Es sei erwähnt, dass die Kommunikation zwischen zentraler Einheit und mobiler Einheit einerseits und entfernter Station und mobiler Einheit andererseits über unterschiedliche Schnittstellen, gemäß unterschiedlichen Protokollen usw. erfolgen kann. So kann innerhalb eines Gebäudes eine Kommunikation zwischen zentraler Einheit und einer mobilen Einheit wie einem Smartphone über WLAN geschehen, während das gleiche Smartphone mit der außerhalb des Gebäudes angeordneten entfernten Station über eine Nahfeld-Schnittstelle, beispielsweise Bluetooth kommuniziert.

Es versteht sich, dass zur Implementierung der "rucksackartigen" Übertragung bestimmte Protokolle implementiert sein können. So kann vorgesehen sein, dass bei jedem Aufbau einer Kommunikation zwischen der entfernten Station und einer mobilen Einheit abgefragt wird, ob diese mobile Einheit Daten von der zentralen Einheit abgespeichert hat. Falls ja, kann versucht werden, diese Daten an die entfernte Station von der mobilen Einheit zu übertragen. Die rucksackartig zu übertragenden Daten können eine feste Länge besitzen oder eine variable Länge haben; sie können in der Größe beschränkt sein, beispielsweise auf einige wenige Kilobyte bis hin zu einigen Megabyte. Es wird einzuschätzen sein, dass die übertragbare Datenmenge von der für die Kommunikation zwischen zentraler Einheit und mobiler Einheit oder zwischen entfernt gelegener Station und mobiler Einheit verwendete Datenschnittstelle bzw. Übertragungsrate einerseits und andererseits der typischen Aufenthaltsdauer der mobilen Einheit in der Reichweite der zentralen Einheit bzw. der entfernt gelegenen Station abhängen wird. Läuft etwa ein Benützer typisch an der entfernt gelegenen Station mit einer Geschwindigkeit vorbei, die ihn 5-10 Sekunden in der Reichweite der entfernt gelegenen Station lässt, so können während dieser Zeit oder einem Bruchteil dieser Zeit Daten übertragen werden, wenn die Datenmenge nicht durch den Aufenthalt bei der zentralen Einheit beschränkt ist.

Es kann vorgesehen sein, die Daten von der zentralen Einheit an das mobile Gerät und an die mobile Einheit sowie von der mobilen Einheit an die entfernt gelegenen Station verschlüsselt zu übertragen, wobei die Zentraleinheit und die entfernt gelegene Station den Schlüssel bevorzugt vorab kennen; dies erschwert zumindest Dritten die Manipulation. Es können ggf. Authentifizierungsdaten in einem Header oder an anderer Stelle mitübertragen werden und es muss im Übrigen nicht bewusst durch den Träger einer mobilen Einheit die Übertragung ausgelöst werden. Als typische mobile Einheiten kommen Smartphones, Smartwatches, Tablets usw. infrage, die von ihren Benützern oftmals eingeschaltet gelassen werden, was die automatische, eingriffsfreie Datenkommunikation mit anderen Geräten ermöglicht. Es kann zudem möglich sein, längere Nachrichten in Fragmenten zu übertragen. Es kann vorteilhaft sein, wenn die entfernt gelegene Station den Empfang von bestimmten Datenpaketen allen mobilen Einheiten, die in Reichweite gelangen, bestätigt, in der Erwartung, dass zumindest einige davon wieder in Reichweite der zentralen Einheit gelangen werden und dort der zentralen Einheit wiederum bestätigen können, dass zumindest bestimmte Teile der Daten bereits übertragen wurden.

Wo eine Vielzahl von Daten, die nicht auf einmal mit einer einzigen mobilen Einheit übertragen werden können, an die Station übertragen werden sollen, kann es vorteilhaft sein, anzugeben, ob bestimmte Änderungen sofort implementiert werden sollen oder nicht. So kann es sinnvoll sein, etwa Zugangsdaten, mit denen neuen Benützern Zugang gewährt wird und nicht mehr erwünschten Benützern Zugang verweigert wird, sofort nach erfolgter Übertragung auch dann umzusetzen, wenn noch nicht alle erforderlichen Änderungen erhalten wurden; beispielsweise wäre möglich, dass von 30 Änderungen nur die ersten 10 übertragen wurden. Hier ist eine sofortige Änderung sinnvoll, weil dann die aktuell bestmögliche Aktualität gewährleistet wird. In anderen Fällen, etwa der Aktualisierung von Apps, müssen vollständige neue Programmpakete vorliegen, bevor diese installiert werden können. Es ist daher vorteilhaft, wenn bei der Daten rucksackartigen Übertragung, beispielsweise in einem Header oder an anderer geeigneter Stelle wie zum Abschluss des Datenpaketes, festgehalten ist, ob auf die Daten sofort reagiert wird oder ob das Eintreffen weiterer und gegebenenfalls welcher weiteren Pakete abgewartet werden soll. Bei gestückelten Datenpaketen können mehreren Benutzern nacheinander unterschiedliche Pakete übertragen werden, und zwar ein und dasselbe Paket mehrfach an unterschiedliche Benützer. Es ist auch möglich, bei einer hinreichend breitbandi-gen Verbindung zwischen zentraler Einheit und mobiler Einheit an die mobile Einheit jeweils alle oder viele Datenpakete zu übertragen, die bevorzugt fortlaufend nummeriert sind und dann beim Aufbau der Kommunikation zwischen entfernt gelegener Station und der mobilen Einheit zunächst abzufragen, welche Datenpakete noch nicht übertragen wurden. Zwischen den noch nicht übertragenen Datenpaketen kann eine Auswahl entweder durch Nummerierung, Priorisierung oder dergleichen erfolgen. Wenn die Datenpakete fortlaufend nummeriert sind von der entfernt gelegenen Station, wird bevorzugt das nächste, noch nicht vollständig erhaltene Paket aus der mobilen Einheit angefordert. Bei priorisierten Informationen werden die noch nicht übertragenen Daten höchster Priorität bzw. Datenpakete höchster Priorität übertragen. So kann es sinnvoll sein, bei Zugangskontrollen zunächst die nicht mehr erwünschten Benützer zu sperren, bevor erwünschte Benützer freigeschaltet werden.

Es wird einzuschätzen sein, dass die Abfrage, welche Daten noch nicht übertragen wurden, schnell möglich ist, so dass die Gesamtkommunikation entsprechend wenig beeinträchtigt wird. In einem Fall, wo der entfernt gelegenen Station mehrere Datenpakete übertragen werden, die zu einer großen Nachricht zu verbinden sind, wird diese einen hinreichend großen Speicher und eine Einheit zum Verketten der Datenpakete respektive der von Headern und dergleichen befreiten Datenpakete aufweisen.

Es ist im Übrigen auch möglich, die Daten zusammen mit einem Hinweis auf deren Aktualität zu übertragen. Dazu kann beispielsweise das Datum der Generierung der Daten oder das Datum des Übertragens der Daten von der zentralen Einheit an die mobile Einheit oder eine fortlaufend von der zentralen Einheit für Datenpakete vergebene Nummer mitübertragen werden. Auf diese Weise kann sichergestellt werden, dass nicht durch sehr alte Daten Änderungen an der entfernt gelegenen Station ausgelöst werden. Als Datum werden insoweit Zeitmarken beliebigen, geeigneten Formats verstanden.

Es ist bevorzugt auch, in einem solchen Fall, wenn die entfernt gelegene Station eine aktuelle Zeit kennt. Damit in einem solchen Fall die entfernt gelegenen Station nicht mit einer eigenen DCF-77-Stufe zur Erfassung einer Funkzeit oder dergleichen versehen sein muss und es auch nicht erforderlich ist, eine hochpräzise Zeitmessung in der entfernt gelegenen Station zu implementieren, ist es vorteilhaft, eine gelegentliche oder regelmäßige Synchronisation der Station auf die zentrale Einheit vorzunehmen. Dazu können Zeitdaten zwischen der mobilen Einheit und einer entfernt gelegenen Station übertragen werden. Um hier Zeitdaten bzw. zeitindikative Signale zur Synchronisation problemfrei zu übertragen, können besondere Maßnahmen vorgesehen werden. Dabei ist zu beachten, dass die Zeitdauer zwischen einer Synchronisierung der mobilen Einheit auf die zentrale Einheit bis zur Übertragung der Synchronisationsdaten auf die entfernt gelegene Station keinesfalls konstant ist. Vielmehr kann diese Zeitdauer variieren. Es ist daher vorteilhaft, wenn die mobile Einheit selbst getaktet ist, beispielsweise selbst eine Zeit erfasst und die Daten, die als synchronisierende, zeitindikative Signale an die entfernt gelegene Station übertragen werden, im Ansprechen auf die Taktung bzw. die Zeit der mobilen Einheit angepasst werden. Dabei kann auch dann eine Synchronisation erreicht werden, wenn die aktuelle Zeit der mobilen Einheit von jener Zeit abweicht, die bei der zentralen Einheit vorliegt, etwa weil die mobile Einheit im Gegenseite zur zentralen Einheit eine Umstellung zwischen Sommer/Winterzeit erfahren hat. Es ist lediglich erforderlich, die von der zentralen Einheit erhaltene Systemzeit entsprechend der seit dem Erhalt gemäß der Zeitmessung der mobilen Einheit vergangene Zeit zu aktualisieren und diese aktualisierten Daten an die entfernt gelegene Einheit zu übertragen. Damit wird eine ungeachtet etwaiger Differenzen zwischen der mobilen Einheit und der zentralen Einheit weitgehend unabhängige Zeitübertragung erreicht. Ein Abweichen kommt hier lediglich insoweit zu Stande, als einerseits die mobile Einheit schneller oder langsamer läuft als die Zentraleinheit; diese Differenzen sind aber bei typischen Dauer zwischen Synchronisation zwischen Zentraleinheit und mobiler Einheit einerseits und Übertragen der Synchronisationsdaten von mobiler Einheit auf die entfernt gelegene Station andererseits regelmäßig praktisch für die meisten Anwendungen vernachlässigbar, und andererseits kann ein Synchronisationsfehler auch noch durch die für die Datenübertragung selbst erforderliche Zeit auftreten. Auch diese Zeit ist typisch vernachlässigbar. Es ist im Übrigen möglich, die Zentraleinheit auf eine Drittreferenz zu synchronisieren, beispielsweise auf einen nationalen Funkzeitstandard. Auf diese Weise wird eine für praktische Anwendungen wie Zugangskontrollen, Temperaturverlaufsmessungen usw. völlig ausreichende Präzision und/oder Synchronisation erreicht.

Es wurde demnach erkannt, dass Datenabgleich zwischen einer zentralen Einheit und einer entfernten Station, die zur zentralen Einheit keine dauerhafte direkte Verbindung aufweist, durch die Verwendung mobiler Einheiten so ausgestaltet sein kann, dass Daten zunächst drahtlos zwischen der zentralen Einheit und einer oder mehreren mobilen Einheiten übertragen werden, und dann Daten von zumindest einer mobilen Einheit bei Annäherung derselben an die entfernte Station an diese übertragen werden, wobei die zentrale Einheit (auch) eine Zeitvorgabeeinrichtung ist, die mobile Einheit von dieser als Daten zeitindikative Signale mittelbar oder unmittelbar erhält und die entfernte Station durch die Übertragung der Daten von der zumindest einen mobilen Einheit bei Annäherung derselben an Station auf die die zentrale Einheit synchronisiert wird, und zwar ohne eine dauerhaftem direkte Verbindung zur Zeitvorgabeeinrichtung.

Es wurde weiter als vorteilhaft erkannt, wenn dabei zusätzlich und/oder alternativ zu dem vorstehenden vorgesehen ist, dass ein Verfahren, so ausgestaltet ist, dass eine mobile Einheit mit der Zentraleinheit synchronisiert wird, die mobile Einheit nach der Synchronisation mit einer eigenen Taktung betrieben wird und die von der mobilen Einheit an die Station übertragenen Daten im Ansprechen auf die Synchronisation und die Taktung bestimmt werden.

Es wurde als vorteilhaft erkannt, wenn dabei zusätzlich und/oder alternativ zu dem vorstehenden vorgesehen ist, dass ein Verfahren so ausgestaltet ist, dass die Zentraleinheit auf eine Drittreferenz synchronisiert wird, bevor die mobile Einheit auf die Zentraleinheit synchronisiert wird.

Die Zeitsynchronisation ist besonders dort vorteilhaft, wo beispielsweise Außentemperaturen mit Sensoren erfasst werden sollen, die nicht dauerhaft in ein Kommunikationsnetzwerk eingebunden sind. Es ist dann möglich, die Temperaturverläufe eines Außensensors, der nicht dauerhaft mit einer Zentrale oder einem Netzwerk kommuniziert, "rucksackartig" zu übertragen und aus dem in der Zentrale so erhaltenen Temperaturverlauf, der beispielsweise eine Außentemperaturkurve darstellt, Rückschlüsse für eine erforderliche Heizungsregelung zu ziehen.

Es sei erwähnt, dass dort, wo selten erhaltene Außentemperaturen oder dergleichen mit ausgewertet werden sollen, das Regelverhalten verbessert werden kann, wenn nicht alle Sensorsignale gleichgewichtet werden und/oder wenn Temperaturverläufe eines Außensensors mit übertragen werden, um etwa einen mittleren Temperaturtagesgang zu erhalten und so einschätzen zu können, ob ein aktueller niedriger Temperaturwert von einer selten, weil beispielsweise nur rucksackartig kommunizierenden Station aufgrund einer tatsächlich niedrigen Außentemperatur niedrig ist, was angenommen werden kann, wenn er zu einer Zeit wie nachmittags, zu welcher ansonsten höhere Temperaturen vorliegen, erfasst wurde, oder ob die Temperatur niedrig ist, weil momentan eine Zeit vorliegt, in der typisch die Temperaturwerte an der Ausgangsstation üblicherweise besonders niedrig sind. Gerade dort, wo Temperaturen ausgetauscht werden, ist es daher vorteilhaft, wenn nicht nur einzelne Temperaturen, sondern Temperaturkurven und/oder das in einem vorhergehenden Zeitraum wie 12 oder 24 Stunden beobachtete Minimum-Maximum und/oder Mittelwerttemperaturen übertragen werden. Dies zeigt, dass auch für eine Temperaturmessung eine Außenstellen-Zeitsynchronisation sinnvoll sein kann.

Als selten wird eine Datenübertragung im Übrigen z.B. dann angesehen, wenn durch Beschränkung der direkten Kommunikation nicht jeder gewünschte Temperaturwert innerhalb einer Zeitspanne, die kurz gegenüber dem nächsten, zur Beschreibung des Zeitverlaufs gewünschten Temperaturwerts ist, übertragen wird, wenn die Anzahl der erfassten Temperaturwerte deshalb gering gehalten wird, weil die Kommunikation nicht kontinuierlich besteht und/oder wenn mehrere Temperaturwerte gemeinsam übertragen werden müssen, um überhaupt an die zentrale Station zu gelangen. Es sei erwähnt, dass die Gleichgewichtung oder Ungleichgewichtung von Sensorsignalen arithmetisch, bei Vorliegen digitalisierter Sensorsignale beispielsweise in einer digital arbeitenden Steuereinheit, erreicht werden kann.

Es sei darauf hingewiesen, dass einleuchtender Weise, falls dies gewünscht ist, eine entsprechende Daten(zwischen)speicherung in den jeweiligen Dimmern erfolgen kann. Mit einer geeigneten Temperaturmessung kann einerseits das Steuerverhalten verbessert werden und andererseits auch ein besseres Wiedereinschaltverfahren erreicht werden.

Dass bei Wiedereinschalten nach z.B. durch Temperatursprünge bemerkten Brownout oder dergleichen ggf. trotz einer bei Wiedereinschalten gewünschter, vorher benützter Dimmstufe, ein Softstartverhalten implementiert werden kann, wie es zur Vermeidung initialer Kurzschlüsse und/oder Erzielen eines insgesamt schnelleren Aufleuchtens von rein ohmschen Leuchtmitteln oder dergleichen beschrieben sei, sei erwähnt.

Es kann also in einer bevorzugten Variante nach einem als Brownout erkannten Ausfall der Stromversorgung ein Wiedereinschalten derart geschehen, dass in mehreren Schritten der zuletzt vor Stromausfall verwendete Dimmwert, d.h. die entsprechende Dimmstufe, angesteuert wird. Typisch wird die vorherige Dimmstufe z.B. einer bestimmten Dauer bis zu einem Phasenabschnitt entsprechen. Das Softstartverhalten kann dann implementiert werden, indem nicht sofort nach Wieder-Vorhandensein der Stromversorgung der Phasenabschnitt bei genau jener Phasenlage bewirkt wird, zu welcher der Phasenabschnitt zuvor erfolgte, sondern dass die Zeit zwischen Nulldurchgang und Phasenabschnitt in mehreren Stufen gesteigert wird, beispielsweise über 5 - 50 Halbwellen hinweg. Eine zu geringe Zahl an Halbwellen, über welche während eines Softstartes die Leuchtdauer erhöht wird, führt womöglich nicht zum gewünschten Ergebnis, vermeintliche Kurzschlüsse auch initial vermeiden zu helfen. Eine zu große Zahl an während eines Softstartes durchlaufenen Stufen verzögert das Erreichen der Endhelligkeit in einer für den Benützer unangenehmen Weise. Es ist zudem nicht erforderlich, eine lineare Steigerung der Zeiten bis zu einem Phasenabschnitt z.B. von 0 weg für den Softstart zu implementieren. Vielmehr wird es vorteilhaft sein, auch bei einem Saftstart eine bestimmte Minimal-Dauer bis zum Phasenabschnitt vorzusehen. Dies ist sinnvoll, weil durch den Saftstart z.B. eine allmähliche Erwärmung der Glühwendel einer Glühbirne erreicht werden soll, was einem vermeintlichen Kurzschlussverhalten entgegenwirkt. Bei zu kurzen Zeiten bis zum Phasenabschnitt erfolgt die Erwärmung zu langsam, ohne dass damit ein praktischer Nutzen verbunden wäre.

Die Anzahl der Kanäle eines Dimmers entspricht praktisch der Anzahl frei an-steuerbarer Ausgangspins bzw. verfügbarer entsprechender Schnittstellen des Mikrokontrollers oder der CPU, wobei in der Leistungssteuervorrichtung jedem der Kanäle ein eigener Shunt-Widerstand zugeordnet werden kann und somit nicht nur in jedem Kanal einzeln die Leistung messbar wird, sondern für jeden einzelnen Kanal erfassbar wird, ob auch ein entsprechend seiner angeschlossenen kapazitiven, ohmschen oder induktiven Last jeweils ein Phasenanschnitt- bzw. -abschnittverhalten vorteilhaft ist und wobei zudem eine Gesamtleistung, eine Durchschnittsleistung usw. erfassbar werden. Damit können auch bessere Statistiken über Leistungsverbrauch, typische Tageszeiten für Anschalten, Ausschalten großer Leistungen usw. erfasst werden. Auch können so Ausfälle wie Leuchmitteldefekte erkannt und an eine Zentrale signalisiert werden.

Weil nur Leistungshalbleiter(paare) leitend oder nichtleitend geschaltet werden müssen, also einer von zwei möglichen Zuständen binär vorgegeben werden kann, ist nicht nur die Ansteuerung vereinfacht, sondern es lassen sich auch mit einfachen Microcontrollern eine größere Anzahl an Kanälen steuern, weil für jeden Kanal nur ein Bit eines Digitalausganges benötigt wird. Die Anzahl der Kanäle wird daher im Regelfall durch andere Einflüsse begrenzt wie etwa noch einfache Bedienbarkeit einer Anordnung mit vielen Kanälen, der Notwendigkeit, viele Leistungshalbleiterpaare auf kleinem Raum unterzubringen und so weiter.

Wie aus dem Vorstehenden und auch nachfolgend ersichtlich sein wird, bietet es besondere Vorteile, wenn ein Dimmer mit einer Schnittstelle versehen ist, über welche Betriebsdaten ausgegeben werden können.

Es sei hierzu erwähnt, dass gerade in großen Gebäudekomplexen wie Industrieanlagen, Hochhäusern, Bahnhöfen usw. die Weitergabe von Information etwa über das Versagen bestimmter Kanäle vorteilhaft sein kann, um schneller die ausgefallenen Leuchtmittel tauschen zu können usw. Zudem ist es auch möglich, dauerhaft hohe Dimmgrade von Leuchtmitteln zu erfassen; wo eine dauerhaft zu starke Dimmung wie bei Halogenlampen unerwünscht ist, kann bei entsprechender Signalisierung ein Austausch des Leuchtmittels hin zu einem schwächeren Leuchtmittel erfolgen, was Betriebskosten senkt.

Es ist einsichtig, dass der Mikrokontroller oder dergl. eine Auswertung der Strommess-Signale und/oder anderer Signale vornehmen kann, was zusätzliche Funktionalitäten eröffnet.

Neben den Strom- bzw. Spannungssignalen, die erfasst werden, um die Ausgangsleistung, die Nulldurchgänge der Eingangsspannung usw. zu erfassen, können andere Parameter wie beispielsweise die interne Temperatur erfasst werden, was sowohl für reine Leuchtmittelsteuerungen zur Vermeidung von Übertemperaturbedingungen vorteilhaft ist, wie auch zur Ermöglichung von Heizungssteuerung, Lüftungen und so weiter. Es können, auch bei Verwendung in einer Unterputzdose zusätzliche Sensoren mit eingebaut werden, beispielsweise Helligkeitssensoren, soweit diese Licht von außen empfangen können, oder Schallsensoren bzw. Mikrofone, um Geräusche in einem Gebäude oder Raum aufnehmen zu können und gegebenenfalls zur Sprachübertragung zu dienen. Daneben kann es besonders bevorzugt sein, Schnittstellen zu externen Sensoren vorzusehen, beispielsweise um Außentemperatmessungen zuzulassen und auszuwerten, um die Signale von Einstellungssensoren wie von Rollos und dergleichen zu erhalten, um Glasbruchsensoren, Bewegungsmelder, Lichtschrankensensoren und dergleichen eine Anbindung zu ermöglichen, was z.B. zum Aufbau von Alarmsystemen vorteilhaft ist. Bevorzugt ist es, wenn mit externen Sensoren drahtlos kommuniziert wird, beispielsweise über bekannte Schnittstellen wie Bluetooth, WLAN und dergleichen. Es sei darauf hingewiesen, dass es derzeit bereits eine Vielzahl drahtloser Schnittstellen und für die Kommunikation geeigneter Protokolle gibt und dass die Verwendung derartiger Schnittstellen und Protokolle lediglich insoweit begrenzt ist, als die entsprechenden physischen Bausteine für die Implementierung der Schnittstellen hinreichend klein sein sollen, mit geringer Leistung betrieben werden können, eine ausreichende Reichweite besitzen, um etwa innerhalb eines Gebäudes vorhandene Sensoren direkt oder indirekt ansprechen zu können, eine ausreichende Datenrate besitzen und, insbesondere bei Alarmanlagen, eine hinreichend schnelle Reaktion auf womöglich kritische Sensorsignale erlauben. Es wird einzuschätzen sein, dass neben derzeit bekannten Protokollen und Standards, von denen Bluetooth und WLAN nur beispielhaft, weil bevorzugt, jedoch nicht beschränkend genannt sind, auch zukünftige Protokolle und Schnittstellen in Frage kommen.

Es ist vorteilhaft, wenn bei einer erfindungsgemäßen Leistungssteuervorrichtung zusätzlich und/oder alternativ vorgesehen ist, dass eine Strommess-Stufe vorgesehen ist, die dazu angeordnet ist, zu einer Mehrzahl der separat steuerbaren Lasten, bevorzugt zu jeder der separat steuerbaren Lasten, ein stromindikatives Signal an die Kontrollanordnung zu speisen. Die Strommess-Stufe wird typisch einen Shunt-Widerstand je Kanal umfassen sowie einen Analog-Digitalwandler zur Erzeugung eines Digital-Signals im Ansprechen auf die am Shunt-Widerstand abfallende Spannung. Es ist möglich, je Kanal einen eigenen Analog-Digital-Konverter vorzusehen oder über geeignete Schaltkreise alternierend die an einer Vielzahl von Shunt-Widerständen jeweils abfallenden Spannung zu erfassen. Es sei erwähnt, dass Probleme besonders dort auftreten könnten, wo mehrere Lasten in unterschiedlichen Kanälen simultan geschaltet werden sollen. Dies könnte zu unzulässigen Schaltspitzen führen, etwa im nach DIN 55055 kritschen Frequenzbereich von 4kHz bis 9MHz, weil Schaltströme und - spannungen der mehreren Kanäle sich durch die Gleichzeitigkeit überlagern. Es sei daher als vorteilhaft offenbart, für einen solchen Fall den Schaltungszeitpunkt d.h. der Zeitpunkt respektive die Phasenlage des Phasenschnitts in mindestens einem der Kanäle zu verändern.

Die Veränderung des Schaltungszeitpunktes in mindestens einem der Kanäle wird so gewählt, dass nicht mehrere Kanäle gleichzeitig geschaltet werden müssen. Dies kann durch ein Verfahren implementiert werden, in dem mit einer Steuerung, die Steuersignale an mehrere Leistungshalbleiterpaare eines mehrkanaligen Dimmers über geeignete elektrische Isolierungen wie Optokoppler oder dergleichen speist, um einen Phasenanschnitt oder -abschnitt zu bewirken, überprüft wird, ob zu dem Zeitpunkt, zu welchem der Phasenschnitt in einem ersten Kanal gewünscht wird, auch in einem weiteren Kanal ein Phasenschnitt vorgesehen ist. Sofern dies der Fall ist, kann in wenigstens einem der Kanäle der Phasenschnitt-Zeitpunkt verändert werden. Damit wird eine Veränderung des Schaltungszeitpunktes stets nur dann bewirkt, wenn auch ein anderer Kanal simultan geschaltet werden soll. Eine Alternative, unzulässige Schaltspitzen von vorneherein zu vermeiden, besteht darin, für jeden einer Vielzahl von Kanälen eine vergleichsweise geringe Anzahl von möglichen Dimmstufen vorzusehen. Für jeden unterschiedlichen Kanal kann dann auf der jeweiligen Dimmstufe ein etwas früherer oder etwas späterer Phasenschnitt-Zeitpunkt fest vorgegeben sein. Vergleichsweise wenig Dimmstufen werden z.B. vorliegen, wenn die Taktung eines für die Steuerung verwendeten Mikroprozessors um mehrere Größenordnungen höher als die Wechselspannungsfrequenz ist und viele Takte zwischen für Phasenschnitte zugelassenen Taktzahlwerten nach detektiertem Phasen-Nulldurchgang liegen. Es wird einzuschätzen sein, dass auch energiesparende Microcontroller typisch mit wenigstens einigen 100 kHz betrieben werden, was gegenüber herkömmlichen Wechselspannungsfrequenzen um mehrere Größenordnungen höher ist. Wird angenommen, dass zu jeder Taktzahl nach einem Nulldurchgang per se ein Phasenschnitt möglich wäre, würden sich also weit über 1000 unterschiedliche Dimmstufen ergeben. Vergleichsweise wenig Dimmstufen werden also insbesondere verwendet, wenn von den technisch gemäß Taktung oder anderen Begrenzungen wie Ausgabe-Frequenzen auf für die Leistunghalbleiteransteuerung verwendeten Ausgangspins allenfalls ein Bruchteil als mögliche Dimmstufen zugelassen wird, insbesondere nicht mehr als 30 %, bevorzugt nicht mehr als 10 %, insbesondere bevorzugt nicht mehr als 5 %, 3 % oder 1 % der per se technisch erreichbaren Phasenschnitt-Zeitpunkte. In einem solchen Fall mit nur wenigen Dimmstufen bezogen auf die technisch per se realisierbaren Zeitpunktes ist es dann möglich, innerhalb einer Dimmstufe den tatsächlichen Phasenschnitt kanalabhängig etwas früher oder etwas später vorzunehmen. Die Zeiten, um welche für gleiche Dimmstufen der Phasenschnitt verschoben wird, können beispielsweise, je nachdem wie das Verhältnis zugelassener Dimmstufen bezogen auf die technisch erreichbaren Schalt-Stufen ist, um einige Mikrosekunden bis nahe an oder in den Millisekunden-Bereich liegen. Es kann möglich sein, eine solche Verschiebung nur in bestimmten Dimmstufen vorzunehmen, wo Störungen als besonders kritisch angesehen werden, also dort, wo womöglich bei großen Spannungen innerhalb des Wechselspannungs-verlaufs ein Phasenschnitt erfolgt. Es sei darauf hingewiesen, dass geringfügige Verschiebungen des Phasenschnittzeitpunktes bereits unzulässige Schaltspitzen gut zu vermeiden helfen, auch wenn der Zeitversatz so gering ist, dass ein Benützer, im Regelfall selbst bei kritischen Leuchtmitteln wie LEDs, auch in kritischen Bereichen praktisch keinen Helligkeitsunterschied wahrnehmen wird.

Aus dem vorstehenden ist ersichtlich, dass es besonders bevorzugt ist, einen Zeitversatz in digital getakteten Dimmern mit einer digitalen Steuerung vorzusehen.

Es sei daher als vorteilhaft offenbart, dass bei einem Wechselstromdimmer mit mehreren Kanälen für stufenweise dimmbare Verbraucher und einer Steuerung für dimmstufengemäße Phasenschnitte, insbesondere wie vorstehend beschrieben, die Steuerung dazu ausgebildet ist, die Phasenschnitte auf gleicher Stufe gedimmter Kanäle zeitlich gegeneinander zu versetzen.

Es sei als vorteilhaft offenbart, dass insbesondere bei einem derartigen Wechselstromdimmer zusätzlich und/oder alternativ vorgesehen ist, dass er für den Betrieb in einem Zweiphasenwechselstromlichtnetz ausgelegt ist.

Es sei als vorteilhaft offenbart, dass insbesondere bei einem derartigen Wechselstromdimmer zusätzlich und/oder alternativ vorgesehen ist, dass die Verbraucher stufenweise dimmbar sind in einem von 3 bis 5 Stufen, 10 Stufen, 100 Stufen oder 2" Stufen.

Wenn der Wechselstromdimmer in 3 - 5 Stufen durchschaltbar ist, so ist dies besonders vorteilhaft, um zwischen diesen 3 bzw. bis zu 5 Stufen durch wiederholtes Antasten bzw. Austasten zu zyklieren. Die Verwendung von beispielsweise 10 Dimmstufen erlaubt einerseits,durch Bestimmen der Dauer einer Tastenbetätigung zwischen den Werten in reproduzierbarer Weise zu schalten und dabei eine ausreichende Einstellungspräzision einer gewünschten Helligkeit zu gewährleisten. Eine Anzahl von beispielsweise 100 Stufen erlaubt eine quasi kontinuierlich empfundene Verstellung im Ansprechen auf die Dauer eines Tastendruck. Dies wird einleuchtender Weise auch dann erreicht, wenn etwa bereits 50 oder 300 Stufen durchlaufen werden, es versteht sich aber, dass gerade bei Aufnahmen von Helligkeitskalibrationen eine Überprüfung oder Bestimmung einer Helligkeitskurve durch Vorgabe prozentualer Werte erleichtert ist. Werden 2*ⁿ* Stufen implementiert, so ist dies aufgrund des binären Charakters besonders einfach. Bevorzugte Stufenzahlen sind 4 Stufen, 8, 16 sowie 64, 128 und 256 Stufen. Eine feinere Regelung ist im Regelfall nicht erforderlich und wird als eher unangenehm empfunden, weil entweder keine genaue Einstellung möglich ist oder die Zeit zum Durchlaufen der Helligkeitswerte etwa bei Messung einer Tastendruckdauer zur Dimmstufenbestimmung recht lang wird.

Es sei erwähnt, dass vorstehend zwar beschrieben wurde, dass eine kanalweise Vorabbestimmung eines Phasenschnitt-Zeitversatzes erfolgt, dass dies aber nicht zwingend der Fall sein muss. Insbesondere bei Dimmern mit sehr vielen Kanälen kann es bevorzugt sein, eine Verschiebung eines Phasenschnittes nur dann vorzunehmen, wenn simultan auch ein oder mehrere Kanäle geschaltet wird, gegebenenfalls sogar nur bei Überschreiten eines bestimmten Gesamtstromes, der geschaltet wird, oder nur mit mindestens einem zu hohen Einzelstrom, zeitlich zu verschieben. In einem solchen Fall kann entweder vor jedem Phasenschnitt, bevorzugt jedoch bei jeder Verstellung einer Dimmstufe, überprüft werden, ob ein Phasenschnitt in einem anderen Kanal ebenfalls auftritt und dann eine Entscheidung über eine erforderliche Verschiebung des Phasenschnittes getroffen werden, gegebenenfalls abhängig von den erwarteten, vorgegebenen, zulässigen oder gemessenen Strömen.

Es sei erwähnt, dass gegebenenfalls der Zeitversatz eines Kanals nicht fest sein muss, sondern gegebenenfalls alternieren oder variieren kann. So kann etwa dann, wenn nur in kritischen Fällen, also bei hinreichend hohen Gesamtströmen und stets nur bei zeitgleichem Schalten eine Verschiebung vorgesehen ist, zwischen zwei zeitgleich zu schaltenden Kanälen alterniert werden, um den zu verschiebenden Kanal zu alternieren. Dies ist vorteilhaft, weil damit gegebenenfalls eine - wenn auch nur geringe - Leistungsveränderung je Kanal reduziert wird und im Übrigen die Leistungen beider Kanäle angeglichen wird. Gerade dort, wo die Farbtemperatur leistungsabhängig ist bei wie Glühbirnen, Halogenlampen und dergleichen, kann dies Vorteile bieten.

Es sei also als vorteilhaft offenbart, dass insbesondere bei einem derartigen Wechselstromdimmer wie vorerwähnt zusätzlich und/oder alternativ vorgesehen ist, dass die Steuerung nur für bestimmte Dimmstufen Phasenschnitte zeitgleich phasengeschnittener Kanäle gegeneinander versetzt.

Es sei als vorteilhaft offenbart, dass insbesondere bei einem derartigen Wechselstromdimmer zusätzlich und/oder alternativ die Steuerung einen Integrator, eine Integrationswertvorgabestufe, einen Komparator und eine Ausgangsstufe umfasst, wobei vorgesehen ist, dass der Integrator dazu ausgebildet ist, beginnend mit einem bestimmten Ereignis zu integrieren, die Integrationswertvorgabestufe dazu ausgebildet ist, kanalweise Integrationswertvorgaben für bestimmte Dimmstufen zu bestimmen, der Komparator dazu ausgebildet ist, kanalweise den Integrationswert mit der Integrationswertvorgabe zu bestimmen und bei Erreichen und/oder Überschreiten der Integrationswertvorgabe ein Hinweissignal zu erzeugen und die Ausgangsstufe dazu ausgebildet ist, im Ansprechen auf das Hinweissignal aus dem Komparator ein Phasenschnittsignal zum Bewirken eines Phasenschnittes auszugeben.

Das bestimmte Ereignis, bei welchem der Integrator beginnt, zu integrieren, kann beispielsweise der Nulldurchgang der Wechselspannung sein. Als Integrator könnte ein analoger Integrator wie ein RC-Glied dienen; bevorzugt ist aber einsichtiger Weise angesichts der bevorzugten Implementierung des Dimmers mit digital arbeitenden Stufen die Verwendung eines Zählers. In diesem Fall wäre der Integrationswert ein Zählwert.

Es sei also als vorteilhaft offenbart, dass insbesondere bei einem derartigen Wechselstromdimmer zusätzlich und/oder alternativ vorgesehen ist, dass die Steuerung eine digitale Steuerung ist, die einen Zähler als Integrator, ein Zählwertvorgabemittel als Integrationswertvorgabemittel, einen Komparator und eine Ausgangsstufe umfasst, wobei der Zähler dazu ausgebildet ist, seit einem bestimmten Ereignis vergehende Taktereignisse zu zählen, das Zählwertvorgabemittel dazu ausgebildet ist, kanalweise Zählwertvorgaben für bestimmte Dimmstufen zu bestimmen, der Komparator dazu ausgebildet ist, die Zählwerte mit den Zählwertvorgaben zu bestimmen und bei Erreichen oder Überschreiten der Zählwertvorgabe ein Hinweissignal zu überzeugen und die Ausgangsstufe dazu ausgebildet ist, im Ansprechen auf das Hinweissignal aus dein Komparator ein Phasenschnittsignal zum Bewirken eines Phasenschnittes auszugeben.Es sei erwähnt, dass die Anzahl Takte, nach welcher bei einer gegebenen Dimmstufe für einen Kanal der Phasenschnitt erfolgen soll, beispielsweise in einer Nachschautabelle oder dergleichen hinterlegt sein kann, wobei dann in dieser Nachschautabelle bevorzugt bereits die unterschiedlichen Phasenschnitt-Zeitversatz Daten je Kanal enthalten sind.

Es sei als vorteilhaft offenbart, dass insbesondere bei einem derartigen Wechselstromdimmer zusätzlich und/oder alternativ vorgesehen ist, dass das Zählwertvorgabemittel dazu bestimmt ist, eine Zählwertvorgabe im Ansprechen auf einen zur Dimmstufe in einer Nachschautabelle hinterlegten Wert oder im Ansprechen auf eine zur Dimmstufe durchgeführte Berechnung zu bestimmen. Dass gegebenenfalls eine erforderliche Phasenschnitt-Verschiebung berechnet werden kann, statt sie aus einer Tabelle auszulesen, sei erwähnt.

Es sei als vorteilhaft offenbart, dass insbesondere bei einem derartigen Wechselstromdimmer zusätzlich und/oder alternativ vorgesehen ist, dass der Komparator dazu ausgebildet ist, für unterschiedliche Kanäle mit gleichen Dimmstufen ein Hinweissignal zeitversetzt zu erzeugen und/oder die Integrationswertvorgabestufe dazu ausgebildet ist, für unterschiedliche Kanäle mit gleichen Dimmstufen unterschiedlichen Integrationswertvorgaben auszugeben und/oder der Integrator dazu ausgebildet ist, für unterschiedliche Kanäle innerhalb gleicher Zeiten differierende Integrationswerte zu bestimmen.

Es sei als vorteilhaft offenbart, dass insbesondere bei einem derartigen Wechselstromdimmer zusätzlich und/oder alternativ vorgesehen ist, dass die Steuerung eine Digitalsteuerung ist und die Zählwertvorgabe dazu ausgebildet ist, für unterschiedliche Kanäle gleicher Dimmstufe unterschiedliche Zählwerte vorzugeben.

Es sei als vorteilhaft offenbart, dass insbesondere bei einem derartigen Wechselstromdimmer zusätzlich und/oder alternativ vorgesehen ist, dass die Steuerung dazu ausgebildet ist, die Phasenschnitte auf gleicher Stufe gedimmter Kanäle zeitlich um einen Bruchteil einer Dimmstufe zu versetzten, insbesondere um nicht mehr als 5% der aktuell ausgegebenen Leistung, bevorzugt nicht mehr als 1% der aktuell ausgegebenen Leistung, insbesondere bevorzugt, um nicht mehr als 0,1% der aktuell ausgegebenen Leistung.

Der zur Reduzierung des Störspektrums auf unkritische Pegel erforderliche Zeitversatz des Phasenschnittes wird nicht nur von den jeweils einschlägigen, für maximal zulässigen Störungen vorgesehenen Normen abhängen, sondern auch von der Leistung, sowie aufgrund der baulichen Implementierung etwa aufgrund vorhandener Kapazitäten usw. variieren. Es zeigt sich aber, dass bereits geringe Verschiebungen des Phasenschnittes, die auch in kritischen Fällen die angegebenen Werte nicht überschreiten, ausreichen, um für praktisch alle Bedingungen eine hinreichende Störungsfreiheit zu garantieren. Dabei ist eine Grenze von nicht mehr als 5 % der aktuell ausgegebenen Leistung dort vertretbar, wo es nur auf die Empfindlichkeit des Auges ankommt, dem auch auf unterschiedlichen Kanälen gleicher Dimmstufe an gleichen Leuchtmitteln gleicher Helligkeit ausgegeben werden soll, während eine bessere Leistungseinhaltung wie nicht mehr als 1%, z.B. dort vorteilhaft ist, wo reproduzierbare Werte benötigt werden - was beispielsweise auch für andere Anwendungen außerhalb der Lichttechnik der Fall sein kann; auch dort, wo etwa in Gebäuden Rollläden oder dergleichen hochgezogen werden sollen, ist es wünschenswert, diese etwa mit gleicher Geschwindigkeit hochzuziehen oder abzusenken. Die angegebene Grenze wird hier im Regelfall bereits als unkritisch anzusehen sein. Dort, wo es auf besonders exakte Einhaltung von Vorgaben, beispielsweise aufgrund von Kalibrationskurven, die möglichst eingehalten werden soll, ankommt, ist es bevorzugt, nicht mehr als 0,1 % einer aktuell ausgegebenen Leistung durch eine Verschiebung des Phasenschnittes zu variieren und nicht mehr als 0,1 %.

Es sei als vorteilhaft offenbart, dass insbesondere bei einem derartigen Wechselstromdimmer zusätzlich und/oder alternativ vorgesehen ist, dass der Phasenschnitt eines Kanals um nicht mehr als 30 Millisekunden, bevorzugt um nicht mehr als 10 Millisekunden gegen jenen eines gleich gedimmten Kanals versetzt wird und/oder um mindestens 100 Mikrosekunden, bevorzugt mindestens 300 Mikrosekunden zeitlich versetzt wird, insbesondere bei einem Wechselstromdimmer für ein Wechselstromnetz mit einer Stromwechselfrequenz >40 und <80 Hertz, insbesondere mit einer Nominalfrequenz zwischen einschließlich 50 bis einschließlich 60 Hertz. Die Wechselspannung liegt bevorzugt bei einem Nominalwert aus der Gruppe 110V. 120V, 220V, 230V und 240V.

Es sei als vorteilhaft offenbart, dass insbesondere bei einem derartigen Wechselstromdimmer zusätzlich und/oder alternativ vorgesehen ist, dass die Steuerung dazu ausgebildet ist, erst ab einer bestimmten Ausgabeleistung und/oder nur für bestimmte Dimmsignale einen Zeitversatz zwischen den Kanälen vorzusehen.

Während die vorstehende Ausgestaltung dort vorteilhaft ist, wo abzusehen ist, dass Kanäle regelmäßig mit praktisch gleichem Dimmgrad betrieben werden, ist es ein prinzipieller Vorteil eines Dimmers, wie er hier offenbart wird, dass dies nicht zwingend der Fall sein muss. Vielmehr ist es auch möglich, Kanäle mit stark unterschiedlicher Last bzw. stark unterschiedlichem Wirkungsgrad bzw. Dimmgrad zu betreiben.

Es sei darauf hingewiesen, dass auch dort, wo die Kanäle aktuell mit stark unterschiedlicher Last bzw. stark unterschiedlichem. Dimmgrad betrieben werden, die Potential -Differenzen zwischen den Shunts gering sein werden, so dass die einzelnen Ströme ohne weiteres messbar sind, ohne dass an irgendeiner Stelle kritisch große Spannungen von Bauteilen unterschiedlicher Kanäle zusammengeführt werden müssen.

Als kritisch große Spannung wird eine Spannung verstanden, die auf Dauer oder instantan zu einer Bauteilzerstörung führt, zu unerwünschten Kriechströmen und dergleichen.

Es ist vorteilhaft, wenn bei einer erfindungsgemäßen Leistungssteuervorrichtung zusätzlich und/oder alternativ vorgesehen ist, dass die Kontrollanordnung dazu ausgebildet ist, im Ansprechen auf Strommess-Signale zwischen Phasenanschnitt- oder -abschnitt-Steuerung zu wählen, und/oder das Vorhandensein einer induktiven, kapazitiven oder ohmschen Last zu erkennen, und/oder eine an eine Last gespeiste Leistung separat zu erfassen und/oder im Ansprechen darauf zu reagieren, und/oder den aktuellen Leistungsverbrauch oder fließenden Strom zu erfassen und auf den Leistungsverbrauch bzw. fließenden Strom bezogene Signale auszugeben, und/oder eine Gesamtverlustleistung in der Leistungssteuervorrichtung zu begrenzen und/oder einen Ersatzkanal anzusteuern, falls in einem eigentlich gewünschten Kanal ein Versagen detektiert wird oder wurde.

Es sei erwähnt, dass im vorliegenden Dimmer wie dargestellt einerseits bevorzugt der fließende Strom in einem Kanal ermittelt wird; dies wird typisch aufgrund der geringen Wechselstromfrequenzen dergestalt geschehen können, dass je Halbwelle eine Vielzahl von Strommeßwerten erhalten wird, beispielsweise 5,10 oder mehr Stromesswerte je Halbwelle.. Damit lässt sich der Zeitpunkt von z.B. einem Nulldurchgang des Wechselstroms bestimmen. In gleicher Weise wird, um an einer bestimmten Stelle während der Wechselspannungsphase einen Anschnitt bzw. Abschnitt überhaupt vornehmen zu können, auf per se bekannte Weise der Nulldurchgang der an den Dimmer gespeisten Wechselspannung zu bestimmen sein. Es sei darauf hingewiesen, dass allgemein auch andere anwendbare Techniken zur Bestimmung dieses Nulldurchganges bekannt sind und hier nicht beschrieben werden müssen.

Bei bekanntem Zeitpunkt des Nulldurchganges des Stromes und des Nulldurchganges der angelegten Spannung kann auch bestimmt werden, ob der Strom der Spannung voreilt, nacheilt oder mit dieser weitgehend in Phase liegt. Dementsprechend kann aus der Phasenlage auf das Vorhandensein einer induktiven, kapazitiven oder ohmschen Last geschlossen werden.

Es ist zudem durch die Bestimmung der Leistung, die an einem bestimmten Kanal ausgegeben wird (bzw. der Feststellung, dass dort momentan kein Strom fließt) möglich, festzustellen, dass oder ob ein bestimmter Kanal versagt, d.h. ob ein Benutzer, der wünscht, eine an diesen Kanal angeschlossene Last anzusteuern, hierzu eine Möglichkeit besitzt oder nicht etwa, weil eine Glühbirne durchgebrannt ist oder dergleichen.

In einem solchen Fall ist es möglich, anstelle des eigentlich von einem Benutzer "gewünschten" und betätigten Kanals stattdessen einen anderen Kanal anzusteuern, der kein Versagensverhalten aufweist. Bei Zweikanal-Dimmern ist ohne weiteres ersichtlich, dass der jeweils andere Kanal als Rückfallkanal im Versagensfall angesteuert werden kann.

Bei Dimmern mit mehr als zwei Kanälen kann entweder ein Kanal fest als Ersatzkanal für einen oder alle anderen Kanäle als Rückfallkanal definiert werden oder ein Speicher vorgesehen werden, in welchen eine Benutzerkonfiguration abgelegt wird, durch welche hinterlegt wird, welcher Kanal für welchen ausfallenden Kanal als Rückfallkanal vorgesehen ist. Bei Multikanaldimmern also z.B. können Kanalpaare gebildet werden, wobei jeder Kanal eines Paares wechselseitig einen Ersatz für den anderen Kanal dieses Paares darstellt. Es kann ein prinzipieller Ersatzkanal definiert werden, beispielsweise kann immer Kanal 1 als Ersatzkanal dienen (außer für den Fall, dass Kanal 1 selber defekt ist: für diesen Fall kann z.B. Kanal 2 als Standard-Ersatzkanal definiert werden). Alternativ ist z.B. auch eine freie Konfiguration der Ersatzkanäle möglich. Dass Ersatzkanal-Ketten definiert werden, die bei Ausfall eines Ersatzkanals einen ersetzenden Ersatzkanal definieren usw. ist einsichtig.

Es kann gegebenenfalls auch eine Abfrage stattfinden, ob bei Ausfall in einem Kanal ein vollständiger Ausfall beobachtet wird oder ein partieller. Besonders verständlich wird dies bei herkömmlichen Glühbirnen. Werden mehrere Glühbirnen gemeinsam als ein Kanal geschaltet, so kann ein Defekt bereits dadurch vorliegen, dass eine einzelne von mehreren Glühbirnen defekt ist. Dies kann bestimmt werden, wenn zu einer gegebenen Dimmstufe der zuvor bei dieser Dimmstufe erhaltene Strom oder die an den Verbraucher zuvor gespeiste Leistung nicht nur bestimmt, sondern auch gespeichert wurde. Treten zu große Abweichungen bei der gleichen Dimmstufe auf, so spricht dies dafür, dass ein Defekt vorliegt. Hingewiesen sei darauf, dass gegebenenfalls bei Einschalten eine Vielzahl von Dimmstufen durchlaufen wird, etwa wenn ein Softstart implementiert ist und das dabei jeweils, sofern die Glühbirne schon hinreichend warm geworden ist, die Stromwerte bestimmt werden können. Geringfügige Abweichungen können durch Variationen der am Dimmer anliegenden Eingangsspannung hervorgerufen sein, größere Variationen treten typisch bei Versagen wenigstens einer Glühbirne auf. Es kann gegebenenfalls somit festgestellt werden, ob wenigstens eine Glühbirne defekt ist. Es kann dann auch vorgesehen werden, dass, solange die Messwerte darauf hindeuten, dass nur ein Leuchtmittel von mehreren oder z.B. wenige wie zwei oder drei von ab vier bis fünf Leuchtmitteln defekt sind, noch kein Ersatzkanal angesteuert wird, sondern erst dann, wenn entweder zu viele Ausfälle aufgetreten sind oder ein vollständiges Versagen aufgrund der erhaltenen Messwerte in einem Kanal angenommen werden.

Dies erlaubt es etwa, in einem Raum, der mit Licht aus einer bestimmten Lichtquelle erhellt werden soll, stattdessen eine andere (zweiten) Lichtquelle automatisch einzuschalten, wenn die erste Lichtquelle ein defektes Leuchmittel aufweist.

Die Bestimmung der Gesamtleistung bzw. der über einen einzelnen Kanal abgegebenen Leistung wird zudem die Versagenssicherheit dann erhöhen, wenn Bedingungen entgegengewirkt wird, unter denen sonst eine kritische Überlast zu beobachten wäre. Kritisch ist bei Phasenschnittsteuerungen regelmäßig das Abschalten der Leistung bei Phasenwinkeln, an denen die abzuschneidende Spannung sehr hoch ist, denn bis zum Erreichen eines nichtleitenden Zustandes muss dann ein erheblicher Teil der Leistung in den Leistungshalbleitern in Wärme umgewandelt werden. Damit ist die Erwärmung der Leistungshalbleiter aber stark abhängig von dem Grad, um welchen die Leistung gedimmt wird.

Eine Spannung wird dann als recht hoch angesehen, wenn sie zu dicht am während einer Halbwelle auftretenden Spannungsmaximum liegt. Dies kann bei sehr robust gebauten Dimmern der Fall sein, wenn ein Anschnitt in einem Bereich um +/- 5° um das Spannungsmaximum liegt (bei 360° für die gesamte Wechselspannungsphase); typisch ist aber der kritische Phasenwinkelbereich größer und liegt zwischen +/- 10° um das Spannungsmaximum, +/-15° oder, dort, wo Kosten gespart werden bezüglich der Bauteile und dergleichen um +/- 20° oder +/- 25° bzw. +/- 30°. Dabei kann gegebenenfalls zu berücksichtigen sein, wie Wärme abgeführt wird und welche Sicherheitsvorschriften in einem jeweiligen Land gelten.

Kritisch sind Dimmwerte dann, wenn bei den vorerwähnten Phasenwinkeln die abzuschneidende Spannung hoch ist. Groß sind Ströme dann, wenn sie nahe der für ein gegebenes Bauteil zulässigen Maximalströme liegen, was der Fall sein kann, wenn sie z.B. 50, 60,70, 80,90,95 oder 100% der Maximalströme, die bauteilgemäß entsprechend insbesondere der verwendeten Leistungshalbleiter fließen dürfen, erreichen. Ob ein niedrigerer Prozentsatz der maximal zulässigen Ströme als groß angesehen wird oder nicht, hängt insbesondere davon ab, ob die Wärme von Halbleitern gut abgeführt werden kann, ob die kritischen Ströme lange andauern und ob zu Gunsten gelegentlich großer Ströme eine gegebenenfalls geringe Verkürzung der Lebensdauer tolerierbar ist.

Wenn Lasten angeschlossen werden, die insgesamt zu groß sind, die also per se zu große Ströme bedingen, könnte gerade bei kritischen Dimmwerten eine zu starke Erwärmung der Halbleiter auftreten. Dementsprechend kann etwa die Dimm-Fähigkeit bei sehr großen Lasten reduziert werden und/oder verhindert werden, dass zu viele zu große Verbraucher simultan (gedimmt) geschaltet werden, während gleichwohl zugelassen werden kann, dass zumindest kurzfristig noch sehr große Lasten mit allenfalls unkritischer Dimmung noch angesteuert werden.

Es ist vorteilhaft, wenn bei einer erfindungsgemäßen Leistungssteuervorrichtung zusätzlich und/oder alternativ vorgesehen ist, dass sie in einem Gehäuse insbesondere einem für den Einbau in eine Unterputzdose ausgebildeten Gehäuse oder mit einem für Unterdoseneinbau geeigneten Formfaktor vorgesehen ist, wobei zwei Phaseneingänge und evtl. eine Erdungsleitung vorgesehen sind und entsprechende Ausgänge für jede der Lasten- sowie geeignete Schnittstellen für Betätigungs-Schaltermittel.

Die vorliegende Erfindung erlaubt so den Aufbau einer hoch integrierten Leistungssteuervorrichtung, insbesondere als Unterputzdosen-Einbauelement für herkömmliche Unterputzdosen wie nach DIN 49073. Dies wird durch die geringe Wärmeabgabe auch dann möglich, wenn hohe Leistungen zu steuern sind. Die Verbaubarkeit in andere Anordnungen insbesondere mit anderen Formfaktoren sei erwähnt. Wie ein Einbau etwa in Schaltschränke begünstigt wird, ergibt sich weiter unten.

Der Leistungssteuervorrichtung können Kippschalter oder dergleichen als Schaltermittel zugeordnet sein. Die Ausbildung mit beispielsweise nur einem zweigeteilten herkömmlichen Wippschalterfeld ergibt eine einfachst mögliche Ausbildung. Es ist jedoch auch möglich und insbesondere bevorzugt, die Leistungssteuervorrichtung mit einem intelligenten Schalter mit mehreren Funktionalitäten auszubilden. Dies gilt insbesondere dort, wo mehr als zwei Kanäle vorhanden und zu steuern sind. Der "intelligente Schalter" kann einleuchtender Weise mit der Kontrollanordnung verbunden sein bzw. diese mitnutzen. Ein "intelligenter" Schalter kann etwa Gesten erkennen und/oder alphanumerische Zeichen anzeigen usw. Es sei erwähnt, dass gegebenenfalls insbesondere im Hinblick auf die Möglichkeit, eine Helligkeitskalibrierung vorzunehmen, gegebenenfalls auch die Verwendung eines Dimmers mit einem angesteuerten Kanal möglich ist.

Es wird insoweit auf die PCT Anmeldung PCT/EP 2015/072 878 hingewiesen, die vollumfänglich eingegliedert ist, insbesondere hinsichtlich Schalterfunktionalitäten, Schalter-Design, hinsichtlich der Kommunikationsmöglichkeiten mit anderen Einheiten und/oder einer Zentrale und/oder der Anbindung an zusätzliche Sensoren und/oder die Kommunikationsmöglichkeiten mit anderen Einheiten und/oder einer Hauszentrale.

Es ist vorteilhaft, wenn bei einer erfindungsgemäßen Leistungssteuervorrichtung zusätzlich vorgesehen ist, dass zumindest eine Schnittstelle für drahtlose Kommunikation, insbesondere über Bluetooth und/oder WLAN vorgesehen ist, wobei die Leistungs-steuervorrichtung bevorzugt dazu ausgebildet ist, mit mehreren anderen Leistungsanordnungen Signale auszutauschen, die insbesondere das eigene einwandfreie Funktionieren der Lastansteuerung und/oder der Schnittstellenansteuerung mitteilen, einem oder mehreren Kommunikationspartnern das einwandfreie Funktionieren und/oder Ausfallen dritter Leistungssteuer-vorrichtungen mitteilen, Steuersignale für die Laststeuerung zur gemeinsamen Steuerung mehrerer unabhängig betreibbarer, aber gemeinsam betriebener Lasten darstellen, und/oder Steuersignale für die Ansteuerung von Ersatzkanälen ausgefallener oder ungenügend anzusteuernder eigener Kanäle darstellen, und/oder eine Konfiguration anderer Leistungssteuer-vorrichtungen bewirken, und/oder Signalstärken eines beweglichen Signalsenders, bevorzugt eines beweglichen Bluetooth-Senders, bevorzugt auf eine Triangulation ermöglichende Weise darstellen, und/oder Statistiken über Störungen der eigenen und/oder fremder Kommunikationsschnittstellen kommunizieren und/oder eine Gatewayverbindung zwischen unterschiedlichen Schnittstellen ermöglichen.

Es sei darauf hingewiesen, dass insbesondere für die Kommunikation mehrerer Leistungssteuervorrichtungen untereinander auch eine langsame Datenübertragung wie etwa Bluetooth ausreichend ist; gleichwohl kann es vorteilhaft sein, mindestens eine Leistungssteuervorrichtung in einem Gesamtsystem WLAN-fähig auszugestalten bzw., für spätere oder andere Protokolle, mindestens einer Leistungssteuervorrichtung die Möglichkeit zu geben, mit nicht unmittelbar leistungsdurchschaltenden Geräten wie Mobilgeräten von Benutzern über eine - insbesondere schnellere - Schnittstelle zu kommunizieren, während die Leistungssteuervorrichtungen untereinander für eine langsamere Kommunikation vorgesehen werden. Als Mobilgeräte kommen beispielsweise Geräte infrage, die ein Benutzer im Regelfall ohnehin mit sich trägt wie beispielsweise ein Smartphone, eine Smartwatch, aber auch ein Tablet, Laptop oder dergleichen. Es kann auch eine Fernbedienung vorgesehen werden, die gegebenenfalls lediglich einen oder wenige Knöpfe besitzen muss.

Die vorstehende Aufzählung von Mobilgeräten ist nicht beschränkend. Oftmals wird - aus rein sprachlichen Gründen - ausschließlich auf ein "Smartphone" Bezug genommen, auch wenn allgemein ein Mobilgerät bzw. eine mobile Einheit gemeint ist.

Es sei weiter darauf hingewiesen, dass selbst dann, wenn mit einem vorn Benutzer zur Bedienung der Leistungssteuervorrichtung verwendeten Gerät über eine schnelle drahtlose Verbindung wie WLAN kommuniziert wird, gleichwohl andere Drahtlos-Datenübertragungsprotokolle wie Bluetooth verwendet werden können, etwa um die Position eines Benutzers bzw. dessen Mobilgerätes unter Verwendung mehrerer Leistungssteuervorrichtungen ein und desselben Systems zu triangulieren. Dazu kann ausgenutzt werden, dass etwa nach dem Bluetooth-Standard eine Signalstärkenbestimmung vorgesehen ist, die in herkömmlichen Wohnräumen o.ä. bereits hinreichend genau ist, um die Position einer Person zumindest grob zu bestimmen. Es ist einsichtig, dass für einen solchen Fall Leistungssteuervorrichtungen mit anderen eines Systems kommunizieren werden, z.B., um die jeweils ermittelten Bluetooth-Signalstärken auszutauschen.

Wie unten dargelegt werden wird, erlaubt insbesondere die Verwendung mehrerer drahtloser Einheiten und die Ausführung triangulierender Methoden mit diesen, die Position eines Benutzers nicht nur zu bestimmen, sondern auch im Ansprechen darauf die Bedienung eines Systems zu erleichtern.

Es sei im Übrigen darauf hingewiesen, dass andere Funksignal-Übertragungsmöglichkeiten z.B. gemäß anderer Standards außer Bluetooth bestehen. Voraussetzung ist lediglich eine ausreichende Reichweite und eine ausreichende Datenbandbreite, wobei einzuschätzen sein wird, dass diese nicht hoch sein muss.

Dort, wo eine Kommunikation von Leistungssteuervorrichtungen eines Systems untereinander möglich ist, können zudem eine Vielzahl von zusätzlichen Funktionen implementiert werden. So könnte dort, wo ein jeweiliger Ersatzkanal für den Fall des Versagens eines bestimmten Kanals definiert ist, dieser Ersatzkanal auch an anderen Leistungsanordnungen definiert sein. Es ist einsichtig, dass in einem solchen Fall die Kommunikation von verschiedenen Leistungssteuervorrichtungen eines Systems untereinander insbesondere ermöglicht, dass eine Leistungssteuervorrichtung, die noch intakt ist, Information über das Versagen an einer anderen Leistungssteuervorrichtung erhält. Im Regelfall, etwa bei Versagen eines Kanals aufgrund Leuchtmittelversagens in diesem Kanal, wird die erste Leistungssteuervorrichtung, an welcher das Versagen aufgetreten ist, noch soweit funktionieren, dass das Kanalversagen unter Verwendung geeigneter Protokolle einer anderen, erreichbaren Leistungssteuervorrichtung mitgeteilt wird. Zu beachten ist, dass in vielen Räumen wie beispielsweise Wohnräumen Leistungssteuervorrichtungen an unterschiedlichen Stellen vorgesehen sind, z.B. weil ein Raum mehrere Türen besitzt und einem Benutzer an jedem Zugang ermöglicht werden soll, Licht im Raum an-oder auszuschalten. In Fällen, wo eine erste Leistungssteuervorrichtung selbst versagt, wird die erste Leistungssteuervorrichtung dagegen nicht mehr in der Lage sein, ihr Versagen noch anderen leistungssteuernde Anordnungen mitzuteilen. Es kann daher vorteilhaft sein, wenn Leistungssteuervorrichtungen eines Systems regelmäßig abfragen, ob noch andere Leistungssteuervorrichtungen erreichbar sind. In einem solchen Fall kann zumindest dann, wenn ein Benutzer mittels Mobilgerät wie Smartphone versucht, den einen an der ersten Leistungssteuervorrichtung vorhandenen Kanal mit Leistung zu beaufschlagen, die zweite Leistungssteuervorrichtung dessen Funktion übernehmen, sofern sie die entsprechenden Funksignale mithört. Es ist daher vorteilhaft, wenn keine reine Punkt-zu-Punkt- Kommunikation zwischen Mobilgerät und einzelner Leistungssteueranordnung aufgebaut wird. Bezüglich der Abfrage nach anderen Leistungssteueranordnungen sei angemerkt, dass sich innerhalb eines Systems wie in einem Wohngebäude über sehr lange Zeiträume die installierten Systeme praktisch nicht ändern werden. Damit sind einmal erreichte Leistungssteuervorrichtungen im Regelfall weiter erreichbar und es kann auf ein Versagen bereits dann geschlossen werden, wenn eine zuvor ansprechbare Leistungssteuervorrichtung nicht mehr erreichbar ist. Dabei kann gegebenenfalls sogar diskriminiert werden, ob die Signalstärke, mit welcher die andere Leistungssteuervorrichtung zuvor erreicht wurde, einen bestimmten Schwellwert überschritten hat. War dies nicht der Fall, d.h. waren die Signale zu schwach, könnte ein Nicht-Mehr-Erreichen gegebenenfalls auch durch Verschlechterungen der Übertragungsbedingungen aufgetreten sein, wäre also unkritisch. Allerdings werden typische Ersatzkanäle ohnehin in gleichen Räumen definiert, sodass von einer geringen Übertragungsstrecke und einer oftmals sogar geradlinigen Sichtverbindung zwischen den Leistungssteuervorrichtungen, die an unterschiedlicher Stellen innerhalb eines Raumes aufgebaut sind, ausgegangen werden kann.

Es sei im Übrigen erwähnt, dass eine Abfrage auf Funktionieren nicht nur bei anderen Leistungssteuervorrichtungen, sondern auch bei Sensoren möglich ist, die gegebenenfalls noch nicht einmal selber an das Wechselstrom-Lichtnetz angeschlossen sind, sondern aus anderen Energiequellen wie Batterien oder Akkus, insbesondere über Solarzellen aufgeladene Akkus energieversorgt sind.

Es können Wechselschaltungen aufgebaut werden, bei denen ein Leuchtmittel oder dergleichen an nur eine Leistungssteuervorrichtung angeschlossen ist, aber von einer Mehrzahl Schalter eine Helligkeitsveränderung ermöglicht ist. Ein dazu verwendetes, zusätzliches, nicht selbst an Leuchtmittel angeschlossenes Wechsel-Schaltmittel kann selbst aus dem Lichtnetz mit Energie versorgt sein oder aber es können andere Energiequellen wie Batterien vorgesehen sein, um die erforderlichen (Bluetooth-)Steuersignale erzeugen zu können.

Zudem erlaubt die Kommunikation von Leistungssteuervorrichtungen eines Systems untereinander, eine Sicherheit etwa gegen Einbruch zu gewährleisten, indem Schalt-Muster in per se bereits beschriebener Weise überwacht werden, zusätzliche Sensorsignale wie von Erschütterungssensoren an Fensterscheiben usw. übertragen werden und dergleichen.

Ein besonderer Vorteil ist dann gegeben, wenn die Leistungssteuervorrichtung dazu ausgebildet ist, regelmäßig mit anderen Leistungssteuervorrichtungen eines Systems drahtlos zu kommunizieren. Um zu überwachen, dass dies der Fall ist, können Maschen-Netzwerke aufgebaut werden, entlang solcher Netzwerke per Funk Herzschlagsignale (Heartbeat-Signale) übertragen werden und dergleichen. (Als Herzschlagsignal wird ein Signal verstanden, an welchem eine Gegenstelle erkennt, dass der Sender noch funktioniert.) Erfolgt ein Einbruch, so wird dies etwa zum Ansprechen von Glasbruchsensoren und somit zu entsprechenden Signalen führen und dies kann wiederum ein Grund für Eindringlinge sein, die Signalübertragung zwischen einzelnen Leistungssteuervorrichtung möglichst bereits im Vorfeld zu stören, d.h. die Übertragung zu "jammen".

Oftmals ist es ausreichend, wenn Leistungssteuervorrichtungen untereinander bzw. mit Sensoren ein bis zehnmal pro Sekunde kommunizieren, gegebenenfalls sogar seltener wie alle 2,3,4,5 oder 10 Sekunden. Eine unter den genannten Häufigkeiten häufigere Kommunikation wie mehrfach pro Sekunde ist dort bevorzugt, wo mit sehr schnellen Überwindungen eines Sicherheitssystems gerechnet werden muss, sehr schnell auf kritische Bedingungen reagiert werden muss oder soll und die für die Kommunikation zweifelsfrei erforderliche Energie nicht kritisch ist, etwa weil batteriebetriebene Sensoren mit sehr großen Batterien, die trotz häufiger Kommunikation lang halten, aufgebaut werden können. In anderen Fällen, also dort, wo der Energieverbrauch kritischer bewertet wird und die Reaktionsgeschwindigkeit nicht sonderlich kritisch ist, kann eine Herzschlagsignal-Kommunikation einmal pro Sekunde oder alle paar Sekunden ausreichen. Dazu sei aber darauf hingewiesen, dass im Regelfall die Signalübertragung zwischen etwa einem an einer Fensterscheibe montierten Sensor und einem Netzwerk, an das die verschiedenen Leistungssteuervorrichtungen angeschlossen sind oder das diese aufbauen, drahtlos erfolgen wird. Es wird einzuschätzen sein, dass ein Einbrecher Interesse daran besitzt, diese Übertragung zu stören, weshalb per se die Übertragung von Herzschlagsignalen sinnvoll ist, weil dann die Störung erkannt wird und gegebenenfalls darauf reagiert werden kann. Erfolgt jetzt die Erfassung sogenannter Herzschlagsignale, also einer kurzen Übertragung überwachender und ein einwandfreies Funktionieren signalisierender Informationen, zu selten, kann es sein, dass ein potentieller Eindringling nicht nur die Signalübertragung gestört hat, sondern bereits begonnen hat, durch Zerstörung von Fenstern, Türschlössern usw. Schaden anzurichten und/oder bereits zum Teil eingedrungen ist. Dies kann im Vorfeld unterbunden werden, wenn auf Ausbleiben eines Herzschlagsignals unmittelbar beispielsweise Licht angeschaltet, evtl. aber noch kein Alarm gegeben wird, und die Herzschlagsignale kurzfristig erfasst werden. Damit kann auch dem Einbrecher signalisiert werden, dass sein Einbruchsversuch bereits erkannt wurde, was oftmals hinreichend abschreckend ist.

Die Kommunikation von Signalen in einem sicherheitsrelevanten System folgt typisch - und insoweit bevorzugt auch hier- einem Quittierungs-Protokoll, d.h. eine Übertragung wird typisch so lange wiederholt, bis eine bestimmte Gegenstelle ein Signal quittiert hat. Ein Glasbruchsignal wird daher ohne Quittierung im Regelfall so lange wiederholt, bis entweder die übertragende Leistungssteuervorrichtung zerstört ist oder eine Störung, d.h. z.B. eine Jam-Unterbrechung beendet wurde. Damit müssen von einem Einbrecher bewirkte Kommunikationsunterbrechungen vergleichsweise lange andauern, um den gewünschten Erfolg zu zeitigen. Nun werden zwar in einem System mit einer Vielzahl von Einheiten, die über Funksignale kommunizieren, wie bevorzugt die Leistungssteuervorrichtungen, immer wieder Signalausfälle und Signalstörungen auftreten, es wird aber einzuschätzen sein, dass derartige Störungen, die etwa durch Einstreuungen oder dergleichen verursacht werden, kurzfristig sein werden. Damit kann durch Ermittlung typischer Störungsmuster ohne Einbruch ein Störungsmuster bei Einbruch und mit einer zum Einbruch einhergehender Kommunikationsunterdrückung gut unterschieden werden.

Als Quittierung kann akzeptiert werden, wenn wenigstens eine Gegenstelle den Erhalt des Signals quittiert hat. Typisch wird aber gefordert, dass mehrere oder alle erreichbare Gegenstellen das Signal quittieren. Gegebenenfalls kann vorgesehen werden, dass nur die Quittierung von einer bestimmten oder mehreren bestimmten quittierenden Gegenstellen als ausreichend akzeptiert wird.

Es sei darauf hingewiesen, dass die Bereitstellung eines Gateways für die WLAN-Kommunikation in einem System aus Leistungssteuervorrichtungen der Erfindung aus mehreren Gründen sinnvoll und vorteilhaft ist. So kann ein Benutzer eine Leistungssteuervorrichtung mit höherer Bandbreite ansprechen, wenn diese WLAN-fähig ist und somit schnell Konfigurationssignale oder dergleichen an ein System übertragen.

Es wird einsichtig sein, dass eine Leistungssteuervorrichtung der Erfindung, um als Gateway für die WLAN-Kommunikation dienen zu können, einerseits eine WLAN-Schnittstelle besitzt, um darüber Signale austauschen zu können, und eine weitere Schnittstelle zur Kommunikation mit einem anderen Standard wie Bluetooth oder dergleichen. Es wird ein Mittel vorhanden sein, um gemäß einem Protokoll empfangene Daten auf das andere Protokoll umzusetzen und gemäß diesem an entsprechende Empfänger zu übertragen.

Zudem erlaubt die Anbindung über WLAN auch, durch Identifikation des Gerätes und/oder des verwendeten Netzes bestimmte Funktionalitäten freizugeben oder zu sperren; beispielsweise kann das Konfigurieren eines Systems über einen WLAN-Gastzugang untersagt sein.

Dort, wo ein Maschen-Netzwerk aufgebaut wird, ist es ohne weiteres möglich, Master-Geräte und Slave-Geräte zu definieren. Dort, wo sowohl ans Lichtnetz angeschlossenen Geräte vorliegen als auch für reine Betätigung ohne eigene Leistungsdurchschalt-Funktion vorhandene Netzwerkknoten im Maschen-Netzwerk vorgesehen sind, werden typisch die Mastergeräte jene sein, die tatsächlich an Wechselstromnetzen angeschlossen sind. Dabei können Mastergeräte insbesondere in der Lage sein, an Slave Geräte Konfigurationsdaten und/oder Schaltfläche zu übertragen.

Es sei darauf hingewiesen, dass auch unmittelbar an das Lichtnetz angeschlossene Leistungssteuervorrichtungen gegebenenfalls mit Batterien oder Akkumulatoren versehen sein können, um bei Stromausfall noch eine Restfunktionalität zu gewährleisten und insbesondere eine Einbruchssicherheit zu erhöhen. In einem solchen Fall kann eine Batterie dazu dimensioniert sein, dass etwa ein akustischer bzw. optischer Signalgeber angesteuert werden kann, falls bei Stromausfall Bedingungen erfasst werden, die auf einen Einbruch hindeuten.

Dass auf diese Weise auch Zeitgeber wie Uhren, Zähler und dergleichen unter Stromausfallbedingungen leistungsversorgt werden können, sei erwähnt. Wird erfasst, zu welchem Zeitpunkt ein Stromausfall aufgetreten ist, was mit geringem Aufwand möglich ist, kann insbesondere die Dauer eines Stromausfalls bestimmt werden und somit erfasst werden, ob es sich bei einem Stromausfall um ein Brown-out handelt oder nicht.

Die Anordnung ist für große Lasten geeignet. Ob eine Last als groß anzusehen ist, wird von der jeweiligen Leistungssteuervorrichtung abhängen. Abhängig von verwendeten Bauteilen und dergleichen wird die an eine Last zu speisende Leistung unterschiedlich groß sein. Eine Last ist jedenfalls dann groß, wenn sie die zulässige Leistung in einem Kanal überschreitet. Typisch kann es sinnvoll sein, bereits bei Annähern an die Leistungsgrenze von einer großen Last auszugehen, also etwa bei 70,80 oder 90% der zulässigen Maximalleistung von einer großen Last zu sprechen. In Fällen, in denen absehbar ist, dass eine Last wie beispielsweise eine Lampe nie vollständig erregt wird, sondern stets mit reduzierter Leistung betrieben sein wird, kann eine Last auch erst dann als groß angesehen werden, wenn die maximal zulässige Last geringfügig überschritten wird. Bevorzugt wird aber eine große Last bereits dann angenommen, wenn die Nominallast bei der Maximallast oder geringfügig darunter liegt. Wird von einer großen Last schon ausgegangen, bis die Nominalleistung der Last von 1, 5 bis 10 % unter der Maximalleistung je Kanal liegt, so wirken sich Abweichungen von der Nominallast kaum oder gar nicht aus. Es kann vielmehr jederzeit vom Einhalten der sicheren Betriebsbedingungen ausgegangen werden.

Es ist ohne weiteres möglich, Lasten, die in unterschiedlichen Leistungssteuervorrichtungen angeschlossen sind, zu einer gemeinsamen großen Last zu koppeln. Dazu sind lediglich entsprechend übereinstimmende Ansteuerungssignale an mehreren Kanälen auszugeben. Dies könnte einerseits innerhalb einer einzigen Leistungssteuervorrichtung und somit innerhalb einer Unterputzdose erfolgen; es ist aber auch möglich, mehrere separat an unterschiedliche Leistungssteuervorrichtungen angeschlossene Lichtquellen zu koppeln. Dazu können z.B. von einer Leistungssteuervorrichtung entsprechende Steuersignale an andere Leistungssteuervorrichtungen ausgegeben werden, um von den dortigen Kontrollanordnungen dann umgesetzt zu werden. Eine Zusammenschaltung ist somit besonders einfach. Ein gemeinsamer Betrieb ist aber auch durch Betätigung einer Mobileinheit möglich, die mit mehreren Leistungssteuervorrichtungen (etwa nacheinander) zur Befehlsübertragung kommuniziert. Hilfreich ist es, wenn die Position einer Mobileinheit bestimmt werden kann. Die bevorzugte Triangulation eines beweglichen Bluetoothsenders erlaubt es, verschiedene Feststellungen vorzunehmen, etwa dahingehend, ob ein aktuelles Schaltmuster dem typischen Muster für einen Benutzer entspricht, der dem von ihm mitgeführten mobilen Bluetoothsender zugeordnet ist, oder dahingehend, ob eine bestimmte Person im Raum ist, was z.B. in Büros sinnvoll ist, um gewünschte Grundeinstellungen für einen Benutzer vornehmen zu können, und/oder um den Benutzer per se zu detektieren, was gerade bei älteren Personen hilfreich ist.

Es sei darauf hingewiesen, dass Schalter vorgesehen werden können, die (Funk-) Steuersignale weitergeben, ohne selbst an das Lichtnetz angeschlossen zu sein. In einem solchen Fall ist es gegebenenfalls auch möglich, bekannte Mittel zum "Energieharvesting" zu verwenden. Dass auch nicht über eigene Tastfelder oder dergl. bedienbare Leistungssteuervorrichtungen vorgesehen werden können, die über Funk Betätigungssignale erhalten, sei erwähnt. Dies ist z.B. für die Nachrüstung von Rolladen-Antrieben und dergl. vorteilhaft, aber auch für andere elektrische Verbraucher.

Bei den hier beispielhaft herangezogenen Rolladenantrieben ist es zwar häufig vergleichsweise leicht möglich, an einen Rollladenkasten noch Wechselspannung zu führen, weil etwa nahe der Fenster in Ecken des Raumes Steckdosen vorgesehen sind und nur von einer Steckdose noch ein zusätzliches Kabel entlang oder innerhalb der Wand geführt werden muss; die Bedienung an vorgesehenen Stellen erfordert aber gegebenenfalls nach herkömmlicher Technik das Ziehen von Steuerleitungen zwischen Rollladenantrieb und Schalter. Indem in einem Rollladenkasten eine erfindungsgemäße Leistungssteuervorrichtung verwendet wird und diese drahtlos mit einem Gegenstück kommuniziert, das bei einem bereits vorhandenen Lichtschalter angeordnet wird, beispielsweise durch Umrüstung eines vorhandenen Einfachschalters zu einem Doppelschalter und Konfiguration des Dimmers dergestalt, dass bei Betätigung des zusätzlichen Schalters ein Funksignal zum Rollladenantrieb abgesetzt wird, kann eine Nachrüstung vereinfacht werden. Wo eine derartige Bedienung nicht möglich ist, kann über EnergieHarvesting eine große Freiheit bei der Schalter-Portionierung erreicht werden.

Es ist vorteilhaft, wenn bei einer erfindungsgemäßen Leistungssteuervorrichtung zusätzlich und/oder alternativ wenigstens ein zusätzlicher Sensor vorgesehen ist oder die Leistungssteuervorrichtung dazu ausgebildet ist, mit einem Sensor bzw. dessen Beschaltung zu kommunizieren, wobei der Sensor ausgewählt ist aus der Gruppe Temperatursensor, bevorzugt Temperatursensor zur Erzeugung von auf die Temperatur der Leistungssteuervorrichtung bezogenen Temperatursignalen, wobei dann die Kontrollanordnung bevorzugt dazu angeordnet ist, bei Erreichen bestimmter Temperaturen eine Umsteuerung vorzunehmen weg von einem Soll-Wert für die Leistungsausgabe gemäß Benutzervorgabe hin zu einem unter Temperatur-Aspekten noch akzeptablen Ist-Wert, insbesondere zur Begrenzung einer abgedimmten Leistung eines Einzelkanals oder mehrerer Kanäle, und induktiver bzw. Magnet-Sensor, bevorzugt Hall-Sensor, zur Erfassung der Stärke eines Magnetfeldes an der Unterputzdose, bevorzugt mit einer Genauigkeit, die bei türnaher Montage der Leistungssteuervorrichtung und Anbringung eines Magneten an einem Türblatt eine Unterscheidung einer geschlossenen von einer offenen Türstellung, besonders bevorzugt zusätzlich auch einer angelehnten und/oder einer halboffenen Türstellung ermöglicht, und/oder Vibrations- und/oder Schock- und/oder Beschleunigungs- und/oder Drucksensoren, bevorzugt zur Einbruchserkennung.

Vibrations-Schock-bzw. Beschleunigungs-und/oder Drucksensoren sind insbesondere an Fenstern bzw. in Fensternähe sinnvoll einsetzbar. Bei Fensterflügeln kann es über die Zeit zu unterschiedlichen Bewegungsmustern kommen. Typisch werden Fensterflügel vergleichsweise langsam geöffnet. Dazu wird der Fenstergriff betätigt, was durch die Wechselwirkung des Riegels mit dem Rahmen geringfügige Vibrationen über einen sehr kurzen Zeitraum bewirkt. Dann wird der Flügel verschwenkt, was eine langsame Beschleunigung bis zum Erreichen einer Endstellung ergibt. Umgekehrt sind die Beschleunigungsmuster bzw. Bewegungsmuster bei vorsichtigem Schließen. In einem ebenfalls unkritischen Fall kann es zum Zuschlagen durch Wind eines geöffneten Fensters kommen. In diesem Fall wird eine große Beschleunigung und eine nachfolgende, vergleichsweise heftige Vibration am Rahmen auftreten. Die dabei auftretenden, mit Beschleunigungssensoren erfassbaren Muster lassen sich gut unterscheiden von scharfen Stößen gegen das Fenster, die beim Einschlagen auftreten, oder von Vibrationen, die auftreten, wenn Bohrer an Rahmen oder Fenster angesetzt werden. Der Fachmann wird ohne weiteres in der Lage sein, für diese verschiedenen Bedingungen Signalmuster mit einem Beschleunigungsmesser, gegebenenfalls bevorzugt mehrachsigen Beschleunigungsmesser aufzunehmen und anhand des Signalverlaufs und/oder des Spektrums kritische von unkritischen Betätigungen zu unterscheiden. Dabei wird er berücksichtigen, dass etwa eine große Scheibe ein anderes Spektrum und andere Bewegungsmuster für eine unkritische Betätigung ergeben wird als kleine Fensterflügel, ein Kippen andere Beschleunigungsmuster hervorbringt als ein schwenkendes Öffnen eines Hügels und zudem unterschiedliche Rahmen wie Kunststoff,- Holz- oder Aluminiumrahmen sowie Verbundrahmen unterschiedliche Muster ergeben werden. In einer besonders bevorzugten Variante werden typische Muster hinterlegt, die als unkritisch für bestimmte Typen von Fenstern bestimmt wurden, so dass bei einer Installation gegebenenfalls allenfalls noch eine Auswahl unter diesen zu treffen ist, ohne dass bei Installation noch Messungen erforderlich wären.

Was die Verwendung von Drucksensoren zur Einbruchskennung angeht, so wurde vorgeschlagen, in Gebäuden, in welchen sämtliche Fenster und Türen geschlossen sind, aus einer bestimmten Druckveränderung auf einen Einbruchversuch zu schließen. Druckveränderungssignale sind auch vorliegend auswertbar.

Es sei erwähnt, dass gegebenenfalls einzelne Sensoren Signale erfassen können, die per se auf einen Einbruch oder dergleichen hindeuten könnten; beispielsweise kann eine Druckänderung auftreten, weil ein Bewohner einer Wohnung ohne Deaktivierung der Alarmanlage ein Fenster geöffnet hat. In gleicher Weise kann an einer Fensterscheibe ein Schlag etwa dann auftreten, wenn ein großer Vogel dagegen geflogen ist. Beides könnte für sich zu einem Fehlalarm führen; soweit gefordert wird, was besonders bevorzugt ist, dass mehrere unabhängige Sensoren in charakteristischer Weise simultan ansprechen, können Fehlalarme vermieden werden, die Akzeptanz von Alarmanlagen somit erhöht und die Sicherheit für Benutzer demgemäß verbessert werden. Dies wird typisch dadurch erreicht, dass Regeln definiert werden, welche Sensoren, gegebenenfalls in welcher Reihenfolge bzw. innerhalb welcher Intervalle nacheinander oder zeitlich beieinander ansprechen müssen, um von einem Einbruch oder dergleichen auszugehen. Die entsprechenden Regeln können übertragen werden auf alle Einzelsensoren und/oder Leistungssteuervorrichtungen, die erreichbar sind, was dann sinnvoll ist, wenn die einzelnen Sensoren und Leistungssteuervorrichtungen alle untereinander Signale austauschen, oder es können einzelne Mastereinheiten vorhanden sein, die über eine Alarmauslösung eigenständig im Ansprechen auf entsprechende Signale reagieren. Es sei erwähnt, dass gegebenenfalls auch eine Alarmauslösung Temperaturänderungen berücksichtigen kann. Die Verwendung von Temperatursensoren eröffnet somit eine Vielzahl von Möglichkeiten. Einerseits ist z.T. eine Regelung der Raumtemperatur möglich; es ist aber auch in besonders warmen oder kalten Gegenden, wo Klimaanlagen betrieben werden oder sehr stark geheizt wird, möglich, vor Temperaturänderungen in einem Raum zu warnen und/oder gegebenenfalls sogar auf Eindringlinge zu schließen. Es ist insbesondere bevorzugt, wenn Temperatursensoren so angeordnet werden, dass auf die Temperatur der Leistungssteuervorrichtung und/oder von Teilen derselben insbesondere auf die Temperatur oder Verlustleistung der Leistungshalbleiter geschlossen werden kann.

Es sei darauf hingewiesen, dass die Temperatur der Leistungshalbleiter für die Gesamtlebensdauer bestimmend sein kann und es ist bevorzugt, deutlich unterhalb der Zerstörungsgrenzen, wie sie etwa in sicheren Betriebsbereichen ("safe operating area") definiert sind, ein Herunterregeln der in der Leistungssteuervorrichtung erzeugten Temperatur vorzusehen. Dies erhöht einleuchtender Weise die Betriebsdauer und die Betriebssicherheit.

Zu beachten ist, dass bestimmte Dimm-Einstellungen zu besonders hohen Verlusten durch den Phasenan- bzw. Abschnitt führen. Es kann daher sinnvoll und bevorzugt sein, bei zu hohen Temperaturen die eigentlich von einem Benutzter gewünschte gedimmte Leistung zu verändern, was sowohl im Sinne einer Verringerung der an eine Last abgegebenen Leistung als auch, erforderlichenfalls und je nach Betriebsbedingungen, durch Heraufsteuern, also Erhöhung der somit weniger gedimmten Leistung der Fall sein kann.

Als zu hohe Temperatur wird eine Temperatur angesehen, die einen bestimmten Schwellwert überschreitet. Dieser Schwellwert ist bevorzugt vom Hersteller vorzugeben und kann gegebenenfalls allenfalls hin zu niedrigeren Temperaturen durch Konfiguration geändert werden. Erwähnt sei nun, dass bei einem Dimmer vorteilhaft der durch einen Shunt fließende Strom gemessen werden kann und daraus eine Abwärmeleistung durch Summenbildung ermittelt werden kann. Damit ergibt sich eine besonders genaue Bestimmung der in einem Dimmer gegebenen Verlustleistung, insbesondere, wenn die Leistungsaufnahme weiterer Verbraucher in dem Dimmer wie Microcontrollertakt, ggf. Einstellung von Audioverstärkern und/oder zusätzlich berücksichtigt werden.

Es ist überdies vorteilhaft, einen induktiven bzw. Magnetfeldsensor vorzusehen, um mit diesem eine Türblatt-Stellung zu ermitteln. In einem Türblatt kann etwa ein Dauermagnet vorgesehen sein, der sich ohne weiteres etwa von der Randkante des Türblattes aus in das Türblatt hinein versenken lässt und/oder in einem Schlosskastenprofil angeordnet werden kann. Durch die Verwendung besonders starker Magnete wie Neodym-Magnete können mit kleinen Magneten starke Magnetfelder erzeugt werden, die sich durch Hallsensoren oder dergleichen noch ohne weiteres in einer Unterputzdose nahe der Türe erfassen lassen.

Insbesondere dann, wenn im Türrahmen Weicheisenteile nahe eines in einem Türblatt angebrachten Magneten vorgesehen sind, kann eine geöffnete von einer geschlossenen Türstellung gut unterschieden werden. Gegebenenfalls kann, gerade bei Vorsehen von polschuhartigen Weicheisenteilen nahe eines im Türblatt versenkten Magneten oder dergleichen, auch eine vollständig geschlossene von einer nur angelehnten Türstellung unterschieden werden und/oder eine vollständig offene Türe von einer halboffen stehenden Türe unterschieden werden, wobei halboffen als ausreichend zu verstehen ist, dass zumindest kleine Personen wie Kinder in einen Raum eindringen können und/oder eine signifikante Abkühlung beheizter Räume befürchtet werden muss. Es sei hier erwähnt, dass ein Anlernmodus ohne weiteres möglich ist, so dass eine jeweilige bauliche Situation, die zu türstellungsabhängig variierenden Signalen führt, gut durch Kalibrierung der in wichtigen Türstellungen erfassbaren Magnetfelder oder dergl. zu berücksichtigen ist.

Es sei erwähnt, dass eine Türstellung wie geschlossen, halboffen usw. insbesondere auch erfasst werden kann durch geeignete Sensoren wie Beschleunigungssensoren, die ein Einfallen des Türblattes in den Falz und/oder Geräuschsensoren zur Erfassung einer Türklinkenbetätigung und/oder Drucksensoren zum Erfassen einer bei Türschließen den Räumen oftmals beobachteten Druckwechsels verwendbar sind, usw..

Dass eine Unterputzdose für die erfindungsgemäße Vorrichtung gerade in Neubauten dicht genug an einem Türdurchgang angebracht werden kann, um ohne weiteres Magnetfelder von an oder in einem Türblatt, einem Schlosskastenprofil oder dergleichen vorgesehenen Magneten nachweisen zu können, sei erwähnt. Es sei auch erwähnt, dass die Sensoren unmittelbar in der Leistungssteuervorrichtung vorgesehen sein können und/oder eine oder mehrere Schnittstellen für Sensorelemente wie Drucksensoren, Vibrationssensoren, Beschleunigungs- bzw. Bruchsensoren vorgesehen sein können, wie sie an Fensterscheiben zur Einbruchserkennung verwendet werden. Die eigentlichen Sensorelemente, die an Fenstern, Fensterrahmen, Türen oder dergl. angeordnet werden, können z.B. batteriebetrieben sein.

Es wird z.B. darauf hingewiesen, dass bestimmte Drucksensoren verwendet werden können, um angeblich bei geschlossenen Außenhüllen auf Einbrüche hinweisende Druckänderungen zu erfassen. Es sei auch angemerkt, dass solche Sensoren einleuchtender Weise auch für eine Leistungssteuervorrichtung der vorliegenden Erfindung vorgesehen sein können, falls diese zur Einbruchserkennung, Alarmierung usw. verwendet werden soll.

Es ist vorteilhaft, wenn bei einer erfindungsgemäßen Leistungssteuervorrichtung zusätzlich und/oder alternativ vorgesehen ist, dass eine von der Strommessung unabhängige Kurzschlussabschaltung vorgesehen ist, um unabhängig von einer Strommessung und Auswertung eines Stromess-Signals in der Kontrollanordnung eine separate Kurzschlussabschaltung zu ermöglichen.

Die Ausbildungsform, worin eine Kurzschlussabschaltung unabhängig von der Strommessung vorgesehen ist, d.h. eine Kurzschlussabschaltung unter Umgehung eines Mikrokontrollers unmittelbar zu einer Unterbrechung der Leistungszufuhr zu einer gegebenen Last führt, ist vorteilhaft, weil sie die Versagenssicherheit des Systems erhöht, etwa gegen Versagen des Mikrokontrollers.

Vorbeschrieben war auch, dass in einem Dimmer je Kanal eine analoge Strommessung an einem Shuntwiderstand vorgesehen ist, wobei jedem Kanal bevorzugt ein dedizierter Analog-/Digitalkonverter zugeordnet ist.

Es sei erwähnt, dass der Begriff Dimmer zwar oftmals umgangssprachlich nur bezogen wird auf eine Lichthelligkeitssteuerung, dass aber hier allgemeiner auf eine Leistungssteuervorrichtung bzw. Leistungsregelvorrichtung Bezug genommen wird, die Begriffe also durchgehend im vorliegenden Schutzrecht austauschbar sind, sofern nichts anderes ersichtlich ist.

Weiter wurde beschrieben, dass in der vorbekannten Anordnung ein Überstrom- bzw. ein Kurzschlussdetektionsmittel vorgesehen ist, wiederum für jeden der beiden Kanäle. Es wurde im Übrigen angegeben, dass mehr als zwei Kanäle implementierbar sind und wie dies möglich ist, so dass sich versteht, dass dort, wo vorliegend auf zwei Kanäle oder "beide" Kanäle Bezug genommen wird, im allgemeinen ggf. auf entsprechend mehr Kanäle Bezug genommen werden könnte. Die erwähnten vorbekannten Überstrom- bzw. Kurzschlussdetektionsmittel sind dazu ausgebildet, einen Kurzschlussstrom zu erfassen, bevorzugt zur Sicherstellung eines versagenssicheren Verhaltens auch dann, falls am Microcontroller des Dimmers Probleme auftreten. Vorteilhaft ist, wenn zunächst festgestellt wird, wann bzw. ob ein zu hoher Strom fließt. Vorteilhaft ist dabei auch, wenn ein Kurzschluss erst dann festgestellt wird, nachdem zu oft ein zu hoher, d.h. gemäß vorgegebenen Grenzwerten her nicht vorgesehener Strom vom Endverbraucher auf wiederholtes Einschalten abgerufen wurde.

Offenbart wird weiter ein Dimmer mit einem Überstrom-bzw. Kurzschlussdetektionsmittel und einer kurzfristigen Überstromabschaltung, wobei dieser so ausgestaltet ist, dass ein Zähler zum Zählen von Überstromereignissen als vermeintlichem Kurzschluss vorgesehen ist und das Überstrom-bzw. Kurzschlussdetektionsmittel dazu ausgebildet ist, einen tatsächlichen Kurzschluss erst nach einer Anzahl vermeintlicher Kurzschlüsse festzustellen. Die Anzahl vermeintlicher Kurzschlüsse, die erreicht sein muss, damit von einem tatsächlichen Kurzschluss ausgegangen wird, wird typisch etwa 100-120 vermeintlichen Kurzschlüssen betragen. Dies entspricht einem etwa zweisekündigen Versuch, einen Verbraucher anzuschalten, wenn dort wiederholt jedes Mal ein Kurzschluss auftritt. Die angegebene Zeit von 1 bis 2 Sekunden reicht im Regelfall für Glühlampen und dergleichen aus, um deren Glühwendel soweit zu erwärmen, dass kein vermeintlicher Kurzschluss mehr auftritt. Dort, wo auf besonders geringe Netzstörungen Wert gelegt wird, etwa, um IT-Systeme nicht zu stören, kann die Zeit verkürzt werden. Gegebenenfalls kann auch nach dem Einschalten eine bestimmte Dauer abgewartet werden, innerhalb derer ein Überstromereignis nur als vermeintlicher, nicht jedoch als tatsächlicher und insbesondere nicht als tatsächlicher Kurzschluss angesehen wird. Es sei erwähnt, dass anstelle eines Zählers zum Zählen von Überstromereignissen allgemein ein Integrator zum Integrieren von Werten vorgesehen sein kann, um bis zu einem Grenzwert zu integrieren, unterhalb von welchem ein vermeintlicher Kurzschluss noch nicht als tatsächlicher Kurzschluss aufgefasst wird, und dass das Überstrom- bzw. Kurzschlussdetektionsmit-tel dazu ausgebildet sein kann, einen tatsächlichen Kurzschluss erst festzustellen, wenn der Integrator bis zu dem Grenzwert integriert hat. Als integrierte Werte kann die Gesamtzahl aufgetretener Überstromereignisse, insbesondere seit Einschalten betrachtet werden; gleicher Weise alternativ und/oder zusätzlich kann eine Zeitdauer festgelegt sein, unterhalb von welcher nach Einschalten ein Überstromereignis regelmäßig noch nicht als Kurzschluss erfasst wird. Es ist möglich, eine bestimmte Anzahl von Überstromereignissen auch lange nach dem Einschalten zuzulassen, etwa um Überströme, die bei stark schwankenden Netzen, in denen durch Schwankungen der Eingangsspannung auch nach oben auftreten, nicht als Kurzschluss klassifizieren zu müssen.

Der Integrator oder Zählwert kann bei jedem Einschalten zurückgesetzt werden und/oder zurückgesetzt werden, wenn während einer längeren Betriebsphase keine vermeintlichen Kurzschlüsse beobachtet werden. Typisch wird eine solche längere Betriebsphase, die zu einem Zurücksetzen oder allmählichen Abklingen eines Zählerwertes fühlt, wenigstens 1, bevorzugt wenigstens 5, weiter bevorzugt wenigstens 10, insbesondere bevorzugt wenigstens 30 Minuten betragen. Diese Zeiten stellen sicher, dass seltene Überstromereignisse nicht zu einem dauerhaften Abschalten eines Kanals führen.

Während vorstehend von einem Integrator oder einem Zähler zum Zählen von Ereignissen gesprochen wurde und typisch eine bestimmte Anzahl oder ein bestimmter Integrationswert überschritten werden muss, um einen tatsächlichen Kurzschluss anzunehmen, was typisch als eine Addition von positiven Werten erfolgt, ist es ebenso möglich, ein Herunterzählen zu veranlassen und/oder eine Integration negativer Werte. In einem solchen Fall wird z.B. bis Null heruntergezählt.

Es ist möglich, als Grenzwert für die maximal zulässige Kurzschlusszahl bzw. die maximal zulässige Zeit zwischen Einschalten und als noch unkritisch zu erkennendem Verhalten sämtliche oder zumindest wesentliche der zuvor aufgetretenen überstromindikativen Werte bzw. deren Häufigkeit abzuspeichern. So kann etwa bei Einschalten einer Glühbirne Bezug darauf genommen werden, ob dieselbe Glühbirne zuvor schon einmal eine Vielzahl von Überstromereignissen produziert hat. Dies kann zu einem allmählichen Anheben der Grenzwerte verwendet werden, indem in einem Fall, in welchem eine Vielzahl von Überstromereignissen auftritt, aber der Grenzwert noch knapp unterschritten wird, oberhalb von welchem ein tatsächlicher Kurzschluss angenommen wird, dann dieser Grenzwert erhöht wird. Dies ist insofern sinnvoll, als davon auszugehen ist, dass gegebenenfalls die Anzahl vermeintlicher Kurzschlüsse variieren kann, aber die Tatsache, dass viele vermeintliche Kurzschlüsse aufgetreten sind, ohne dass ein tatsächlicher Kurzschluss festgestellt werden musste, darauf hindeutet, dass die große Zahl vermeintlicher Kurzschlüsse tatsächlich unkritisch ist.

Dass nach längerem Betrieb die Anzahl maximal zulässiger Überstromereignisse reduziert werden kann, weil jedenfalls kein Einschaltverhalten mehr beobachtet wird, sei als bevorzugt erwähnt.

Die Kurzschlußdetektion erlaubt es, Lasten wie beispielsweise Glühbirnen, die anfänglich einen sehr hohen, aber eben nicht auf Fehlfunktionen hinweisenden Strom zulassen, wiederholt einzuschalten, um dann aufgrund des initial bis zum Sicherheitsabschalten während eines Phasenanschnittes fließenden Stromes und die damit bewirkte Erhöhung eines Glühwendelwiderstandes o.ä. eine Inbetriebnahme zuzulassen, ohne dass sofort eine dauerhafte Sperrung wegen Kurzschluss bzw. vermeidlichen Kurzschluss veranlasst werden muss. Dabei ist zu beachten, dass eine Überstromabschaltung demnach einerseits kurzfristig, beispielsweis je Halbwelle erfolgt, aber ein tatsächlicher Kurzschluss erst nach einer Anzahl initial vermeintlicher Kurzschlüsse festgestellt wird. Erst wenn eine solche initiale Anzahl an offensichtlichen Überstromereignissen festgestellt wurde, braucht die Kurzschlussdetektion greifen, ohne dass weitere Ströme an das Kurzschlussgerät gespeist werden sollen. Dies erlaubt es insbesondere auch, ggf. auf tatsächliche Kurzschlüsse hinzuweisen, z.B. durch Absetzen eines entsprechenden Signals, ohne dass Fehlalarmierungen bzw. Fehlsignale zu oft auftreten. Dies ist für die Instandhaltung großer, komplexer Systeme wie Beleuchtungen in großen Hotels oder dergl. sehr vorteilhaft.

Zudem wird vermieden, dass mit jeder Halbwelle immer wieder kurz überprüft werden muss, ob tatsächlich ein Kurzschluss vorliegt. Dies wiederum ist vorteilhaft, weil kurze häufige Strompulse auf den Netzleitungen vermieden werden können. Der Dimmer ist somit störungsärmer. Es sei erwähnt, dass der vorbekannte Dimmer zum Zählen der Zahl vermeintlicher Kurzschlüsse einen Zähler aufweisen kann. Es sei auch darauf hingewiesen, dass die Anzahl zugelassener vermeintlicher Kurzschlüsse insbesondere beim Einschalten höher sein kann, als in einem Zustand, bei dem schon über geraume Zeit ein Strom geflossen ist. Damit wird insbesondere das Anschaltverhalten verbessert und es sei auch darauf hingewiesen, dass dann, wenn ein vermeintlicher Kurzschluss in einer unmittelbar zurückliegenden Phase oder einige Phasen zuvor festgestellt wurde, probeweise der an die Last gespeiste Strom verringert werden kann. Dies hat etwa bei Glühbirnen den Vorteil, dass ein Überstrom vermieden wird, der zu einem sofortigen Abschalten zwecks Vermeidung einer Dimmerbeschädigung während der jeweiligen stromleitenden Zeitphase führen soll, demnach eine längere Stromspeisedauer während einer Halbwelle möglich ist, demnach der Verbraucher wie eine Glühbirne länger Strom erhält und demgemäß der eine Fehlfunktion durch vermeintlichen Kurzschluss vorgaukelnde Einschaltzustand schneller überwunden wird.

Es wurde also als vorteilhaft erkannt, wenn dabei zusätzlich und/oder alternativ zu dem vorstehenden vorgesehen ist, dass ein Dimmer dazu ausgebildet ist, dass eine kurzfristige Abschaltung von Überstrom je Halbwelle erfolgt.

Es wurde als vorteilhaft erkannt, wenn dabei zusätzlich und/oder alternativ zu dem vorstehenden vorgesehen ist, dass bei einem Dimmer ein Überstrom- bzw. Kurzschlussdetektionsmittel dazu ausgebildet ist, nach Einschalten des Dimmers eine höhere Anzahl vermeintliche Kurzschlüsse zu zulassen als in einem Zustand, in dem schon über geraume Zeit Strom geflossen ist.

Es wurde als vorteilhaft erkannt, wenn zusätzlich und/oder alternativ zu dem vorstehenden vorgesehen ist, dass ein Dimmer dazu ausgebildet ist, dann, wenn ein vermeintlicher Kurzschluss in einer unmittelbar zurückliegenden Phase oder einige Phasen zuvor aufgetreten ist, der an eine Last gespeisten Strom verringert wird.

Die Verringerung des an die Last gespeisten Stromes nach einer Halbwelle, in der ein vermeintlicher Kurzschluss aufgetreten ist, bewirkt, dass mit gegebenenfalls geringeren Strömen getestet werden kann, ob tatsächlich ein Kurzschluss vorliegt. Damit können in derartigen Fällen womöglich die mit dem Dimmer erzeugten Störungen auf dem Netz verringert werden.

Es wurde als vorteilhaft erkannt, wenn dabei zusätzlich und/oder alternativ zu dem vorstehenden vorgesehen ist, dass ein Dimmer dazu ausgebildet ist, einen vermeintlichen Kurzschluss festzustellen, wenn ein gemäß Grenzwerten nicht vorgesehener Strom durch einen Verbraucher fließt.

Es wurde als vorteilhaft erkannt, wenn dabei zusätzlich und/oder alternativ zu dem vorstehenden vorgesehen ist, dass ein Dimmer dazu ausgebildet ist, auf einen tatsächlichen Kurzschluss hin entsprechende Signale abzusetzen.

Die abzusetzenden Signale werden typisch an eine Zentrale übertragen, um dort auf einen tatsächlichen Kurzschluss hinzuweisen, damit eine Wartung eines Gerätes oder eine andere Reaktion erfolgen kann. Wenn die Signale an eine Zentrale oder ein Mobilteil abgesetzt werden, folgen sie typisch einem bestimmten Protokoll. Beispielsweise kann eine Position oder ein Identifikationscode mit an die Zentrale übertragen werden, und/oder ein Hinweis auf die Grö-βe der Last sowie gegebenenfalls die Ausbildung der Last als ohmsche, kapazitive oder induktive Last. Damit kann im Kurzschlussfall bereits ein Ersatzverbraucher, gegebenenfalls sogar ein Ersatzverbraucher höherer Qualität mit zum Ort des Dimmers und /oder des von ihm gesteuerten Verbrauchers mitgenommen werden.

In einer bevorzugten Variante wird der vorbekannte Dimmer einen Temperatursensor aufweisen, und einen einzelnen Microcontroller für alle Kanäle. Zwischen den Microcontroller und den Stromsteuerungen sind separate Optokoppler vorgesehen, wobei auch zu den Taster - bzw. digital Steuereingängen Optokoppler vorgesehen werden können. Es sei allerdings darauf hingewiesen, dass ggf. anstelle eines einzelnen Microcontrollers zwei separate Microcontroller je Kanal vorgesehen werden können. Wobei es dann bevorzugt ist, die beiden Microcontroller (oder bei mehr als zwei Kanälen), alle Microcontroller ggf. zu koppeln.

Die vorbekannte Dimmeranordnung erlaubt, wie aus dem unter Bezug genommenen Dokument ersichtlich und aus den vorstehenden ebenfalls bekannt, eine Rückkopplung bzw. Regelung auf erfasste Werte und eine automatische Reaktion hierauf. Es sei erwähnt, dass es, je nach Ausbildung auch auf mehrere Arten, möglich ist, dass der vorbeschriebene und/oder in den vorbekannten Dokument offenbarte Dimmer nach einem Stromausfall ggf. seinen letzten Dimmgrad bzw. seine letzte Schaltstellung wieder einnimmt. Dies ist insbesondere bei einem sogenannten Braun-Out der Fall, also einem sehr kurzfristigen Ausfall eines Stromes. Hier kann unmittelbar wieder in die richtige Helligkeitsstufe geschaltet werden. Dazu wird ein Speicher vorgesehen, indem der aktuelle Schaltzustand, d.h. der aktuelle Dimmgrad, vermerkt ist. Dieser Speicher wird stromausfallsicher implementiert.

Es ist also möglich, Werte nicht nur steuern, d.h. nicht nur bestimmte Dimmstufen oder dergleichen vorzugeben, sondern gegebenenfalls auch eine Regelung auf bestimmte Sollwerte vorzunehmen, wie beispielsweise dort, wo die Leistungssteuervorrichtung verwendet wird, um etwa zu heizen und gleichzeitig Temperatursensoren vorhanden sind. Dass in einem solchen Fall ein besonderes Regelverhalten wie eine PID-Regelung vorgesehen sein kann, sei erwähnt.

In einer weiter bevorzugten Variante wird nicht einfach der Dimmer nach einem Ausfall des Stroms bzw. ein Spannungsausfall wieder bei der letzten Dimmstufe eingeschaltet, sondern es wird auch abgefragt, wie lange ein Stromausfall gedauert hat. War etwa der Strom mehrere Stunden ausgefallen, wird oftmals nicht erforderlich sein, ein zuvor eingeschaltetes Licht sofort wieder auf die ggf. zuvor gewählte volle Helligkeit einzuschalten.

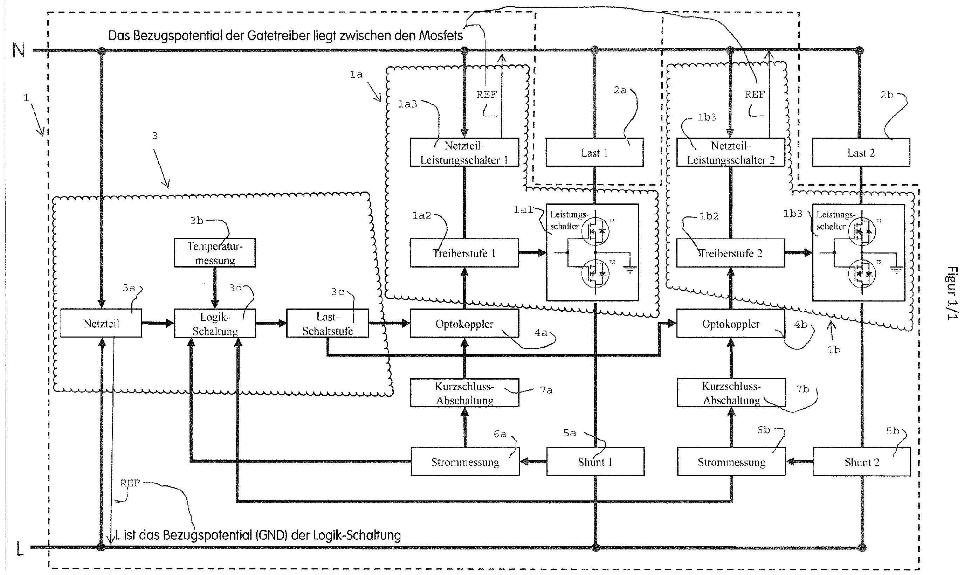

Die Erfindung wird im Folgenden nur beispielhaft anhand der Zeichnung beschrieben. In dieser ist dargestellt durch
- Figur 1: eine Leistungssteuervorrichtung der vorliegenden Erfindung, die an ein Zweiphasen-Wechselstrom-Lichtnetz angeschlossen ist und zwei separate Lasten, Last 1 und Last 2 unabhängig voneinander betreiben kann.

Nach Figur 1 umfasst eine allgemein mit 1 bezeichnete Leistungssteuervorrichtung 1 zum unabhängigen Dimmen einer Mehrzahl von Lasten, vorliegend zwei Lasten, nämlich Last 1 (auch mit Bezugszeichen 2a bezeichnet) und Last 2 (auch mit Bezugszeichen 2b bezeichnet), separate Leistungsschaltungsanordnungen 1a, 1b für die unabhängig betreibbaren Lasten 2 a 2b, wobei die Leistungsschaltungsanordnungen 1 a, 1b jeweils - hier als Mosfetpaare realisierte Leistungshalbleiter la 1 bzw. 1b1, eine Ansteuerschaltung 1a2, 1b2 , sowie jeweils eine zugeordnete Netzteilschaltung 1a3, 1b3 aufweisen.

Weiter umfasst die Leistungssteuervorrichtung 1 eine diesen gemeinsame Kontrollanordnung 3, die ebenfalls eine Netzteilschaltung 3a aufweist, wobei die Netzteilschaltungen 1a3, 1b3 für die Leistungsschaltungsanordnungen 1a, 1b von der Netzteilschaltung 3a der Kontrollanordnung 3 separate Bezugspotenziale aufweisen, wie jeweils durch die Pfeile "REF" angedeutet, die zu den entgegengesetzten Phasen des Lichtnetzes laufen

Es sind die Ansteuerungsschaltungen 1a2, 1b2 beide als Treiberschaltungen gebildet sind, welche die Leistungshalbleiter 1a1 bzw. 1b1 der Leistungsschaltungsanordnungen 1a bzw. 1b leitend oder nicht leitend steuern, wobei die Kontrollanordnung 3 über Optokoppler 4a bzw. 4b von den Ansteuerschaltungen elektrisch isoliert getrennt ist.

Die Leistungssteuervorrichtung 1 ist im vorliegenden einfachen Ausführungsbeispiel als eine in eine herkömmliche Unterputzdose einbaubare Einheit gebildet, und stellt also einen unter-putzdosenfähigen Dualdimmer dar.

Die Leistungshalbleiter - Mosfets sind hier so gewählt, dass Lasten pro Kanal von über 500 W ansteuerbar sind. Derartige Leistungen führen nur zu ohne weiteres akzeptabler, geringer Erwärmung des Dualdimmers.

Die leistungsstarke Vorrichtung ist eingangsseitig an die beiden Phasen N und L des Lichtstrom-Wechselnetzes angeschlossen und bietet für den Anschluss der Lasten 2a, 2b entsprechende Verbindungsklemmen.

Die Lasten 2a, 2b sind im vorliegenden Fall als Leuchtmittel ausgebildet, die gedimmt werden sollen.

Die Kontrollanordnung 3 umfasst einerseits einen Mikrokontroller als Logikschaltung 3d. Diesem zugeordnet ist ein Temperatursensor 3b, der ein Erwärmen der gesamten Leistungssteuervorrichtung erfassen kann, so dass erforderlichenfalls vor Ansprechen von irreversibel arbeitenden Temperatursicherungen eine Leistungsreduktion durch die Logikschaltung 3d bewirkt werden kann.

Die Kontrollanordnung erreicht das Dimmen der Lasten durch eine jeweilige Phasenschnittsteuerung. Dazu wird, je nach gewünschtem Dimmgrad bestimmt, wann die Leistungsschalter lal bzw. Ibl während einer Wechselspannungsphase leitend bzw. nichtleitend geschaltet werden müssen.

Dies kann je nach angeschlossener Last als Phasenanschnitt oder Phasenabschnitt geschehen. In der Kontrollanordnung 3 ist dazu ( nicht gezeigt) eine Referenzspannungsquelle vorgesehen, die eine auf die L -Phase des Wechselstrom-Lichtnetzes bezogene und dagegen konstante Referenzspannung vergleicht mit einer heruntergeteilten Wechselspannung, die entsprechend der Wechselstromlichtfrequenz alterniert. Die Referenzspannung und das Teilerverhältnis für die alternierende Wechselspannung sind so gewählt, dass sich ein zu der Referenzspannung symmetrisches Wechselspannungssignal ergibt, so dass für Gleichheit des heruntergeteilten Wechselspannungsignals mit dem Referenzspannungssignal ein Nulldurchgang festgestellt werden kann.

Es ist dann möglich, entsprechend eines gewünschten und durch Tastschalter (nicht gezeigt) von einem Benutzer vorgegebenen Dimmgrades einen Zeitpunkt zu wählen, zu welchem vermittels der Leitend-Schaltung der Leistungsschalter an den Lasten die an die Last zu speisende Wechselspannung anstehen soll.

Um die Treiberstufen leitend zu steuern, ist jeder Treiberstufe 1 a2, 1 b2 I ein eigener Optokoppler 4a, 4b zugeordnet, der eingangsseitig zunächst von einer Last-Schaltstufe beaufschlagt wird, die wiederum mehrere Kanäle aufweist und die ihrerseits ein digitales Signal von der Logikschaltung erhält, und zwar mit einem Bit je unabhängig zu betreibender Last.

Die Treiberstufe ist als TTL-Schaltung so aufgebaut, dass dann, wenn am Optokoppler ein über die Lastschaltstufe verstärktes und evtl. konditioniertes Signal eine binäre Eins darstellt, leitend geschaltet wird, während bei Anstehen einer von der Logikschaltung ausgegebenen, über die Lastschaltstufe 3 c signalkonditionierten binären Null, die am Optokoppler ansteht, die Treiberstufe 1 a 2 bzw. 1 b2 nichtleitend gesteuert wird.

Damit kann über die Dauer bzw. den Zeitpunkt, zu welchem ein für jede Last von der Logikschaltung an die Lastschaltstufe 3c ein Einbit-Binär-EINS-Signal ausgegeben wird, bestimmt werden, zu welchem Zeitpunkt in den jeweiligen Kanälen der Phasenschnitt erfolgt.

Es ist nun weiter zwischen jedem Leistungshalbleiterpaar 1a1 , 1b1 (denen ein geeignetes Widerstandsnetzwerk wie erforderlich zugeordnet ist, um ein ordnungsgemäßes Funktionieren und Zusammenwirken mit der Treiberstufe zu gewährleisten - dies wird für den Fachmann ersichtlich sein-) und der L-Phase, auf welche die Referenzspannung aus dem Netzteil 3a bezogen ist, ein Shunt-Widerstand 5 a bzw. 5b zugeordnet.

Es wird einsichtig sein, dass der Spannungsabfall über den Shunt-Widerstand dann groß ist, wenn augenblicklich große Ströme durch den Shunt Widerstand fließen. Dies erlaubt es, die Ströme durch den Shunt mit einer Stromess- Anordnung 6a bzw. 6b zu messen, beispielsweise durch geeignete Analog-Digital Wandel Schaltkreise oder dergleichen.

Die entsprechenden Strommesssignale werden einerseits für jeden Kanal an die Logikschaltung 3d gespeist und andererseits an eine jeweilige Kurzschlussabschaltung 7a bzw. 7b, die so ausgebildet ist, dass dann, wenn ein über den Shunt fließender Strom zu groß wird, eine Weiterleitung eines die Treiberstufe zu leitender Ansteuerung der Leistungshalbleiter veranlassenden Signales aus der Lastschaltstufe 3c über die Optokoppler 4a bzw. 4b an die Treiberstufen unterbunden wird, und zwar entweder temporär oder, gegebenenfalls, je nach Sicherheitsvorschrift, auch dauerhaft.

Damit ist eine von der Logikschaltung 3d sowie dem Funktionieren der Lastschaltstufe 3c unabhängige Sicherheitsabschaltung für den Kurzschlussfall realisiert.

Wie aus dem vorstehenden ersichtlich sein wird, ist die Strommessung 6a bzw. 6b so, dass der zeitliche Verlauf des über den Shunt-Widerstand fließenden Stromes erfasst werden kann, was einen Vergleich der Phasenlage zwischen Strom und Spannung durch die Logikschaltung 3d erlaubt. Damit kann zwischen kapazitiven und induktiven Lasten unterschieden werden, effektive Leistungen bestimmt werden usw.

Es sei darauf hingewiesen, dass per se zwar keine A-/D-Wandlung erforderlich ist, sondern gegebenenfalls auch mit einfacheren Schaltkreisen gearbeitet werden kann; gleichwohl aber die Verwendung einer A/D-Wandlers und die beschriebene Auswertung der Logikschaltung besonders gut verständlich und insofern in der Erklärung vorteilhaft ist.

Die Stromessignale können darüber hinaus zur Erfassung eines Fehler-Verhaltens der Lasten, beispielsweise bei durchgebrannten Glühbirnen usw. verwendet werden, so dass insgesamt eine hohe Versagenssicherheit gegeben ist.

Es wird einzuschätzen sein, dass sich das dargestellte Konzept ohne weiteres auf mehr als zwei unabhängig betreibbare Lasten erweitern lässt und dafür lediglich erforderlich ist, dass die entsprechenden Leistungsschaltungsanordnungen vorgesehen werden, und die Logikschaltung genügend Ausgänge aufweist sowie die Lastschaltstufe ebenfalls genügend Kanäle besitzt. Außerdem muss die Bedienung möglich sein.

Vorliegend sind zunächst zwei Bedieneingänge vorhanden, die letztlich als digitale Eingänge für Taster aufgefasst werden können. Während herkömmlich diese Eingänge an Taster angeschlossen sind, um ein Tastsignal zu erfassen, sei darauf hingewiesen, dass jedes für sich bei Erfassung der zeitlichen Abfolge der Signale als serielles digitales Eingangssignal aufgefasst werden kann, bzw. beide gemeinsam als Zweibitsignal oder Zweibitsignalfolge aufgefasst werden können. Dabei ist zwar die Betätigung mittels Tippschaltern die übliche Betriebsart, es wird aber einsichtig sein, dass sich vorteilhafte Funktionalitäten ergeben, wenn die eigentlichen Tasteingänge ggf. als Digitaleingänge oder als Zweibitdigitaleingang verwendet werden. Der vorbeschriebene erwähnte Dimmer umfasst weiter zwei voneinander unabhängige Lastkanäle, über welche unabhängig voneinander Ausgangsströme ausgegeben werden können, wobei es aber zugleich möglich ist, dass durch eine Steuerung, welche die Betriebszustände an beiden Ausgangskanälen kennt und/oder die Gesamtsystembelastung charakterisierende Parameter erfasst, wie die interne Temperatur oder den Gesamtleistungsverbrauch usw., ggf. eine insbesondere lastabhängige Kopplung erfolgt.

Es sei im Übrigen erwähnt, dass die vorbekannten Anordnung nicht nur in Neubauten installierbar ist, sondern, unter Verwendung eines Tasters, der kurz austastet, auch in Altbauten in welchen lediglich eine Leitung mit genau einen Draht (d.h. einer einzelne Phase) vom Schalter zum Verbraucher geführt ist. Dies wird möglich, indem sich, wie oben als bevorzugt angegeben, der Dimmer seinen letzten Betriebszustand merkt und dann so ausgebildet bzw. programmiert ist, dass er zwischen mehreren, aber bevorzugt nur wenigen Betriebszuständen durch kurzes Austasten hin und her geschaltet werden kann. Er wird also mit jedem - bevorzugt nur jedem kurzen - Ausschalten einen zyklisch weiterwechselnden Zustand weitergeschaltet und eben nicht am vorherigen Zustand - wie bei Brown-Outs sonst bevorzugt- wieder weiter betrieben.

Vorgeschlagen wird demgemäß unter anderem eine Haustechnikinstallationsanordnung mit einem Dimmer, der von seiner Steuerung bevorzugt in mehreren Betriebszuständen eingeschaltet betreibbar ist, und einer von einem Schalter zum Dimmer führenden Leitung, so ausgestaltet ist, dass die Leitung einphasig vom Schalter zum Dimmer fährt, der Schalter die Leitung einphasig austastet und die Steuerung so ausgebildet bzw. programmiert ist, dass sie den Dimmer mit jedem (kurzen) Ausschalten zyklisch um einen der mehreren Betriebszustände weiterwechselt. Insofern von unterschiedlichen Betriebszuständen besprochen wurde, kann zwischen An und Aus einerseits, andererseits aber zwischen An, Helligkeitsstufe eins, Helligkeitsstufe zwei... Helligkeitsstufe N, aus unterschieden werden. Es werden insofern verschiedene Dimmstufen als jeweiliger Betriebszustand betrachtet. Auch kann gegebenenfalls unterschieden werden, ob ein Leuchtmittel bereits längere Zeit betrieben wurde oder ob es nach längerer Aus-Zeit neu eingeschaltet wird. Dabei ist zu beachten, dass typisch von einer Aus-Phase in eine niedrige Helligkeitsstufe geschaltet wird, dass aber durch vergleichsweise schnelles Durchtasten auch in anderen Stufen noch Einschaltverhalten beobachtbar sind und insofern vorteilhaft ist, wenn erkannt wird, ob ein Dimmer schon längere Zeit betrieben wurde bzw. ob er frisch eingeschaltet wurde. Auch kann gegebenenfalls geprüft werden, ob zuvor ein (tatsächlicher) Kurzschluss bzw. vermeintliche Kurzschlüsse aufgetreten sind. Hierauf kann entsprechend reagiert werden, beispielsweise durch Einleiten von Softstart-Sequenzen, durch Verändern der maximal zulässigen Anzahl vermeintlicher Kurzschlüsse, und so weiter.

Es ist ergo besonders bevorzugt, wenn Tastdauern erkannt und ausgewertet werden. Dies erlaubt es etwa, auf ein längeres Drücken der Taste hin aus jedem Betriebszustand in einen AusZustand zu wechseln.

Die als kurz angesehene Austastdauer wird typisch bis 0,3 Sekunden, eventuell kürzer, z.B. 0,1 Sekunde betragen; dabei ist die tatsächliche Dauer bevorzugt abhängig von den Benutzerpräferenzen. Ein langes Austasten wird angenommen, wenn die Taste länger als bei einem kurzen Tasten gedrückt wird. Es wird einzuschätzen sein, dass hier jedenfalls ein Grenzwert für die Dauer definiert sein wird und bei einer Dauer kürzer als der Grenzwert ein kurzes Tasten und bei einer Dauer von wenigstens dem Grenzwert ein langes Tasten angenommen wird. Wie dabei mit dem Grenzwert selbst verfahren wird, das heißt ob dieser als lang oder kurz angesehen wird, kann für unterschiedliche Ausgestaltungen der Erfindung variieren.

Dort, wo, etwa unter Verwendung von Leistungspuffern eine Messung der Austastzeit erfolgt, kann gegebenenfalls auch um mehr als einen Betriebszustand weiter gewechselt werden. Es wird dann zyklisch um einen oder um wenigstens einen Betriebszustand weiter gewechselt.

Es wurde als vorteilhaft erkannt, wenn dabei zusätzlich und/oder alternativ zu dem vorstehenden vorgesehen ist, dass eine Haustechnikinstallationsanordnung nach dem vorhergehenden Anspruch, so ausgestaltet ist, dass der Dimmer seinen letzten Betriebszustand kennt.

Allgemein ist einsichtig, dass, wenn der Dimmer seinen letzten Betriebszustand kennt, damit eine bestimmte bauliche Ausbildung verbunden ist. Offenbart sei diesbezüglich, dass der Dimmer einen nichtflüchtigen Betriebszustandspeicher besitzen wird, in welchem die Steuerung einen aktuellen Betriebszustand, insbesondere eine aktuelle Dimmstufe und bevorzugt zusätzlich einen Hinweis darauf ablegt, ob in einer unmittelbar oder einige Halbwellen zuvor liegenden Phase ein (vermeintlicher) Kurzschluss aufgetreten ist und /oder ob, etwa ausweislich eines in sukzessiven Messungen aufgetretenen Temperatursprunges, eines unerwarteten großen Temperaturanstiegs oder dergleichen, ein Einschalten erfolgt ist (und somit womöglich ein gerade beendeter Brownout oder Blackout vorliegt). Aus diesem nichtflüchtigen Speicher werden dann auf Wieder-Anlegen der Versorgungs-Wechselstrom-Lichtnetzspannung, aus welcher zumindest das Netzteil der Logikschaltung gespeist wird, die entsprechenden, den letzten Betriebszustand kennzeichnen Parameter ausgelesen, damit die Steuerung im Ansprechen darauf den jetzt erforderlichen Betriebszustand bestimmen kann. Sobald ein neuer erforderlicher Betriebszustand bestimmt wurde, und /oder dieser erreicht wurde, wird eine entsprechende Information im nichtflüchtigen Speicher für wahlweise Lese- und / oder Schreibzugriff abgelegt.

Es wurde als vorteilhaft erkannt, wenn dabei zusätzlich und/oder alternativ zu dem vorstehenden vorgesehen ist, dass eine Haustechnikanordnung so ausgestaltet ist, dass der Dimmer dazu ausgebildet ist, in Stufen zwischen Hell und Dunkel zu schalten.

Es wurde als vorteilhaft erkannt, wenn dabei zusätzlich und/oder alternativ zu dem vorstehenden vorgesehen ist, dass eine Haustechnikanordnung so ausgestaltet ist, dass der Dimmer dazu ausgebildet ist, in 3 bis 5 Stufen zwischen Hell und Dunkel zu schalten.

Wie zuvor erwähnt, ist oftmals die Verwendung von drei Stufen schon ausreichend, insbesondere dort, wo der Benutzer die tatsächlich bei einer jeweiligen Stufe erreichte Helligkeit frei konfigurieren kann, um verschiedene wichtige Lichtszenarien einstellen zu können; werden mehr als drei, insbesondere fünf Stufen gewählt, ist die Einstellung feinfühliger, wobei es noch für einen Benutzer hinnehmbar ist, zwischen fünf verschiedene Stufen durchzutasten. Dass alternativ auch zwei oder vier Stufen als Kompromiss zwischen Regelgenauigkeit und Tastaufwand gewählt werden können, sei erwähnt. Technisch implementierbar sind auch mehr als fünf Stufen, was aber zu einer unbequemen Bedienung führt.

Es sei erwähnt, dass das Austasten für ein eigentliches Dimmen insofern per se ungeeignet scheinen mag, als der Dimer quasi "blind", d.h. ohne Beobachtung eines aktuell schon erreichten Dimmwertes angesteuert werden müsste, dass aber zumindest die beschriebene stufenweise schaltende Anordnung erreicht werden kann, z.B. eine stufenweise in 3 bis 5 Stufen zwischen Hell und Dunkel schaltende Anordnung, insbesondere durch Implementierung einer Helligkeitskennlinie, bei der die Abhängigkeit des Dimmgrades vom Helligkeitsgrad implementierbar ist. Die automatische Aufnahme einer solchen Kennlinie nach entsprechender Auslösung ist besonders vorteilhaft.

Es wurde als vorteilhaft erkannt, wenn dabei zusätzlich und/oder alternativ zu dem vorstehenden vorgesehen ist, dass eine Haustechnikanordnung so ausgestaltet ist, dass ein vom Dimmer betriebenes Leuchtmittel vorhanden ist, wobei der Dimmer eine Helligkeitskennlinie für die Abhängigkeit des Dimmgrades vom Helligkeitsgrad des angeschlossenen Leuchmittels speichert.

Es wurde als vorteilhaft erkannt, wenn dabei zusätzlich und/oder alternativ zu dem vorstehenden vorgesehen ist, dass eine Haustechnikanordnung so ausgestaltet ist, dass ein Speicher für den aktuellen Dimmgrad vorgesehen ist, der zur stromausfallsicheren Speicherung ausgebildet ist.

Offenbart wurde somit unter anderem, jedoch nicht ausschließlich, eine Leistungssteuervorrichtung, beispielsweise Mehrkanal-Dimmer, für eine Vielzahl unabhängig betreibbarer Lasten eines Lichtnetzes mit separaten Leistungsschaltungsanordnungen für die unabhängig betreibbaren Lasten, wobei die Leistungsschaltungsanordnungen jeweils Leistungshalbleiter, eine Ansteuerschaltung und eine zugeordnete Netzteilschaltung aufweisen, und einer diesen gemeinsamen Kontrollanordnung wobei vorgesehen ist, dass die Netzteilschaltungen für die Leistungsschaltungsanordnungen und für die Kontrollanordnung separate Bezugspotentiale aufweisen, die Ansteuerungsschaltungen als die Leistungshalbleiter leitend oder nichtleitend steuernde Treiberschaltungen gebildet sind und die Kontrollanordnungvon den Ansteuerschaltungen galvanisch bzw. elektrisch isolierend getrennt ist.

Offenbart wurde weiter eine Leistungssteuervorrichtung, bei welcher zusätzlich und/oder alternativ vorgesehen ist, dass die jeweiligen Leistungshalbleiter Leistungshalbleiterpaare, bevorzugt MOSFETs, umfassen wobei bevorzugt die Treiberschaltung als TTL-Schaltung gebildet ist.

Offenbart wurde weiter eine Leistungssteu-ervorrichtung, bei welcher das Bezugspotenzial für die Netzteilschaltung der Kontrollanordnung von dem Potentialpunkt zwischen dem Leistungshalbleiterpaar differiert.

Offenbart wurde weiter eine Leistungssteuervorrichtung für ein zweiphasiges Wechselstrom-Lichtnetz, bevorzugt ein zweiphasiges Wechselstrom-Lichtnetz mit einem zusätzlichen Erdungsleiter, ausgelegt ist, wobei Bezugspotenziale für die Lasten von einer ersten Lichtnetzphase abgeleitet sind, während das Bezugspotenzial für die Kontrollanordnung von der zweiten Lichtnetzphase abgeleitet ist.

Offenbart wurde weiter unter anderem, jedoch nicht ausschließlich, eine Leistungssteuervorrichtung, bei welcher zusätzlich und/oder alternativ vorgesehen ist, dass jeder der unabhängigen Lasten ein Shunt-Widerstand zugeordnet ist, der zwischen der Phase, aus der die Kontrollanordnung im Betrieb leistungsversorgt wird, und den Leistungshalbleitern dieses Kanals vorgesehen ist.

Offenbart wurde weiter unter anderem, jedoch nicht ausschließlich, eine Leistungssteuervorrichtung, bei welcher zusätzlich und/oder alternativ vorgesehen ist, dass eine Strommess-Stufe vorgesehen ist, die dazu angeordnet ist, zu einer Mehrzahl der separat steuerbaren Lasten, bevorzugt zu jeder der separat steuerbaren Lasten, ein stromindikatives Signal an die Kontrollanordnung zu speisen.

Offenbart wurde weiter unter anderem, jedoch nicht ausschließlich, eine Leistungssteuervorrichtung, bei welcher zusätzlich und/oder alternativ vorgesehen ist, dass die Kontrollanordnung dazu ausgebildet ist, im Ansprechen auf Strommess-Signale zwischen Phasenanschnitt- oder -abschnitt-Steuerung zu wählen, und/oder das Vorhandensein einer induktiven, kapazitiven oder ohmschen Last zu erkennen, und/oder dazu ausgebildet ist, eine an eine Last gespeiste Leistung separat zu erfassen und/oder im Ansprechen darauf zu reagieren, und/oder den aktuellen Leistungsverbrauch und/oder Stromverbrauch zu erfassen und darauf bezogene Signals auszugeben, und/oder eine Gesamtverlustleistung in der bzw. einen Gesamtstrom durch die Leistungssteuervorrichtung zu begrenzen und/oder einen Ersatzkanal anzusteuern, falls in einem eigentlich gewünschten Kanal ein Versagen detektiert wird oder wurde. Vorgeschlagen wurde weiter unter anderem, jedoch nicht ausschließlich, eine Leistungssteuervorrichtung, bei welcher zusätzlich und/oder alternativ vorgesehen ist, dass sie in einem Gehäuse insbesondere einem für den Einbau in eine Unterputzdose ausgebildeten Gehäuse vorgesehen ist, wobei zwei Phaseneingänge, sowie soweit nach Anschlussnormen vorgesehen und/oder erforderlich eine Erdungsleitung, vorgesehen sind, und entsprechende Ausgänge für jede der Lasten.

Vorgeschlagen wurde weiter unter anderem, jedoch nicht ausschließlich, eine Leistungssteuervorrichtung, bei welcher zusätzlich und/oder alternativ vorgesehen ist, dass zumindest eine Schnittstelle für drahtlose Kommunikation, insbesondere über Bluetooth und/oder WLAN vorgesehen ist, wobei die Leistungssteuervorrichtung bevorzugt dazu ausgebildet ist, mit mehreren anderen Leistungsanordnungen Signale auszutauschen, die das eigene einwandfreie Funktionieren der Lastansteuerung und/oder der Schnittstellenansteuerung mitteilen, einem oder mehreren Kommunikationspartnern das einwandfreie Funktionieren und/oder Ausfallen dritter Leistungssteuervorrichtungen mitteilen, Steuersignale für die Laststeuerung zur gemeinsamen Steuerung mehrerer unabhängig betreibbarer, aber gemeinsam betriebener Lasten darstellen, und/oder Steuersignale für die Ansteuerung von Ersatzkanälen ausgefallener oder ungenügend anzusteuernder eigener Kanäle darstellen, und/oder eine Konfiguration anderer Leistungssteuervorrichtungen bewirken, und/oder Signalstärken eines beweglichen Signalsenders, bevorzugt eines beweglichen Bluetooth-Senders, bevorzugt auf eine Triangulation ermöglichende Weise darstellen, und/oder Statistiken über Störungen der eigenen und/oder fremder Kommunikationsschnittstellen kommunizieren und/oder eine Gatewayverbindung zwischen unterschiedlichen Schnittstellen ermöglichen.

Vorgeschlagen wurde weiter unter anderem, jedoch nicht ausschließlich, eine Leistungssteuervorrichtung, bei welcher zusätzlich und/oder alternativ vorgesehen ist, dass wenigstens ein zusätzlicher Sensor vorgesehen ist, der ausgewählt ist aus der Gruppe Temperatursensor, bevorzugt Temperatursensor zur Erzeugung von auf die Temperatur der Leistungssteuervorrichtung bezogenen Temperatursignalen, wobei dann die Kontrollanordnung bevorzugt dazu angeordnet ist, bei Erreichen bestimmter Temperaturen eine Umsteuerung vorzunehmen weg von einem Soll-Wert gemäß Benutzervorgabe hin zu einem unter Temperatur-Aspekten noch akzeptablen Ist-Wert, insbesondere zur Begrenzung einer abgedimmten Leistung eines Einzelkanals oder mehrerer Kanäle, und induktiver bzw. Magnet-Sensor, bevorzugt Hall-Sensor, zur Erfassung der Stärke eines Magnetfeldes an der Unterputzdose, bevorzugt mit einer Genauigkeit, die bei türnaher Montage der Leistungssteuervorrichtung und Anbringung eines Magneten in einem Türblatt eine Unterscheidung einer geschlossenen und offen Türstellung, besonders bevorzugt zusätzlich auch einer angelehnten und/oder einer halboffenen Türstellung ermöglicht, und/oder Vibrations- und/oder Schock- und/oder Beschleunigungs- und/oder Drucksensoren, bevorzugt zur Einbruchserkennung.

Vorgeschlagen wurde weiter unter anderem, jedoch nicht ausschließlich, eine Leistungssteuervorrichtung, bei welcher zusätzlich und/oder alternativ vorgesehen ist, dass eine von der Strommessung unabhängige Kurzschlussabschaltung vorgesehen ist, um unabhängig von einer Strommessung und Auswertung eines Stromess-Signals in der Kontrollanordnung eine separate Kurzschlussabschaltung zu ermöglichen.

Was die vorstehende Möglichkeit angeht, Signale von einem Bluetooth-Gerät über eines oder mehrere Bluetooth-Geräte zu einem weiteren Bluetooth-Gerät, das nicht mehr unmittelbar erreichbar ist, zu übertragen, sei darauf hingewiesen, dass dies per se bereits bekannt war. Entsprechende Vorschläge wurden von M. Woolliy unter der Überschrift "Range-limitation? What range limitation? Introducing mesh networks" am 20. November 2014 im Internet gepostet.

Es sei weiter erwähnt, dass sich Vorteile nicht nur durch eine verbesserte Temperaturmessung und/oder durch die verbesserte Erfassung von Kennlinien in einem Dimmer bei Haustechnikanordnungen ergeben, sondern dass Vorteile auch erhalten werden können, indem eine bessere Lokalisation eines Benützers erfolgt und/oder auf die Lokalisation eines Benützer bzw. dessen Bluetooth-Signalen bestimmte Reaktionen eines Haustechnikanordnungs-Systems ausgelöst und/oder ermöglicht werden.

Es gibt bereits Arbeiten, die sich mit der Verfolgung von Objekten wie Personen in geschlossenen Gebäuden befassen, vgl. Z Xiao et al. "Demo abstract: lightweight continuous indoor tracing system" oder die Masterarbeit von Anja Bekkelien zur Bluetooth Indoor Positionsmessung. Dort wird bereits vorgeschlagen, dass ein Programm kontinuierlich nach Mobilgeräten scannt und einem Server RSSI-Daten, d.h. Radiosignalstärkeindikative-Daten sendet und die Adressen der gefundenen Geräte mitteilt.

Die Entfernung soll dann am Server bestimmt werden und die Benützer müssen sich in das System entsprechend einloggen. Wünschenswert wäre allerdings hier eine serverfreie Bestimmung. Um dies zu ermöglichen, wird erfindungsgemäß ausgenützt, dass hohe Signalstärken stets dann auftreten, wenn der Benützer sich in der Nähe bestimmter Empfänger aufhält und ergo von anderen weiter entfernt ist.

Per se wäre es nun möglich, mit einem Mobilteil eines Benützers wie einer bluetoothfähigen Smartwatch und/oder einem Smartphone zu ermitteln, welche Signalstärken bei Kommunikation mit umgebenden Bluetooth-Geräten erhalten werden. Es kann auf diese Weise durch Sortierung der Signalstärken das nächstliegender Bluetooth-Gerät bestimmt werden. Die Priorisierung einer Systemantwort nach Signalstärken wird aber oftmals noch als ungenügend empfunden werden, etwa weil ein Benützer sich nahe einer Rollladensteuerung in seinem Wohnzimmer auf einem Sitzplatz niedergelassen hat, jedoch typisch von diesem Platz aus ein Raumlicht betätigen möchte. Hier gibt es die Möglichkeit, zusätzlich und/oder alternativ zu einer Berücksichtigung der Signal stärken eines Funksignals oder anderer entfernungsindikativer Signale noch ergänzend weitere Informationen auszuwerten. Eine erste, einfach zu inplementierende Möglichkeit besteht darin, neben entfernungsindikativen Daten zur Bestimmung der Entfernung von mehreren Funkbasen eine Präferenz einzuführen. Damit kann sichergestellt werden, dass für einen Benützer, der in einem Raum mit mehreren bluetoothsteuerbaren Geräten, die insbesondere mit einem Bluetoothschalter, der fest installiert ist, kommunizieren können, dies aber nicht zwingend müssen, im Regelfall die bevorzugte Betätigung ausgewählt wird.

So kann dort, wo eine Heizung über Bluetooth steuerbar ist, ein Rollladen über Bluetooth steuerbar ist und eine Raumbeleuchtung über Bluetooth steuerbar ist, ein im Raum befindlicher Benützer zur Betätigung auf seinem Mobilteil wie seinem Smartphone regelmäßig zuerst die Veränderung der Raumhelligkeit durch die Beleuchtung angeboten bekommen.

Nun ist anzumerken, dass heutige Smartphones neben den drahtlosen Weitbereichsverbindungen wie WLAN oder Mobilfunk- basiertem Internetzugang, zusätzlich über eine lokale drahtlose Nahbereichsverbindung wie bevorzugt Bluetooth verfügen. Sollen über das Smartphone und vorzugsweise die lokale Nahbereichsverbindung, wie bevorzugt Bluetooth, viele Gebäudesteuerungen bedient, Türen geöffnet oder Kaufautomaten bedient werden, sind eine Vielzahl von Programmen, sogenannte APPs für die verschiedenen Steuerungen notwendig.

Soll in einer solchen APP für die Gebäudesteuerung ein spezifischer Raum bedient werden, muss durch mehrere Menüs oder eine Karte mühsam navigiert werden, bis die richtige Menübedienstelle bevorzugt zum Schalten des Raumlichts oder Einstellung der Heizung gefunden wird. In einem Bürogebäude mit vielen elektronisch gesicherten Türen ist es ebenfalls aufwendig, die richtige Tür im zugehörigen Programm bzw. Bedienmenü zu finden.

Neben dem Einsatz in Gebäudesteuerungen und elektrischen Türöffnungseinrichtungen ist dies auch in Verbindung mit Haushaltsgeräten, Kaufautomaten oder anderen zu bedienenden Geräten oder Einrichtungen vorteilhaft. Vorgeschlagen wird, dass, wenn sich der Nutzer mit seinem Smartphone oder dergl. in Richtung eines Haushaltsgeräts und/oder dergleichen bewegt, er auf dieses zeigt, automatisch das notwendige Bedienprogramm und/oder Bedienmenü geladen oder gar ein Schaltvorgang direkt ohne Zutun des Nutzers ausgelöst wird. Es wird beschrieben, wie dies ermöglicht wird.

Dass der Benutzer mit einem Smartphone oder dergleichen in Richtung auf ein bestimmtes Haushaltsgerät und/oder einen Schalter zeigt, kann insbesondere dadurch ermittelt werden, dass Orientierungsdaten des Smartphones oder anderen Mobilgerätes wie erhältlich durch Auswertung von beispielsweise einem eingebauten Kompass oder GPS-System ausgewertet wird und/oder über Triangulation bestimmten Daten ausgewertet werden. Andere Möglichkeiten, die Richtung, in welche mit einem Gerät gezeigt wird, zu bestimmen, bestehen allerdings.

Bevorzugt ist das Smartphone oder andere mobile Gerät- insbesondere durch Laden eines in dessen Programmspeicher abgelegten Programmes - dazu angepasst, die Steuerung eines bestimmten Geräten zu veranlassen, d.h. beispielsweise ein geeignetes Bedienmenü anzuzeigen, wenn der Benützer sich in einem Bereich befindet, von wo aus typisch dieses Menü benötigt wird. Zu diesem Zweck können ohne weitere Maßnahmen die entfernungsindikativen Signale wie RSSI-Daten von mehreren Empfängern herangezogen werden und es kann basierend auf z.B. RSSI-Signaldaten, zunächst eine Sortierung der Abstände zu unterschiedlichen Empfänger vorgenommen werden, aber es braucht dann zu jenen Abständen, die besonders gering sind, nicht zwingend das Menü ausgewählt werden, das zu der stärksten Signalstärke gehört, sondem es kann entsprechend dem gesamten entfernungsdatenindikativen Satz ein anderes Menü gewählt werden. Die Bedienung kann jedoch weiter verbessert werden, wenn dann bei sehr kurzen Entfernungen gleichwohl zwingend bzw. bevorzugt eine bestimmte Bedienung ermöglicht bzw. priorisiert wird.

So kann einerseits erlaubt werden, dass beispielsweise eine Türe geöffnet wird, wenn sich ein Benützer unmittelbar davor befindet oder ein Rollladen betätigbar wird, wenn der Benützer unmittelbar neben dem Rollladen steht und sein mobiles Mobilteil wie Smartphone auch noch besonders nah an das Fenster, das mit dem Rollladen verschaffet werden kann, hält. Ähnliches gilt für Lichtschalter.

Eine solche Bedienung ist vorteilhaft. Sie kann regelmäßig dann veranlasst werden, wenn die entfernungsindikativen Daten sehr geringe Abstände anzeigen, also z.B. Abstände, die weniger als die Hälfte, bevorzugt weniger als 1/10 der Reichweite betragen, die für die Kommunikation mit dem zu steuernden Gerät maximal zulässig ist. In bevorzugten Varianten wird eine typische Nähe, ab welcher zwingend ein bestimmtes Gerät angesteuert wird, zwischen 15 und 50 cm betragen. Es sei erwähnt, dass dies besonders dort vorteilhaft ist, wo ein System zu konfigurieren ist, etwa weil der Benützer erreichen möchte, dass ein Dimmer durch mehrfaches Antippen des Touchscreens seines Smartphones zwischen festen Dimmstufen durchwechselt. In einem solchen Fall, aber auch für andere Konfigurationszwecke kann sich der Benützer nahe an das zu konfigurierende Schaltelement stellen. Dies ist auch bei der Einrichtung von vollständigen Hausinstallationen sehr vorteilhaft, weil damit Fehler vermieden werden, wenn ein Systemprogrammierer bzw. ein die Haustechnikanlage konfigurierender Elektriker andernfalls Schalter und Geräte verwechseln würde.

Es sei weiter erwähnt, dass neben der reinen Signalstärke zur Positionsabschätzung, bzw. Positionsmessung noch bessere Möglichkeiten bestehen, Reaktionen einer Haustechnikanord-nung bzw. eines Systems mit einer Haustechnikanordnung zu erzeugen. Zunächst sei erwähnt, dass dort, wo viele, insbesondere fest verbaute Funksignalempfänger wie Bluetoothempfänger angeordnet sind, eine Positionsbestimmung auch durch Triangulation erfolgen kann. Sind diese Geräte auf unterschiedlicher Höhe angeordnet, so ist gegebenenfalls sogar die Höhe eines mobilen Gerätes über dem Boden erfassbar.

Es sei vorliegend auch vorgeschlagen, dass ein bestimmtes Bedienprogramm oder Bedienmodul geladen wird, abhängig davon, an welcher Schalteranordnung sich ein Benutzer befindet und / oder auf welche Schaltungsanordnung er zeigt, ist es auch möglich, innerhalb eines Programmes lediglich bestimmte Parameter auszuwählen. So kann etwa dort, wo an allen Stationen einer Haustechnikanordnung bzw. Systems mit einer Haustechnikanordnung stets nur eine Helligkeit in einer von mehreren Stufen gewählt wird, eine Auswahl zwischen den für einen bestimmten Schalter vorgesehenen Stufen angeboten werden und die für das jeweilige Leuchtmittel vorgesehenen Dimmstufen bestimmt werden.

Vorgeschlagen wird demgemäß unter anderem ein (nicht beanspruchtes) Verfahren mit einem Gerät, bevorzugt einem Smartphone oder einer Fernsteuerung, das über eine lokale drahtlose Kommunikationseinrichtung, wie bevorzugt Bluetooth, zu einer Sende-/Empfangseinrichtung mit angeschlossenem Steuer- und/oder Sensormodul, wie bevorzugt einer Einheit einer Gebäudesteuerung, eines Haushaltgeräts, eines Kaufautomaten oder einer Türöffnungsvorrichtung, verfügt, wobei vorgesehen ist, dass die lokale drahtlose Kommunikationsverbindung, (a) sowohl mit einem Mittel zur Kommunikation mit einem an eine Sende-/Empfangseinrichtung angeschlossenen Steuer- und/oder Sensormodul ausgebildet ist, wie bevorzugt für die Bedienung über Smartphone zu einer Gebäudesteuerung, eines Kaufautomaten, oder einer Türöffnungseinrichtung und der Nutzer darüber audiovisuell kommuniziert, Steuerbefehle absetzt, Meldungen weiterleitet und Sensor- bzw. Status-Daten erhält oder abfragt, (b) als auch mit einem Mittel zur Messung der Entfernung oder Annäherung des Nutzers an eine Sende-/Empfangseinrichtung ausgebildet ist, bevorzugt durch Bestimmung des Abstands und/oder Geschwindigkeit des Nutzers zur Empfangseinrichtung, auf Basis eben dieser Kommunikationsverbindung dient, bspw. durch direkte Entfernungsmessung der Signallaufzeit oder Messung der Änderung der Signalstärke des Kommunikationsfunksignals.

Es wird einzusehen sein, dass eine Annäherung des Gerätes erkannt werden kann, indem wiederholt in einem bestimmten Zeitintervall die Position insbesondere durch Triangulation bestimmt wird und dann untersucht wird, ob und gegebenenfalls wie sich der Abstand ändert. Dabei kann gegebenenfalls ein Ansprechen erst dann vorgesehen werden, wenn ein Schwellwert der Entfernung unterschritten wird und/oder kein anderer Benutzer näher an einem möglicherweise zu bedienenden Gerät befindlich ist. Dies ist insbesondere bei Kaufautomaten, Geldautomaten oder dergleichen der Fall. Gegebenenfalls kann sogar, zur Sicherung einer hinreichend vertraulichen Bedienung, verhindert werden, dass bestimmte Funktionalitäten etwa auf einem Kauf-oder Bankautomaten aufgerufen werden, wenn sich ein zweiter Benutzer nähert oder zu nahe befindet.

Es wird also ermöglicht, dass automatisch das zum Bedienen der lokalen Einrichtung notwendige Programm oder andere Informationen im Smartphone zu laden ist, um es zu aktivieren und/oder ins passende Untermenü zu verzweigen, so dass der Nutzer sofort und ohne Menüauswahl direkt bevorzugt die lokale Raumlichtsteuerung, Heizungsregelung oder Türöffnungsstelle über sein Smartphone bedienen oder automatisch bei Annäherung Schaltvorgänge und Steuerfunktionen auslösen kann.

Die lokale drahtlose Nahbereichsverbindung, die vom Smartphone zur Sende-/Empfangseinrichtung mit angeschlossenem Steuer- und/oder Sensormodul des Gerätes zu deren Bedienung aufgebaut wird, wird im Folgenden als Kommunikationsverbindung bezeichnet und verwendet vorzugsweise eine drahtlose Bluetooth-Kommunikation mit einigen Metern Reichweite.

Die im Smartphone üblicherweise integrierte Lagesensorik kann im Übrigen in Verbindung mit der Annäherungsmessung zur Bestimmung des für ein Steuer- und/oder Sensormodul notwendigen Bedienmenü herangezogen werden, indem man bevorzugt mit dem Smartphone auf eine Empfangseinrichtung, wie z.B. eine bestimme Deckenleuchte, zeigt. Dies gilt gleichermaßen, wenn Gesten, wie bevorzugt das Schütteln des Smartphones, in Verbindung mit der Annäherung zu einem Steuer- und/oder Sensormodul zur Auswahl des Bedienmenüs verwendet werden.

Als Schütteln wird dabei die wiederholte Bewegung von wenigstens zwei, insbesondere bevorzugt drei, bevorzugt vier oder mehr Hin- und Herbewegungen des Smartphones in einer bestimmten Achse bzw. das Hin- und Herschwenken um eine gegebene Achse verstanden, wenn dieses mit bestimmten Frequenzen geschieht, beispielsweise 3-5x Schütteln in 0,5-2 Sekunden, besonders, wenn dabei eine hinreichende Präzision der Schüttelbewegung beispielsweise wiederholtes Erreichen einer Endposition mit einer Genauigkeit des Ausrichtens der Achse von z.B. +/- 15° oder dergleichen bzw. z.B. +/- 5-10 cm der Endpositionen erreicht wird. Typisch wird mit einer Schwenk-Amplitude von wenigstens 10° geschwenkt. Derartige Bewegungen sind mit typischen Beschleunigungs-und/oder Lagesensoren in herkömmlichen Mobilgeräten ohne weiteres erkennbar. Auch das Zeigen auf eine bestimmte Richtung kann unter Zulassen bestimmter Genauigkeiten bzw. Toleranzen erkannt werden. Wiederum sind auch hierfür Lage- bzw. das Gravitationsfeld der Erde wahrnehmende Beschleunigungssensoren verwendbar. Dass andere Gesten wie ein großflächiges Schwenken am ausgestreckten Armen in eine bestimmte Richtung, etwa auf einen zu betätigenden elektrischen Verbraucher zu, wie eine einzuschaltende Lampe oder dergleichen, erfasst werden können, sei erwähnt. Dabei wird z.B. die Länge der Bewegung, d.h. die mit der Bewegung zurückgelegte Strecke respektive die dafür benötigte Dauer und/oder die dafür benötigte Zeit erfasst; es ist möglich, den Geschwindigkeitsverlauf und/oder den Beschleunigungsverlauf zu berücksichtigen, um etwa ruckartige Bewegungen (kurze hohe Beschleunigung, kurz danach ebenfalls kurze, hohe Beschleunigung in die Gegenrichtung) von einem Schütteln (mehrfache Beschleunigung in entgegengesetzte Richtungen in einem bestimmten Frequenzband) und großflächigen Bewegungen (anfängliche, nicht zu hohe Beschleunigung, allenfalls geringe Beschleunigung während der Bewegung, geringe Gegenbeschleunigung zur Beendigung der Bewegung) unterschieden werden. Dabei ist vorteilhaft, wenn durch eine bestimmte Geste und die damit eventuell verbundene Positionierung und/oder Orientierung ein Verbraucher ausgewählt werden kann, der gesteuert wird.

Es wurde als vorteilhaft erkannt, wenn dabei zusätzlich und/oder alternativ zu dem vorstehenden vorgesehen ist, dass aus dieser Annäherung des Nutzers an eine Sende-/Empfangseinrichtung folgt, dass automatisch Schalt- und Steuervorgänge eingeleitet und/oder Nachrichten versendet werden und so z.B. bei Annäherung unter anderem Licht geschaltet, am Haus geklingelt, Meldungen an Dritte oder andere Steuereinheiten verschickt werden, audiovisuelle Aufzeichnungen starten oder eine Tür selbstständig öffnet bzw. verriegelt.

Es wurde als vorteilhaft erkannt, wenn dabei zusätzlich und/oder alternativ zu dem vorstehenden vorgesehen ist, dass aus dieser Annäherung an eine Sende-/Empfangseinrichtung folgt, dass das für die Bedienung des angeschlossenen Steuer- und/oder Sensormodul bzw. Geräts notwendige Programm im Smartphone aktiviert und automatisch ins passende Menü ver-zweigt wird, welches der Nutzer für die aktuelle Bedienung benötigt, bevorzugt ein örtlich passendes Menü zu einer lokalen Raumlichtsteuerung, Heizungsregelung, einer Türöffnungs-einrichtung oder auch zu einem Kaufautomaten, in deren Nähe sich der Nutzer befindet und zwar vorzugsweise, ohne dass der Nutzer selbst das entsprechende Programm aussuchen, starten und in das notwendige Untermenü verzweigen muss.

Als Menü wird dabei in einem Programm eine Zusammenstellung vom Benutzer auswählba-ren Optionen und in typisch graphischer Darstellung dieser Optionen zur Auswahl verstanden. Dabei ist anzumerken, dass die Steuerprogramme selbst, die beispielsweise als Applet auf einem Mobilteil wie einem Smartphone installiert sind, eine Vielzahl von Regelmöglichkeiten besitzen werden und durch eine verzweigte bzw. hierarchische Menüstruktur letztlich bestimmte Parameter wie eine Helligkeit oder einer Raumtemperatur eingestellt werden können. Der Benutzer hat klassisch die Möglichkeit, sich von einer höheren Menüebene durch Auswählen von geeigneten und gewünschten Untermenüs allmählich zu dem tatsächlich benötigten, weit unten liegenden Menü durchzuarbeiten bzw. "durchzuklicken". Die hier vorgeschlagene automatische Verzweigung erlaubt, sofort ein mit hoher Wahrscheinlichkeit benötigtes, weit unten in einer Menühierarchie liegendes Untermenü auszuwählen. Dies kann dadurch geschehen, dass die jeweiligen Menüs innerhalb des Programmes mit Kennungen versehen sind und auf die Identifikation einer bestimmten Geste oder Bedienung oder Annäherung an ein Gerät von diesem eine Kennung für das jeweils anzuzeigende Untermenü angefordert wird und nach Übertragung der Untermenükennung in dieses Untermenü verzweigt wird. Dazu kann also in jeder Leistungssteuervorrichtung wie jedem Dimmer oder dergleichen, der mit dem Mobilteil über hierarchisch geordnete oder anders strukturierte Menüs und Untermenüs bedient werden soll, eine Menükennung für bestimmte Zwecke wie Benutzung durch Gäste, Benutzung durch Administratoren oder Benutzung durch Benutzer mit vollen Bedien-, jedoch keinen Konfigurationsrechten hinterlegt sein. Auf entsprechende Anfrage und gegebenenfalls Überprüfung, ob das anfragende Mobilteil einem entsprechend autorisierten Benutzer gehört, kann dann die entsprechende Menükennung von der Leistungssteuervorrichtung abgerufen werden und im Mobilteil in das Unternehmen verzweigt werden. Alternativ ist es möglich, dass im Mobilteil selbst zu jeder möglichen Geste, die an einer bestimmten Leistungssteuer-vorrichtung erkannt werden soll, das aufzurufende Untermenü hinterlegt ist, sodass im Mobil-teil selbst lediglich erkannt werden muss, nahe welcher Leistungssteuervorrichtung bzw. welchen Dimmers, Verkaufsautomaten oder dergleichen sich das Gerät befindet und dann auf Erkennen der Geste im Mobilteil und nach Übertragung der entsprechenden Kennung des Gerätes das entsprechende Menü aufgerufen wird.

Eine weitere Alternative, um dem Benutzer eine geeignete Auswahl bereitzustellen, ist zudem wie folgt. Wenn sich ein Benutzer nähert, kann gegebenenfalls auch veranlasst werden, dass eine App eine Auswahlliste mit mehreren Auswahlmöglichkeiten öffnet. Dies kann gegebenenfalls nach Gestenerkennung und/oder Erkennung eines Benutzers und/oder von Benutzerrechten (Administrator, einfacher Benutzer, Gast usw.) geschehen. Dabei kann gegebenenfalls übertragen werden, welche Bezeichnung die einzelnen Listenpunkte haben, beispielsweise oberste Listenposition: Temperatur erhöhen; zweite Listenposition: Temperatur senken; dritte Listenposition: Licht heller; vierte Listenposition: Licht dunkler. Der Benutzer kann dann, etwa auf seinem Touchscreen, auf dem die Liste angezeigt wird, eine Position auswählen und es muss nur an das Gerät übertragen werden, welche Listenposition er ausgewählt hat. Damit ist nicht einmal erforderlich, bestimmte Untermenüs vorzudefinieren, sondern es ist ausreichend, eine bestimmte Basisfunktionalität wie das Anzeigen einer Auswahlliste vorzusehen. Dies erlaubt die Verwendung mit einer Vielzahl unterschiedlicher Geräte, die von den jeweiligen Herstellern lediglich so programmiert werden müssen, dass sie einem Minimalstandard bei der Kommunikation entsprechen, d.h. beispielsweise ab die Anzeige eines Auswahlmenüs mit einer bestimmten Anzahl von Menüpunkten ermöglichen, und erlaubt dann, die auszuwählenden Optionen zu beschreiben und im Gegenzug nach einer Betätigung die ausgewählte Option empfangen.

Es wurde als vorteilhaft erkannt, wenn dabei zusätzlich und/oder alternativ zu dem vorstehenden vorgesehen ist, dass aus dieser Annäherung an eine Sende-/Empfangseinrichtung folgt, dass das für die Bedienung des angeschlossenem Steuer- und/oder Sensormodul, bzw. Geräts notwendige Programm oder Teile dieses Programms automatisch über die lokale Kommunikationsverbindung, bevorzugt über Bluetooth, von der Sende-/-Empfangseinrichtung zum Smartphone und/oder umgekehrt geladen werden.

Als Laden von Programmen oder Teilen eines Programmes kann auch das Laden von Parametern verstanden werden, beispielsweise von Parametern, mit denen Listenpositionen in den Auswahlmenüs und die Anzahl unterschiedlicher Menüpunkte festgelegt werden, wie oben beschrieben.

Es wurde als vorteilhaft erkannt, wenn dabei zusätzlich und/oder alternativ zu dem vorstehenden vorgesehen ist, dass aus der Annäherung des Mobilteils an eine Sende-/- Empfangseinrichtung in Verbindung mit der Lagesensorik oder Gestenerkennung des Smartphones, bevorzugt Schütteln, folgt, dass ein Steuer- und/oder Sensormodul für die Betätigung ausgewählt wird und so automatisch das zugehörige Bedienprogramm geladen und/oder das notwendige Bedienmenü für eben dieses Steuer- und/oder Sensormodul aktiviert wird und/oder ein Bedienvorgang durch eine Lageänderung oder Gestik mit dem Smartphone ausgelöst wird.

Es wurde als vorteilhaft erkannt, wenn dabei zusätzlich und/oder alternativ zu dem vorstehenden vorgesehen ist, dass aus dieser Annäherung an eine Sende-/Empfangseinrichtung folgt, dass das Smartphone, die Fernsteuerung oder dergl. von der Sende-/Empfangseinrichtung bzw. dem daran angeschlossenen Modul oder dergl. Positionsdaten erhält und/oder damit vorzugsweise eine Karte der Umgebung lädt und/oder öffnet und die Position der Sende-/Empfangseinrichtung in der Karte kenntlich macht und/oder den Nutzer bei der Navigation in einem Gebäude unterstützt. Es ist gegebenenfalls sogar möglich, eine Gebäudekarte aufzubauen anhand der Bewegungen von Benutzern innerhalb eines Gebäudes, was zumindest die Erstellung grober schematischer Pläne ermöglicht.

Es wurde als vorteilhaft erkannt, wenn dabei zusätzlich und/oder alternativ zu dem vorstehenden vorgesehen ist, dass auf eine gleichzeitige Bestimmung des Abstands zwischen eines Smartphones oder dergleichen zu mehreren Sende-/Empfangseinrichtungen über Triangulation die Positionsbestimmung des Smartphones oder dergl. in Relation zu den Sende-/- Empfangseinrichtungen erfolgt und im Ansprechen darauf ein in der Nähe des Smartphones befindliches Steuer- und/oder Sensormodul identifiziert wird, ohne dass dieses selbst über eine Nahbereichs-Empfangseinrichtung verfügt, und dass dann so automatisch ein zugehöriges Bedienprogramm geladen und/oder das notwendige Bedienmenü für eben dieses Steuer-und/oder Sensormodul aktiviert und/oder eine Funktion desselben ausgelöst wird.

Es wird also vorgeschlagen, dass anhand z.B. einer Triangulation der Position des Mobilteils zunächst ein zu steuerndes Gerät und/ oder ein Steuer- bzw. Sensormodul identifiziert wird, welches selbst nicht zur Nahbereichskommunikation mit dem Smartphone oder der anderen Mobileinheit, die anstelle eines Smartphones verwendet wird, ausgelegt ist. Dies kann dann der Fall sein, wenn etwa in einem großen Raum eine Vielzahl von Geräten vorgesehen sind, zu denen dedizierte Leitungen führen, um sie zu betreiben, ohne dass an den Geräten selbst die eigentlichen Steuermodule vorgesehen sind. Als Beispiel sei etwa erwähnt eine Wohnung, in welcher elektrische Rollläden vorgesehen sind, zu deren Antrieben feste Leitungen in der Wand angeordnet sind, wobei diese Leitungen dann zu einen entfernt vom Rollladen liegendes, einer Zimmertür nahen Schalter geführt sind. Die Betätigung und Steuerung erfolgt also durch Schalter ausschließlich an der Zimmertüre, die entfernt vom Rollladen liegt. Gleichwohl kann es sinnvoll sein, die Bedienung dieses Rollladens genau dann auf einfache Weise zu ermöglichen, wenn der Benutzer unmittelbar am Fenster steht, indem zunächst die Position seines Smartphones oder anderen, zur Bedienung verwendeten Mobilteils bestimmt wird und dann im Ansprechen auf diese Position festgestellt wird, dass womöglich eine Rollladenbedienung gewünscht wird. In einem solchen Fall kann von dem neben der Zimmertüre in einer Unterputzdose verbauten Bedienermodul ein Bedienprogramm oder Bedienparameter geladen werden, um ein entsprechendes Menü auf dem Smartphone für die Bedienung zur Anzeige zu bringen. Dies kann gegebenenfalls abhängig davon gemacht werden, ob der Benutzer sich nicht nur hinreichend nah am Rollladen befindet, sondern gegebenenfalls auch das Smartphone oder andere Mobilteil geeignet orientiert, beispielsweise in Richtung auf den Rollladenkasten oder dergleichen. Es ist zudem möglich, zusätzlich und/oder alternativ eine Geste auszuwerten, um so festzustellen, dass eine Bedienung des Rollladens gewünscht wäre. Die Bedienung kann gegebenenfalls entweder durch Auswahl in einer Auswahlliste, d.h. über ein Bedienmenü, erfolgen, oder indem mehrere Gesten als Bedienung zugelassen werden, die unterschiedliche Reaktionen wie Heraufziehen eines Rollladens, Senken zu einer bestimmten Höhe oder vollständiges Schließen bewirken.

Eine vergleichbare Situation, bei der ein Gerät gesteuert wird, ohne dass am Gerät selbst eine Kommunikation mit einem Mobilteil wie einem Smartphone eines Benutzers ermöglicht ist, kann dort gegeben sein, wo dem Gerät zwar ein Steuer- bzw. Sensormodul zugeordnet ist, welches auch Befehle von Betätigungsmodulen empfangen kann, aber gemäß einer Schnittstelle und/oder einem Protokoll, über welches das Mobilteil selbst nicht unmittelbar kommunizieren kann. Dies erlaubt einerseits, sehr langsame Kommunikationsschnittstellen zu verwenden, da es eine Vielzahl von Verbraucher gibt, die zur Steuerung nur eine sehr niedrige Datenrate benötigen, während die Kommunikation mit einem Mobilteil im Regelfall schon aufgrund der im Regelfall aufwendigen Kommunikationsaufbau-Protokolle usw. größere Datenmengen erfordert. Die eigentliche Steuerung über langsame Kommunikationskanäle mit geringen Datenraten ablaufen zu lassen, hat den Vorteil, dass energiesparend kommuniziert werden kann, etwa weil das am Verbraucher angeordnete Modul nur selten angesprochen werden muss, etwa für eine angelegentliche Zustandsüberwachung wie bezüglich der sogenannten Herzschlagsignale dargelegt, und/oder für die seltene Übertragung von Steuerbefehlen. Damit kann insgesamt ein batteriesparender Betrieb ermöglicht werden und im Übrigen ein auf proprietären, nicht offenliegenden Protokollen basierendes System erhalten werden, was auch vorteilhaft ist, um Fremd-Zugriffe zumindest zu erschweren, typisch vollständig zu verhindern.

Soweit oben von einer gleichzeitigen Bestimmung des Abstandes zwischen Smartphone und mehreren Sende-Empfangseinrichtungen über Triangulation gesprochen wird, sei darauf hingewiesen, dass eine solche Bestimmung als hinreichend gleichzeitig angesehen wird, wenn die verschiedenen, bei der Triangulation herangezogenen Abstände zu den einzelnen Empfangseinrichtungen zeitnah nacheinander erfolgen. Zeitnah sind sie dann, wenn das Smartphone oder andere Mobilteil in der Zeit zwischen den einzelnen Messungen nicht um eine Strecke bewegt wurde, die eine bei der Triangulation zugelassene Genauigkeit überschreitet. Dort, wo die Bestimmung des Abstandes zu den einzelnen, für die Triangulation herangezogenen Sende-und Empfangseinrichtungen vom Smartphone oder Mobilteil nicht so schnell hintereinander oder bzw. nicht so exakt gleichzeitig aufgebaut werden kann, dass eine Bewegung des Mobilteils völlig außer Acht bleiben kann oder sogar angesichts typischer Bewegungsgeschwindigkeiten als ohnehin vernachlässigbar anzusehen ist, kann jeder Abstand mehrfach gemessen werden, wobei bevorzugt mehrfach zyklisch der Abstand zu den verschiedenen Sende- und Empfangseinrichtungen abgefragt bzw. bestimmt wird. Die mehrfache Bestimmung erlaubt es einerseits, aus den Einzelwerten bereits zu bestimmen, ob erhebliche Bewegungen aufgetreten sind, was gegebenenfalls sogar zur Bestimmung einer Bewegungsrichtung sinnvoll ist, um dann nicht nur die Position, sondern auch eine Bewegung und/oder eine Beschleunigung mit auszuwerten; es ist andererseits aber auch möglich, bei wiederholten Messungen (und gegebenenfalls daraus hergeleiteten Bewegungs- und Beschleunigungsrichtungen) für einen gegebenen Zeitpunkt zwischen den Messungen eine Position zu interpolieren und diese interpolierte Position als Position für die Triangulation und eine Reaktion im Ansprechen auf das Triangulationsergebnis wie oben stehend vorgeschlagen heranzuziehen.

Es sei im Übrigen erwähnt, dass die vorstehende Verwendung von ersten Modulen, die mit einem Mobilteil kommunizieren, und zweiten Modulen, die nicht mit einem Mobilteil, sondern nur mit anderen Modulen kommunizieren, als Beispiel für ein Master-Slave-System aufgefasst werden können. Dass die beschriebenen Aktionen auch nutzerspezifisch erfolgen können, indem zusätzlich eine Kennung des Nutzers, bevorzugt die eindeutige Bluetooth-ID seines Smartphones/Fernsteuerung, zur Programm-/Menüauswahl im Smartphone und/oder zur automatischen Funktionsauslösung im Steuer- und/oder Sensormodul oder zur automatischen Generierung einer Meldung verwendet wird, sei erwähnt.

Neben dem Einsatz in Gebäudesteuerungen und elektrischen Türöffnungseinrichtungen kann das offenbarte Verfahren auch in Verbindung mit Haushaltsgeräten, Kaufautomaten oder anderen zu bedienenden Geräten oder Einrichtungen dienen. Bewegt sich wie bevorzugt der Nutzer mit seinem Smartphone in Richtung eines Haushaltsgeräts und/oder zeigt er auf dieses, kann automatisch das notwendige Bedienprogramm und/oder Bedienmenü geladen oder gar ein Schaltvorgang direkt ohne Zutun des Nutzers ausgelöst werden.

Es soll erwähnt werden, dass neben der Auswahl des notwendigen Bedienmenüs durch Annäherung und/ oder Gestenerkennung, auch automatisch Schalt- und Steuervorgänge eingeleitet oder Nachrichten versendet werden können. So können bevorzugt bei Annäherung des Nutzers an ein Steuer- und/oder Sensormodul automatisch Licht geschaltet, am Haus geklingelt, Meldungen an Dritte oder andere Steuereinheiten verschickt, audiovisuelle Aufzeichnungen gestartet, Alarmanlagen aktiv bzw. inaktiv geschaltet oder eine Tür selbstständig geöffnet bzw. verriegelt werden.

Es soll erwähnt werden, dass die einzelnen Sende-/Empfangseinrichtungen (Knoten) bevorzugt nicht nur mit dem Smartphone kommunizieren, sondern möglichst auch untereinander, und dabei vorzugsweise die gleiche lokale drahtlose Kommunikationsverbindung nutzen. Damit die vielen Knoten sich nicht behindern, werden die Nachrichten zwischen ihnen, also die Steuer- und Statusdaten, bevorzugt nicht nur auf verschiedenen Frequenzkanälen, sondern auch zeitlich versetzt nach bekannten Verfahren übertragen.

Die Kontrolle, wann bestimmte Knotensignale übertragen werden, kann gegebenenfalls einem gemeinsamen Master übertragen werden, der für jeden der Knoten festlegt, wann dieser Daten senden darf. Die zeitliche Aufsynchronisation der einzelnen Knoten kann dabei auf dessen internen Takt jeder Einheit basieren.

Soll nun ein Steuerbefehl vom Smartphone/Tablet zu einem weiter entfernten Knoten übertragen oder Zustandsdaten von diesem empfangen werden, leitet der in Empfangsnähe zum Smartphone befindliche Knoten die Nachricht an bevorzugt einen nächsten zielgerätnäheren Knoten weiter, bis das Zielgerät erreicht ist. Um gleiche Nachrichten nicht mehrmals an verschiedene Empfänger versenden zu müssen, ist ein Broadcast vorteilhaft, dass heißt, eine Nachricht wird gleichzeitig an alle erreichbaren Knoten versendet, die dann ihrerseits die Nachricht an alle von ihnen zu erreichbaren Knoten versenden.

Es wurde als vorteilhaft erkannt, wenn dabei zusätzlich und/oder alternativ zu dem vorstehenden vorgesehen ist, dass eine Kennung des Nutzers, bevorzugt die eindeutige Bluetooth-ID seines Smartphones/Fernsteuerung, zur Auswahl eines Bedienprogramms und/oder Untermenüs, zum Auslösen eines automatischen Funktionsauslösung und/oder Senden einer Meldung herangezogen wird.

Es ist einsichtig, dass das Auslösen einer automatischen Funktion, Senden einer Meldung usw. im Ansprechen auf eine erfasste Kennung des Nutzers wie einer Bluetooth-ID typisch damit einhergehen wird, dass das System konfigurierbar ist. Es sind also Speicher für wahlweisen Zugriff (RAM) vorhanden, in denen für mehrere Kennungen gewünschte Systemreaktionen wie Optionen in einem Bedienprogramm, die einem bestimmten Benutzer zugänglich sind, Untermenülisten, die an den Benutzer übertragen werden usw. festgelegt sind. Auf den Empfang einer Kennung wird dann zunächst überprüft, ob die Kennung in eine Liste als bekannt vermerkt ist und im Ansprechen auf das Erkennen dann entweder eine vermerkte Reaktion ausgelöst bzw. eine Auswahl unter verschiedenen, Listen gemäß zugelassenen Reaktionen abgewartet oder initiiert, oder es wird, falls die Kennung nicht in der Liste enthalten ist, eine weitere Kommunikation unterbunden bzw. eine Default-Auswahl fir nicht erkannte Benutzer zugelassen.

Es sei erwähnt, dass eine Reaktion des Systems, gegebenenfalls auch eine benutzerspezifische Reaktion des Systems, zeitabhängig erfolgen kann. Dies ermöglicht etwa Besuchern eines Gebäudes wie Handwerkern, zu vereinbarten Zeiten, aber nur während dieser, Zutritt zu erlangen und so weiter.

Es wurde also als vorteilhaft erkannt, wenn vorgesehen ist, dass bei Annäherung an eine Sende-/Empfangseinrichtung mit angeschlossenem Steuer- und/oder Sensormodul bzw. Gerät zeitabhängig, bevorzugt aufgrund einer Zeittabelle im Gerät und/oder in Smartphone und/oder auf einem entfernten Server, und/oder NUTZERABHÄNGIG, bevorzugt aufgrund der ID der Kommunikationsverbindung oder einer Nutzerkennung im Smartphone/Tablet, bestimmt wird, dass Daten lokal im Gerät und/oder auf dem Smartphone und/oder auf einem entfernten Server gespeichert werden, wobei in den gespeicherten Daten bevorzugt enthalten sein kann: ein Zeitstempel, und/oder die Kennung des Nutzers, und/oder die ID der Kommunikationsverbindung, und/oder die Zustandsdaten des Steuer-/Sensormoduls bzw. Geräts, und/oder lokale Umgebungsdaten, wie Temperatur, Helligkeit, Zustand der Tür, Zustand des Schlosses, und/oder Daten vom Smartphone/Tablet des sich annähernden Nutzers.

Es sei erwähnt, dass insbesondere dort, wo eine Zeitabhängigkeit eines Modulverhaltens gegeben ist, eine bevorzugt wiederholte, besonders bevorzugt regelmäßig wiederholte Synchronisation verschiedener Module aufeinander vorgesehen werden kann. Dabei können unterschiedliche Anforderungen an die Genauigkeit der Synchronisation aufeinander und unterschiedliche Möglichkeiten, eine Synchronisation zu bewirken, unterschiedliche Dauern bis zu einer Wiederholung der Synchronisation erfordern. So wird es in Fällen, wo nur eine Zutrittsgestattung für Dritte gefordert ist, ausreichen, durch eine Synchronisation mit einer Zentrale und einer dort eventuell empfangenen Funkzeit eine Genauigkeit von wenigen Minuten einzuhalten; es ist also auch bei gravierendem Driftverhalten eines Taktgebers, etwa aufgrund von Temperaturschwankungen und dergleichen, im allgemeinen eine Synchronisation nur allenfalls alle paar Tage erforderlich, sodass eine etwa täglich vorgenommene Synchronisation völlig ausreicht und/oder die in der vorliegenden Anmeldungen an anderer Stelle beschriebene "Rucksack"-Synchronisation vorgenommen werden kann. Muss hingegen in komplexen Systemen aus vielen, per Funk miteinander kommunizierenden Einheiten sichergestellt werden, dass eine bestimmte Einheit nur innerhalb eines ihr zugewiesenen Zeitslots Daten sendet, wird es typisch erforderlich sein, dass sich dieser Zeitslot nicht soweit verschiebt, dass er mit den für andere Module vorgesehenen Slots überlappt. Da es gerade dort, wo sicherheitskritische Module wie Alarmsensoren eingesetzt werden, einerseits sinnvoll ist, vergleichsweise viele Module einzusetzen, beispielsweise, um eine Vielzahl von einzelnen Fensterscheiben, Zugängen usw. zu sichern, und zugleich die Wartezeiten, bis ein Sensormodul, das einen möglichen Alarmzustand erfasst hat, einen darauf bezogenen Hinweis absetzt, nicht zu groß werden soll, wird einzuschätzen sein, dass eine Synchronisation eine Genauigkeit von Bruchteilen einer Sekunde einhalten muss. Dies wird, gerade dann, wenn der Aufwand für einen einzelnen Taktgeber und dessen eventuelles Driftverhalten, aus Kostengründen nicht hoch gewählt wird, eine häufigere Synchronisation erfordern. Es ist hier sogar eine quasi kontinuierliche Synchronisation dadurch möglich, dass an wenigstens einer Stelle, beispielsweise vom Zeitslot-zuweisenden Master, erfasst wird, wann innerhalb des zugewiesenen Zeitslots eine Station zu senden beginnt und dieser Station bei zu großen Abweichungen von einem gewünschten Sendebeginn ein entsprechender Hinweis auf eine erforderliche Zeitslot-Veränderung gegeben wird. Alternativ kann abgewartet werden, bis es tatsächlich zu einer Kommunikationspaketkollision kommt, d.h. mehrere Module trotz bereits erfolgter Zeitslotzuweisung versuchen, gleichzeitig zu senden.

Die Aktivierung von Programmen oder Programmteilen bzw. spezieller kontextbezogener Menüs auf dem Smartphone/Tablet des Nutzers können vom Nutzer und/oder der aktuellen Uhrzeit abhängig und jeweils unterschiedlich sein, so dass z.B. ein Installateur, der anhand der ID seiner Kommunikationsverbindung erkannt wird, das Menü für die Konfiguration der im Raum befindlichen oder mit ihm logisch zusammenhängenden Geräte und deren Funktionen erhält, während z.B. ein anderer Nutzer das eigentliche, "normale" Bedienmenü für den Raum erhält.

Es wurde also als vorteilhaft erkannt, wenn zusätzlich und/oder alternativ zu dem vorstehenden vorgesehen ist, dass bei Annäherung an eine Sende-/Empfangseinrichtung mit angeschlossenem Steuer- und/oder Sensormodul bzw. Geräts zeitabhängig, bevorzugt aufgrund einer Zeittabelle im Gerät und/oder des Smartphone und/oder auf einem entfernten Server, und/oder Nutzerabhängig, bevorzugt aufgrund der ID der Kommunikationsverbindung oder einer Nutzerkennung im Smartphone/Tablet, unterschiedliche Programme im Smartphone aktiviert werden und/oder automatisch in ein Menü verzweigt wird, welches der spezifische Nutzer für die aktuelle Bedienung voraussichtlich benötigt, bevorzugt das örtlich passende Menü zu einer lokalen Raumlichtsteuerung, Heizungsregelung, einer Türöffnungseinrichtung oder auch zu einem Kaufautomaten, in deren Nähe er sich befindet, und vorzugsweise ohne dass der Nutzer selbst das entsprechende Programm aussuchen, starten und in das notwendige Untermenü verzweigen muss.

Es wurde auch als vorteilhaft erkannt, wenn dabei zusätzlich und/oder alternativ vorgesehen ist, dass auf Annäherung an eine Sende-/Empfangseinrichtung mit angeschlossenem Steuer- und/oder Sensormodul bzw. Geräts zeitabhängig, bevorzugt aufgrund einer lokalen Zeittabelle im Gerät und/oder in Smartphone und/oder auf einem entfernten Server, und/oder nutzerabhängig, bevorzugt aufgrund der ID der Kommunikationsverbindung oder einer Nutzerkennung im Smartphone/Tablet, unterschiedliche Programme oder Teile des Programms davon automatisch über die lokale Kommunikationsverbindung, bevorzugt über Bluetooth, von der Sende-/Empfangseinrichtung zum Smartphone und/oder umgekehrt geladen werden. Es wurde auch als vorteilhaft erkannt, wenn dabei zusätzlich und/oder alternativ zu dem vorstehenden vorgesehen ist, dass auf Annäherung an eine Sende-/Empfangseinrichtung mit angeschlossenem Steuer- und/oder Sensormodul bzw. Geräts zeitabhängig, bevorzugt aufgrund einer Zeittabelle im Gerät und/oder im Smartphone und/oder auf einem entfernten Server, und/oder nutzerabhängig, bevorzugt aufgrund der ID der Kommunikationsverbindung oder einer Nutzerkennung im Smartphone/Tablet, automatisch Schalt- und Steuervorgänge eingeleitet und/oder Nachrichten versendet werden und so bevorzugt bei Annäherung Licht geschaltet, am Haus geklingelt, Meldungen an Dritte und/oder andere Steuereinheiten verschickt werden, audiovisuelle Aufzeichnungen starten oder eine Tür selbstständig öffnet bzw. verriegelt.

Es wurde auch als vorteilhaft erkannt, wenn dabei zusätzlich und/oder alternativ zu dem vorstehenden vorgesehen ist, dass auf Annäherung an eine Sende-/Empfangseinrichtung mit angeschlossenem Steuer- und/oder Sensormodul bzw. Gerät Meldungen über das Smartphone/Tablet und/oder andere Module, die ggfs. die gleiche Kommunikationsverbindung nutzen, an Module einer Steuerungs- oder Meldeanlage eines Gebäudes gesendet, bzw. weitergeleitet werden, wobei in den Meldungen bevorzugt enthalten sein kann: ein Zeitstempel und/oder die Kennung des Nutzers und/oder die ID der Kommunikationsverbindung und/oder die Zustandsdaten des Steuer-/Sensormoduls bzw. Geräts und/oder lokale Umgebungsdaten, wie Temperatur, Helligkeit, Zustand einer Tür, Zustand eines (Tür-)Schlosses, und/oder Daten vom Smartphone/Tablet eines sich annähernden Nutzers.

Indern Meldungen betreffend das Smartphone, Tablet oder die andere mobile Einheit, die sich einer Sende-und Empfangseinrichtung nähert, an eine Zentrale, eine Steuerungs- oder Meldeanlage, zumindest aber an eine Speichereinheit weitergeleitet werden, kann die Sicherheit des Gesamtsystems erhöht werden, weil sich nachvollziehen lässt welche, bzw. wann sich bestimmte mobile Einheiten nahe des Systems befanden. Dies kann den Schutz gegen Eindringlinge verbessern und das Nachverfolgen von Bewegungen eines nur für bestimmte Bereiche autorisierten Benutzers erleichtern. Es sei erwähnt, dass die übertragenen Daten gegebenenfalls verschlüsselt übertragen werden können und auch eine Fälschungssicherheit abgespeicherte Informationen zu gewährleisten ist.

Es sei erwähnt, dass der Nutzer anhand der ID des Smartphones/Tablet identifiziert und spezifische Aktionen ausgelöst werden können, wie z.B. eine Tür zu öffnen oder automatisch das gewünschte Lichtszenario dieses Nutzers zu aktivieren, wenn er den Raum betritt. Diese Aktionen können auch zeitabhängig ausgelöst werden, so dass ein Nutzer nur zu bestimmten Zeitpunkten Zutritt erhält und sich die Tür öffnet, wenn er anhand der ID seiner Kommunikationsverbindung detektiert wird. Es soll erwähnt werden, dass auch die Abfrage einer Pinnummer oder eine andere Art der Identifizierung über das Smartphone/Tablet vom Nutzer oder einem Dritten zusätzlich angefordert werden kann, insbesondere auch zeitabhängig, wenn der Nutzer außerhalb üblicher Zeiten die Tür öffnen möchte.

Zu den spezifischen Aktionen, die auf Identifikation einer Mobileinheit (und somit des diesem typisch zugeordneten Benutzers) ausgelöst werden können, gehört insbesondere die Übertragung von Statussignalen. So kann etwa einer nach Hause kommenden Personen mitgeteilt werden, dass ein Feuchtigkeitssensor im Keller angesprochen hat, was typisch bei Wasserschäden, während Regenereignissen offenen Fenstern usw. der Fall sein wird und demnach eine entsprechende, oftmals möglichst sofortige Reaktion des Benutzers erfordert, auch wenn gegebenenfalls eine entsprechende Nachricht nicht vorab über Datenfernübertragung, beispielsweise per SMS, erforderlich war.

Es wurde demnach als vorteilhaft erkannt, wenn zusätzlich und/oder alternativ zu dem vorstehenden vorgesehen ist, dass bei Annäherung an eine Sende-/Empfangseinrichtung mit angeschlossenem Steuer- und/oder Sensormodul bzw. Geräts von einem entfernten Server über das Smartphone und dessen Kommunikationseinrichtung und/oder über das Modul/Gerät und dessen Kommunikationseinrichtung, Programme oder Programmteile und/oder Zeittabellen und/oder Berechtigungen für den Nutzer und/oder andere Daten in das Steuer-/Sensormodul bzw. Gerät geladen werden.

Es kann also vorgesehen sein, dass im Ansprechen auf die Annäherung eines Mobilteils an eine Sende- und Empfangseinrichtung Daten von einer anderen Stelle heruntergeladen werden. Die Annäherung kann wieder durch Triangulation bestimmt werden, dies ist aber nicht zwingend. Sie kann insbesondere durch Nahfeldkommunikation erfasst werden, etwa durch Auswertung der Signalstärke. Dabei ist anzumerken, dass es oftmals gewünscht ist, eine entsprechende Annährung mit geringem Energieaufwand zu detektieren, etwa, weil das Steuer- oder Sensormodul batteriebetrieben ist. Die Übertragung von Daten von einem entfernten Server kann dann über eine andere, insbesondere schnellere Kommunikationsschnittstelle erfolgen. Der Server kann ein Internetserver sein, der über das Internet erreichbar ist, es kann sich aber auch um einen lokalen Server handeln. Vorteile eines Systems, bei welchem im Ansprechen auf die Annäherung an ein gegebenes Modul einem Gerät Daten von einem anderen Server übertragen werden, ergeben sich vor allem dort, wo eine Vielzahl von Benutzern möglicherweise Daten benötigt und die Datenmengen eventuell erheblich sind. Eine mögliche Anwendung ist etwa in Museen gegeben, in welchen sich Benutzer von Exponat zu Exponat bewegen, die Annäherung an das Exponat mit einem Steuer- oder Sensormodul erfasst wird, dem Smartphone eine Kennung des Moduls übertragen wird, dem sich der Benutzer angenähert hat und das Smartphone bzw. eine darauf laufende Anwendung dann die zu dem Exponat gehörende Information, die das Museum bereitstellt, abruft. Der Abruf selbst kann dann beispielsweise von einem museumsinternen Server über WLAN erfolgen. Im vorbeschriebenen, spezifischen Beispiel kann der Benutzer eine App auf seinem Mobilgerät laufen lassen, über welche dann die entsprechenden, vom Server erhaltenen Informationen angezeigt werden können. Es ist aber auch möglich, vollständige Steuerprogramme für bestimmte Maschinen abzurufen und/oder das Mobilgerät als Gateway des Steuer- bzw. Sensormoduls am Gerät zu verwenden, um Zugangsberechtigungen des Nutzers und dergleichen zu erfahren. Ein möglicher Ablauf, mit welchem sichergestellt werden kann, dass im Ansprechen auf eine Annäherung von einem entfernten Server über ein Mobilteil Programme, Programmteile, Zeittabellen, Berechtigungen usw. in das Steuermodul geladen werden, kann aussehen wie folgt: Zunächst wird die Annäherung des Mobilgerätes an das Steuer- bzw. Sensormodul erfasst. Dies kann, wie beschrieben, durch Triangulation mit mehreren Geräten erfolgen, durch Abfrage, ob eine Feldstärke auf einem Kommunikationskanal einen bestimmten Schwellwert überschritten hat oder dergleichen. Im Ansprechen auf eine detektierten Annäherung wird dann, sofern das Steuer- bzw. Sensormodul oder andere Gerät Daten nicht selbst abruft, sondern ein Datenabruf über das Gerät erfolgt, eventuell die Mobilteilkennung ausgelesen und jedenfalls dem Mobilteil ein Datenstring bereitgestellt, den dieses unverändert oder beispielsweise zwecks Verschlüsselung, Umprotokollierung und dergleichen verändert, über eine zweite Schnittstelle an einen Server überträgt. Auf den Empfang des gegebenenfalls veränderten Datenpaketes wird dieser Server dann die Übertragung von Informationen an die Mobileinheit auslösen, in welcher die Information zwischengespeichert wird und von welchem aus sukzessive, gegebenenfalls nach Umformatierung für andere Protokolle, Umverschlüsselung usw., Informationen an das Steuer- bzw. Sensormodul übertragen werden, damit dieses dann vom Benutzer über das Mobilteil steuerbar ist. Ein solches Vorgehen hat dort Vorteile, wo sichergestellt werden soll, dass Geräte stets mit aktuellen Programmversionen bedienbar sind, wo aber der Aufwand, stets alle Steuer- bzw. Sensormodule über mögliche Berechtigungen bestimmter Benutzer zu informieren, nicht vertretbar ist oder eine Benutzung ermöglicht werden soll, bevor entsprechende Informationen an alle bzw. zumindest das jeweils benötigte Steuer- bzw. Sensormodul übertragen wurde.

Wie vorstehend ersichtlich, ist es vorteilhaft, wenn mehrkanalige Leistungssteuervorrichtungen in der Lage sind, die Annäherung eines Mobilgerätes zu erfassen, insbesondere durch Messungen unter Verwendung der Schnittstelle wie durch Triangulation, Signalstärken- bzw. Feldstärkenmessungen und dergleichen. Wünschenswert ist, eine solche Bestimmung einer Mobileinheitsposition auf energiesparende Weise und/oder mit geringer Belastung eines Kommunikationsnetzes durchzuführen.

Es wurde diesbezüglich als vorteilhaft erkannt, wenn ein Verfahren mit einer Vorrichtung zur Feldstärkemessung und mit einer durch eine Batterie versorgte Sende-/Empfangseinrichtung mit angeschlossenem Steuer- und/oder Sensormodul bzw. Gerät, bevorzugt einer Einheit einer Gebäudesteuerung, einer Alarmanlage, einer Heizungssteuerung, einer Brandmeldeanlage, eines Haushaltgeräts, eines Kaufautomaten oder einer Türöffnungsvorrichtung, auszuführen, wobei vorgesehen ist, dass die Vorrichtung zur Feldstärkemessung energiesparend und ggfs. im Zeitmultiplex betrieben wird und die Annäherung eines Mobiltelefons/ Smartphones/Tablet misst, und erst auf Annäherung die eigentliche Sende-/Empfangseinrichtung vollständig einschaltet und mit den Smartphone eine Kommunikationsverbindung aufbaut.

Ein energiesparender Betrieb wird zunächst dadurch ermöglicht, dass eine Sende-Empfangseinrichtung nicht kontinuierlich betrieben wird. In vielen Fällen, etwa in Gebäuden, in welchen sich nur Personen zu Fuß bewegen, wird es ausreichen, auf die Annäherung einer von einer Person getragenen Mobileinheit allenfalls im Sekundentakt, gegebenenfalls noch seltener, beispielsweise nur alle 2,5 bis 10 Sekunden zu prüfen. Abhängig davon, wie frequentiert ein Gebäude ist, über welchen Abstandsbereich Signale erfasst werden können (was einsichtigerweise von baulichen Gegebenheiten sowie dem jeweils verwendeten Kommunikationsstandard abhängt), wird innerhalb der angegebenen Zeiträume zwar eine Annäherung erfolgen können, die einen Benutzer in die Reichweite einer Kommunikationsschnittstelle bringt, ohne dass aber sofort darauf reagiert werden muss. Die eigentliche Überprüfung auf eine sich annähernde Mobileinheit wird vergleichsweise kurz sein; typisch reichen für die Abfrage, ob sich ein Benutzer nähert, Sekundenbruchteile. Ein erster energiesparender Effekt ergibt sich somit durch einen nur zeitweise erfolgenden Betrieb. Es sei erwähnt, dass dann, wenn ein Signal erfasst wird, beispielsweise ein zunächst schwaches Signal, dort, wo bei einem nur zeitweisen Betrieb unterschiedliche Intervalle möglich sind, eine Verkürzung der Intervalle bis zur nächsten Abfrage vorgesehen werden kann. Damit wird erreicht, dass gegebenenfalls ein noch weit entfernter Benutzer zwar erfasst wird, aber erst dann, wenn Hinweise auf seine tatsächliche Annäherung bestehen, eine häufigere Überprüfung oder ein häufigeres Angebot, eine Kommunikation aufzubauen, erfolgt. In Fällen, in denen sich ein Benutzer in sehr großen Gebäuden kurzfristig in der Reichweite eines entfernten Sende-Empfangsmoduls befindet, wird damit verhindert, dass dies durch die bloße Annäherung über Gebühr Energie verbraucht; zudem sinkt in frequentierten Gebäuden die andernfalls für bloße Kommunikationsaufbau benötigte Kanalbelegung, was bei tatsächlichem Kommunikationsbedarf die Bandbreite erhöht. Gleichzeitig kann zudem in Fällen, in denen ein Benutzer sich dem Modul tatsächlich nähert, eine durch die Verkürzung der Intervalle bis zur nächsten Kommunikation oder dem nächsten Erfassen einer Feldstärke, die Reaktionszeit verbessert werden, sodass der Benutzer auch in energiesparend betriebenen System keine langsamen Systemreaktionen erfährt.

Es sei weiter darauf hingewiesen, dass gerade in großen Gebäuden oftmals eine Vielzahl von Sende-Empfangseinheiten vorhanden sein werden, die eine Annäherung eines Benutzers erfassen müssen. Wenn diese Module simultan versuchen, eine Kommunikationsverbindung aufzubauen und/oder simultan ein Gerät versucht, die Feldstärke einer Mobileinheit zu bestimmen, während ein anderes Modul sendet, kann dies zu wechselseitigen Beeinträchtigungen führen. Daher ist es vorteilhaft, jedem Modul zeitmultiplexartig einen oder mehrere Zeitslots zuzuweisen. Dort, wo sehr lange Zeiträume bis zu einer weiteren Inbetriebnahme und Abfrage vorgesehen sind, können Sende-Moduleinheiten nur jeden N.-ten Zeitslot aktiviert werden, solange kein Benutzer erfasst wird. Auf Annäherung werden dann die Anzahl ausgelassener zugewiesener Zeitslots verringert.

Eine weitere Möglichkeit des Energiesparens besteht bei Kommunikationsschnittstellen, die die Kommunikation auf einer Vielzahl unterschiedlicher Kanäle ermöglichen, wie bei OFDMfähigen Systemen (orthogonal frequency division multiplexing). Bei einem solchen Verfahren muss nicht auf allen zur Verfügung stehenden Frequenzkanälen simultan die Feldstärke erfasst werden; es reicht, auf einigen oder einem der zur Verfügung stehenden Kanäle eine Feldstärke zu detektieren oder Annäherung nachzuweisen. Erst dann, wenn hinreichende Signalstärken erfasst werden, braucht eine volle Kommunikation über möglichst viele der zur Verfügung stehenden Kanäle aufgebaut werden. Auch auf diese Weise kann gegebenenfalls Energie gespart werden.

Aus dem Vorstehenden ist ersichtlich, dass es in einer Vielzahl von Fällen sinnvoll ist, ein Steuer- und/oder Sensormodul entweder vollständig unabhängig von einer Wechselspannungsversorgung betreiben zu können oder aber zumindest temporär einen Ausfall überbrücken können. Dazu ist es einleuchtender Weise möglich, Einwegbatterien, wiederaufladbare Batterien usw. zu verwenden, mit denen wenigstens Teile einer Steuerung versorgt werden und/oder gegebenenfalls hochkapazitive Pufferkondensatoren.

Wird eine Sende-/Empfangseinrichtung mit angeschlossenem Steuer- und/oder Sensormodul bzw. Gerät, bevorzugt eine Einheit einer Gebäudesteuerung, einer Alarmanlage, einer Heizungssteuerung, einer Brandmeldeanlage, eines Haushaltgeräts, eines Kaufautomaten oder einer Türöffnungsvorrichtung, mit einer Batterie versorgt, wird es in der Regel sinnvoll sein, das akku- bzw. batteriebetriebene Gerät im Stromsparmodus zu betreiben. Die Überwachung eines Schaltkontakts oder eines Temperatursensors benötigt in der Regel sehr wenig Energie, aber die zur Kommunikation notwendige Sende-/Empfangseinrichtung und vor allem deren digitale Weiterverarbeitung wird in der Regel viel Energie verbrauchen, so dass bei deren Dauerbetrieb die Batterielebensdauer sehr eingeschränkt wäre. Deshalb ist es zweckmässig und bevorzugt, zumindest die Sende-/Empfangseinrichtung zeitweise abzuschalten oder in einen Energiesparmodus zu versetzen, und diese dann bei Bedarf aufzuwecken bzw. einzuschalten.

Es sei diesbezüglich erwähnt, dass sich eine Vorrichtung zur Messung der Feldstärke in einem bekannten Frequenzband energiesparend aufbauen lässt, so dass eine solche Vorrichtung dazu benutzt werden kann, eine Annäherung einer anderen Sendereinheit, wie z.B. der Sendereinheit eines Mobiltelefons/Smartphones/Tablets, anhand des Anstiegs der Feldstärke in einem geeigneten Frequenzband seiner Kommunikationsverbindungen, wie bevorzugt Bluetooth, WLAN oder des Mobilfunks, zu detektieren, um dann die eigentliche Sende-/Empfangsvorrichtung einzuschalten und eine Kommunikationsverbindung zu dem sich nähernden Gerät aufzubauen.

Üblicherweise arbeiten Mobiltelefone/Smartphones im Mobilfunkbereich auf verschiedenen Frequenzbändern. Dazu kommen noch die Frequenzbänder für WLAN und Bluetooth. Deshalb kann es zweckmäßig sein, auf mehr als auf einem Frequenzband nach einem Anstieg der Feldstärke zu schauen um damit eine Annäherung zu detektieren. Dort, wo OFDM-Techniken angewandt werden, können mehrere der für die OFDM-Kommunikation verwendeten Frequenzen herangezogen werden. Dies kann intervallartig geschehen.

Eine bevorzugte Möglichkeit ist, die Sende-/Empfangseinrichtung bzw. die Feldstärke-Meßeinrichtung nur zeitgesteuert zu betreiben und jeweils zur Suche nach einem Kommunikationspartner nur kurz einzuschalten. Wird kein Kommunikationspartner in der Nähe gefunden, schaltet sich die Einheit bevorzugt für eine Sekunde ab bzw. fällt in den Energiesparbetrieb, um dann erneut für einige Millisekunden nach einem Kommunikationspartner zu suchen.

Werden im Übrigen solche Sende-/Empfangseinrichtung mit angeschlossenem Steuer-und/oder Sensormodul bzw. Gerät, wie einer Einheit einer Gebäudesteuerung, einer Alarmanlage, einer Heizungssteuerung, einer Brandmeldeanlage, eines Haushaltgeräts, eines Kaufautomaten oder einer Türöffnungsvorrichtung, gestört, indem deren Funkverbindung beeinträchtigt wird, etwa durch einen Manipulationsversuch mit einem Jammer, kann dies zudem gut daran festgestellt werden, dass die Netzwerkverbindungen zu anderen Einheiten teilweise oder ganz ausfallen. Dies könnte dann zumindest einen lokalen Alarm auslösen, der bevorzugt audiovisueller Natur sein wird und/oder die lokalen Aktoren verwendet, bevorzugt etwa durch Einschalten oder Blinken des Raumlichts oder Herauf- und Herunterfahren der Rollos.

Es wurde demgemäß als vorteilhaft erkannt, wenn ein entsprechendes Verfahren mit mehreren Sende-/Empfangseinrichtungen mit angeschlossenem Steuer- und/oder Sensormodul bzw. Gerät ausgeführt wird, bevorzugt Einheiten einer Gebäudesteuerung, einer Alarmanlage, einer Heizungssteuerung, einer Brandmeldeanlage, eines Haushaltgeräts, eines Kaufautomaten und/oder einer Türöffnungs-vorrichtung, wobei jede einzelne Sende-/Empfangseinrichtung bei teilweiser Störung oder Ausfall der Kommunikationsverbindung signalisiert, und zwar den anderen Sende-/Empfangseinrichtungen, und/oder die Störung/ den Ausfall dem Nutzer signalisiert, bevorzugt durch eine audiovisuelle Meldung oder durch die lokalen gesteuerten Verbraucher, wie bevorzugt durch Einschalten oder Blinken des Raumlichts oder Auf- und Abfahren der Rollos.

Es wird auch offenbart, dass die Annäherung des Nutzers an die lokale Einrichtung anhand der drahtlosen Kommunikationsverbindung zwischen beiden bestimmt wird. Die Kommunikationsverbindung wird dabei gleichzeitig zur Entfernungs-und/oder Geschwindigkeitsbestimmung des Nutzers bezogen auf die lokale Sende-/Empfangseinrichtung bzw. des angeschlossenen und zu bedienenden Steuer- und/oder Sensormoduls herangezogen. Die Bestimmung der Annäherung kann bevorzugt durch Messung der Feldstärke der Kommunikationsverbindung zwischen Smartphone und lokaler Einrichtung, vorzugsweise von beiden Seiten aus, geschehen, als auch durch bekannte Entfernungsmessverfahren anhand der Signallaufzeit zwischen Mobileinheit wie Smartphone und der Sende-/Empfangseinrichtung. Auch eine zweite Kommunikationsverbindung könnte zur Entfernungsmessung herangezogen werden.

Die gleichzeitige Bestimmung des Abstands von z.B. Smartphone zu mehreren Sende-/Empfangs- Einrichtungen ermöglicht die Triangulation und Positionsbestimmung des Smartphones in Relation zu den Sende-/Empfangseinrichtungen. Dies kann dazu verwendet werden, ein in der Nähe des Smartphones gelegenes Steuer- und/oder Sensormodul zu identifizieren, ohne dass dieses selbst über eine Nahbereichs- Empfangseinrichtung verfügen muss, um dann automatisch das zugehörige Bedienmenü dieses Moduls oder Gerätes zu laden und/oder zu aktivieren.

Zwecks Triangulation wird dann bevorzugt die Signalstärke oder ein anderes entfernungsindikatives Signal zu mehreren Gegenstationen bestimmt und daraus ein Aufenthaltsraum bzw. Aufenthaltspunkt bestimmt. Hingewiesen sei in diesem Zusammenhang aber zunächst darauf, dass eine Messung über die Signalstärke zwar besonders einfach implementiert werden kann, dass aber die Bluetooth - oder anderen Funksignale letztlich hochfrequente Signale darstellen, so dass sie ohne weiteres zur Messung von Abständen genutzt werden können. Per se wird dem Fachmann einsichtig sein, dass eine Entfernung zunächst insoweit über Laufzeiten eines hochfrequenten Signals von einem Sender zu einem Empfänger und bzw., als Roundtriptime nach Rücksendung eines Signals, ohne weiteres messbar ist. Es wird auch einsichtig sein, dass in Systemen, bei welchen auf ein ausgesendetes Signal nicht einfach eine Reflektion erfolgt, wie dies bei einem Echolot der Fall ist, sondern bei welchem statt eines Echos ein Antwortsignal erzeugt wird, die beim antwortenden Empfänger benötigte Verzögerung der Antworterzeugung berücksichtigt werden muss. Da aber eine solche Antwort ohne Weiteres in physikalischen Schichten der Kommunikationsschnittstelle, d.h. ohne Beeinträchtigung durch Software und damit Betriebssysteme generiert werden kann, wird diese Zeit praktisch konstant sein und daher kann diese Verzögerungszeit, die nicht laufstreckenabhängig ist, sondern von Verzögerungen in der Elektronikschaltung bedingt, leicht berücksichtigt werden. Diese Latenzzeit könnte beispielsweise fabrikseitig ausgemessen und einer Gegenstelle explizit mitgeteilt werden. Ggf könnte sogar eine Taktfrequenzabhängigkeit der Verzögerung, d.h. die Abhängigkeit der Verzögerung von der Taktfrequenz des antwortenden Elementes berücksichtigt werden, beispielsweise durch Feststellung der Sendefrequenz. Sind die Frequenzen genau messbar, wird überdies auch eine Bewegung bzw. deren Geschwindigkeit per se, beispielsweise durch Erfassungen von Dopplerverschiebungen in den Signalen erfassbar. Insbesondere dort, wo eine Kommunikation mit mehreren Gegenstellen zu Zwecken der Triangulation erfolgt, können dabei besonders hohe Genauigkeiten erzielt werden.

Es sei aber erwähnt, dass sich Geschwindigkeiten ggf. auch anders feststellen lassen, beispielsweise durch die Veränderung der Signalstärken oder anderer entfernungsindikativer Signale mit der Zeit. Die Erfassung von Bewegungen, sei es über Dopplerverschiebungen, die Erfassung von entfernungsindikativen Signalen über der Zeit und Betrachtung von deren Änderungen mit der Zeit, beispielsweise von radiosignalstärkeindikativen Daten ist auch deshalb vorteilhaft, weil damit die Annäherung eines Benützers erfasst werden kann. Dies ist etwa dort vorteilhaft, wo ein Benützer sich einer Tür nähert, die ihm geöffnet werden soll. Indem die Annäherung an die Tür erfasst wird, kann in vielen Fällen, etwa wenn ein Gang nur auf eine Tür zuführt, bereits frühzeitig eine Öffnung eingeleitet werden. In anderen Fällen, wenn etwa ein Gang an einer Tür vorbei führt, sodass anfänglich noch unklar ist, ob der Benützer aktuell durch die Türe treten muss und sie ihm dafür zu öffnen ist, oder ob er an der Türe vorbei geht, kann ausgewertet werden, ob er in der Nähe der Türe, was für Benützer, die in einem Raum treten wollen, typisch ist, seine Schritte verzögert. Es kann also zur Bedienung einerseits die Position, andererseits die Annäherungsgeschwindigkeit und überdies auch die Beschleunigung eines Benützers in der Nähe einer Gegenstelle berücksichtigt werden. Diese sind auch durch wiederholte Messungen abstandsindikativer Signale und Quotientenbildung bestimmbar.

Es sei erwähnt, dass in bestimmten Fällen, wie bei Kommunikation über Bluetooth, zwar für die Positionsbestimmung Vorteile erhalten werden, wenn eine Kommunikation mit vielen Gegenstellen erfolgt, dass aber die Verwendung vieler Gegenstellen den Nachteil hat, dass zu diesen jeweils ein Kommunikationskanal aufgebaut werden muss.

Der Aufbau eines Kommunikationskanals muss dabei ausgehandelt werden und gerade in umfangreichen Systemen kann es passieren, dass durch das Vorhandensein sehr vieler Sender und Empfänger ein solcher Kommunikationsversuch durch die Kommunikationsversuche anderer Teilnehmer gestört ist. Daher wird typisch mit einem Zeitschlitzverfahren gearbeitet, d.h. es wird immer wieder versucht, eine Kommunikation aufzubauen und dann eine bestimmte Zeit abgewartet, bis mehr oder minder zufällig ein Zeitschlitz gefunden wird, indem gerade keine anderen Teilnehmer den Kommunikationsaufbau stören. Besonders vorteilhaft ist es hierbei, wenn der Abstand zwischen zwei Versuchen eines Kommunikationsaufbaus abhängig von der Annäherung an den Empfänger gewählt wird.

Es sei darauf hingewiesen, dass eine Annäherung an einem Empfänger gerade, aber nicht nur dort, wo eine Triangulation möglich ist und/oder insbesondere auch Signalstärken zu vielen Empfängern nach Ablaufen eines Gebäudes zu berücksichtigen sind, eine Positionsbestimmung noch weiter verbessert werden kann durch Berücksichtigung von Signalen von Beschleunigungsmessern in Mobiltelefonen oder dergleichen. Ggf. kann auch eine an einem Mobilteil bestimmte Ausrichtung ausgewertet werden, was nicht nur vorteilhaft ist, um zusätzlich zu entfernungsindikativen Daten herangezogen zu werden, sondern auch, um eine bestimmte Funktionalität zu gewährleisten. Aus dem vorstehenden wird ersichtlich sein, dass es möglich ist, die Annäherung eines Benützers an ein oder mehrere Gegenstellen, sowie die Position eines Benützers relativ zu mehreren Gegenstellen festzustellen. Es sei darauf hingewiesen, dass es demnach möglich ist, eine Position insbesondere serverfrei, d.h. lokal festzustellen. Dies kann nun zu verschiedenen Zwecken genützt werden. Es ist hier bereits diskutiert worden, dass ein System auf Erkennen einer Kennung Schalter gemäß Benützerpräferenzen konfigurieren kann, wenn ein bestimmter Benützer in den Raum kommt. Hier ergeben sich weitere Verbesserungen.

Es wird jetzt möglich, lokal bestimmte Reaktionen zu veranlassen. Dies sei an verschiedenen Beispielen erläutert. Dabei sei betont, dass die erfindungsgemäße Mehrkanalleistungssteuervorrichtung mit geringem Aufwand so ausgerüstet werden kann, dass sie nicht nur mehrkanalfähig ist, sondern auch besonders gut kommunizieren kann. Die beschriebenen Reaktionen sind insoweit zwar unabhängig von der Verwendung einer Mehrkanalleistungsvorrichtung implementierbar, aber gleichwohl dort besonders leicht erzielbar und vorteilhaft. Viele Geräte wie beispielsweise Telefone können mit einer Zentrale kommunizieren. Wenn in einem Raum ein Telefon fest installiert ist, das Signale drahtlos empfangen kann, die anzeigen, dass sich eine bestimmte Person im Raum befindet, wird es in einer bevorzugten Variante so ausgebildet, dass es in einer Zentrale eine Umleitung von Anrufen für diesen Benützer anfordert. Ggf. kann dazu das jeweilige Telefon beim Benützer anfragen, ob an ihn umgeleitet werden soll. In gleicher Weise können etwa Tür-Klingelalarme in den entsprechenden Raum und/oder zu dieser Person umgeleitet werden. Dies ist auch in Privathäusern von großem Vorteil. Zugleich kann die Ortung wie vorstehend beschrieben verbessert werden.

Es sei in diesem Zusammenhang hingewiesen unter anderem auf die DE 10 2009 052 952.7, die einen Präsenzmelder zeigt, wobei mittels WLAN eine Fernkommunikation ermöglicht wird und bei Anwesenheit, die auf automatisiertes In-Kontakt-Treten mit einem Empfänger erkannt wird, bestimmte Stromverbraucher in ihrem Betriebszustand verändert werden. Es wird auch verwiesen auf die WO 01/31619 A1, welche die Übertragung von standortspezifischen Informationen betrifft und erwähnt, dass ortspezifische Informationen sowie angeblich "sämtliche für die Kommunikation notwendigen Signale" als Bluetooth-Signal übertragen werden können. Dass ein Benützer bei einem Informationswiedergabemittel lokalisiert wird und ihm parameterabhängig lokal bestimmte Informationen wiedergegeben werden, ist aus der WO 2010/063280 bekannt.

Diese Schriften zeigen aber jedenfalls nicht, dass und wie bevorzugt Anrufe weitergeleitet werden, nachdem eine angerufene Person innerhalb eines Gebäudes mit kurzreichweitigen Signalen lokalisiert wurde. Dies geschieht in einer bevorzugten Variante der Verbesserung einer Haustechnikanordnung zunächst dadurch, dass ein Benützer lokalisiert wird. Bevorzugt kann dies anrufunabhängig geschehen. Sofern ein bestimmter Benützer aktuell nicht lokalisiert ist, wird bevorzugt an ein Standardgerät wie das Telefon im üblichen Büro des Mitarbeiters oder einen festen Anrufbeantworter weitergeleitet werden.

Hierfür sind Standardeinstellungslisten abzuspeichern.

Darüberhinaus wird nun vorgeschlagen, dass eine zweite Liste geführt wird, welche Bluetooth-Identifikationsnummern oder andere Funkgerätekennungen der Mitarbeiter den spezifischen Mitarbeitern zuordnen. Besonders bevorzugt ist es, hier eine Liste zu haben, welche die Funksignalkennungen eines Mitarbeiters seiner internen Durchwahl zuordnet. Es ist dann eine Stufe vorzusehen, welche auf das Erkennen der Mitarbeiterposition entfernt von seinem Standardbüro bzw. allgemein auf die Lokalisation des Mitarbeiters reagiert und es ist eine Liste vorzusehen, an welcher die Durchwahlen bzw. die Ansprechkennungen für bestimmte Büros bzw. Geräte vermerkt ist. Auf das Erkennen der Position einer Bluetooth-ID kann dann unter Rückgriff auf die erste Liste der Mitarbeiter erfasst werden und hierzu die Durchwahl bestimmt werden. Sollen Anrufe an diese Durchwahl vermittelt werden, wird aus der weiteren Liste jenes Gerät bestimmt, bei welchem sich die dem Mitarbeiter zugeordnete Bluetooth-ID gerade lokalisieren lässt und an ein geeignetes, dieser Lokalisation nahes Gerät durchgestellt. Damit erfolgt eine automatische Anrufumleitung.

Es ist besonders bevorzugt, wenn die Umleitung wieder aufgehoben wird, sobald der Mitarbeiter sich aus dem Raum beispielsweise aus einem Gastbüro entfernt. Da es nicht wünschenswert ist, für sehr kurze Pausen, in denen der Mitarbeiter sich z.B. einen Kaffee holt, die Umleitung aufzuheben, wohl aber wünschenswert ist, die Umleitung aufzuheben, wenn der Mitarbeiter das Gastbüro dauerhaft verlassen hat, können Umleitungsaufhebungen davon abhängig sein, dass sich der Benützer eine bestimmte Zeit nicht mehr in dem Gastbüro aufhält und/oder sich besonders weit davon entfernt hat.

Es sei erwähnt, dass ein solches Vorgehen insofern ein hohes Maß an Abhörsicherheit ergibt, als keine Anrufe auf Mobilteile geleitet werden müssen, die ggf nicht abhörsicher sind, sondern etwa ein Festnetzgerät verwendet werden kann. Dies schont zugleich die Akkulaufzeit von Mobilteilen und gewährleistet eine gleichbleibend hohe Audioqualität.

Zudem sind auch Bluetoothgeräte oder andere leichtortbare Geräte verwendbar, die selber kein Mikrophon benützen.

In gleicher Weise ist es auch möglich, bestimmten Personen ein Klingelsignal von einer Türe weiterzuleiten. Es sei darauf hingewiesen, dass, wie eingangs erläutert, in einer bevorzugten Variante der Dimmer einen letztlich digitalen Eingang besitzt. Wird ein solches Element als Zwischenstück für eine Klingeltaste verbaut, kann eine Zutritt suchende Person - nach Art eines Morsesignals - durch unterschiedliche Tastdauern bzw. Tastpausendauern bei mehrfacher Tastbestätigung eine spezifische Person in einem Haushalt anklingeln. Angesichts der Größe üblicher Familien wird es möglich sein, nicht nur jedem Familienmitglied in einem Haushalt einen dedizierten Klingelton zuzuordnen, sondern auch die Möglichkeit zu geben, mehrere häufige Besucher mit eigenen Tastcodes wie "kurz-lang-kurz-lang" oder "lang-lang-kurz" oder "langkurze Pause- sehr lang" etc, zu kodieren. Solche Codes werden angelernt d.h. es kann unter eine Liste mit solchen Codes gespeichert werden. Damit ist einerseits leicht ohne weitere Maßnahmen eine bestimmte Person im Haushalt zu informieren und andererseits dieser auch mitzuteilen, wer für diese Person Zutritt sucht. Dies erlaubt es, ein spezifisches Klingelsignal zunächst dem jeweiligen Bewohner zuzusenden, d.h. an dessen gemäß Lokalisation bestimmten, aktuellen Aufenthaltsort im Haus - also etwa nur dem Keller oder dem Dachboden zuzuleiten und erst beim wiederholten Klingeln ggf. andere Benützer anzuläuten.

Zudem kann eine Zeitsteuerung implementiert werden, um etwa bestimmte Besucher nach dem zu Bett bringen der Kinder abzuweisen oder dergleichen. Weiter sei erwähnt, dass ggf. dort, wo ein Benützer anhand einer Bluetooth-ID erkannt wird, ein Klingelsignal ohnehin spezifisch für diesen Benützer ausgewählt werden kann. Es ist auch möglich, einen bestimmten, durch Dauern einer Tasten- Betätigung eingegebenen Code nur dann als solchen zu erkennen, wenn simultan auch ein Funkkennungssignal empfangen wird, das dem jeweiligen Benützer, dem der Code zugeordnet ist, ebenfalls zugeordnet wird. Es wird also mit anderen Worten ein Benützer evtl. nur dann erkannt, wenn er etwa seine Smartwatch trägt. (Dies ist vorteilhaft gegenüber einer reinen Erkennung und Festlegung des Klingeltons nur anhand der Funkkennung, wenn etwa der Besucher je nach Anlass unterschiedliche Personen im Haus besucht.) Andernfalls wird eine herkömmliche Klingelsignalerzeugung veranlasst, was vorteilhaft ist, wenn etwa Dritte wie Paketboten oder dergleichen zufällig einen per se vergebenen Code benützen.

Es sei erwähnt, dass ggf. auch - und dies gilt auch für Benützung innerhalb eines Hauses, - eine Auswertung von Gesten erfolgen kann, um bestimmte Steuersignale und/oder Klingelsignale auszulösen. So kann etwa nahe eines Lichtschalters gefordert werden, dass ein Mobilteil schnell, z.B. mit einer Frequenz von 2 - 4 Hertz durch Drehen der es haltenden Hand, oder durch Schütteln bewegt wird, damit ein Licht geschaltet wird. In einem solchem Fall umfasst die Haustechnikanordnung demnach in einer bevorzugten Variante eine Gestenerkennung, eine Lokalisierungsstufe zur Lokalisierung eines Gerätes mit dem bzw. bei dem eine Geste ausgeführt wird, und eine Datenübertragungsschnittstelle zur Übertragung von Steuerdaten an eine Schnittstelle bevorzugt unter Verwendung jener Signale, bzw. jener Kommunikationsmittel, mit denen auch die Lokalisierung erfolgt. Interessant hierbei ist auch und vor allem, dass ein und dieselbe Geste zur Steuerung unterschiedlicher Geräte im Ansprechen auf eine Lokalisierung und/oder eine erfasste Annäherung erfolgen kann.

Es sei erwähnt, dass es besonders bevorzugt ist, neben Standardfunktionen, die typisch an Schaltern wie Lichtschaltern implementiert sind, die Lokalisations- und/oder Bewegungs- und/oder Beschleunigungsabhängig erfolgende Steuerung für zumindest auch - Komfort - beziehungsweise Erweiterungsfunktionen zu nützen. Im Übrigen sei erwähnt, dass einerseits der Kommunikationsstandard nicht auf Bluetooth beschränkt ist, hier aber besonders vorteilhaft ist, weil Bluetooth zwar kurzreichweitig ist, aber anders als etwas RFID keine nahezu berührende Annäherung erfordert, so dass mit mehreren Empfängern in einer typischen Installation simultan bzw. sequenziell kurz nacheinander und wiederholt sequenziell in Kommunikation getreten werden kann.

Was die oben erwähnte Bestimmung von Entfernungen über Laufzeiten bzw. Dopplereffekten angeht, so sei darauf hingewiesen, dass insbesondere dann, wenn mit einer Vielzahl von Gegenstationen trianguliert wird, indem nicht Echosignale rückerfasst werden, sondern Laufzeiten nach Umsetzung des Signals und Antwort über eine physikalische Schnittstellenebene, die dort benötigt werdenden zusätzlichen, entfernungsunabhängigen Zeiten umso besser herausgerechnet werden können, je mehr Triangulationsdaten vorliegen, insbesondere, wenn die Fixpunkte ebenfalls miteinander kommunizieren und dabei entsprechende abstandsindika-tive Signale erzeugen, um Abstände zu bestimmten.

Dass derartige Triangulationsdaten auch vorteilhaft sind, um sich gegen "BluetoothID"-Diebstahl durch Abhören der Bluetooth-ID an einem Ort, übertragen der Bluetoothld über weite Strecken und Nutzen an einem anderen Ort zu verteidigen, sei erwähnt.

Ein weiterer Vorteil ergibt sich aus der Lokalisation von Benützern dann, wenn mit der Haustechnikanordnung bzw. dem Gesamtsystem und/oder einen einzelnen, zur Steuerung befähigten Mobilteil wie einem Smartphone berücksichtigt wird, ob mehrere Benützer simultan an einem gegebenen Ort sind oder nicht. Dies kann einerseits ausgenützt werden, um die Geräte bestimmter Benützer dann zu priorisieren, wenn etwa Eltern und Kinder in einem Raum sind und die Anwesenheit erfasst und bestimmt wird, durch wen etwa Helligkeitsänderungen des Raumlichtes, des Lautstärkeänderungen von Audio- Videogeräten zu beeinflussen sind. Die simultane Lokalisation kann lokal erfolgen, dass heißt, es kann mit einem Gerät, von dem aus bedient werden soll, abgefragt werden, ob eine Bluetooth-ID oder andere Funkkennung in der Nähe lokalisiert ist, die eine höhere Benützerberechtigung besitzt, um lokal schon die Benützung eines Menüs zu verhindern. Alternativ kann von einem höher priorisierten Benützer aktiv und/oder durch schlichte Detektion seiner Anwesenheit, d.h. seiner Lokalisation an bestimmten Geräten wie Lichtschaltern oder Audio- Videogeräten usw. eine Betätigung durch Dritte untersagt werden.

Auch wäre es möglich, die gemeinsame Lokalisation zur Realisierung von Einzelschleusen, wie sie etwa in Flughäfen vor Passkontrollen oder Sicherheitskontrollen sinnvoll sind, zu nutzen. In sicherheitsrelevanten Bereichen kann mit zusätzlichen Sensoren eine ergänzende Prüfung vorgenommen werden, falls gewünscht, um Fälle zu unterscheiden, bei denen ein einzelner Benützer mehrere Funkkennung ausstrahlende Geräte mit sich trägt, und zwar von Fällen, in denen mehrere Benützer jeweils nur ein Gerät tragen. In gleicher Weise ist es möglich, Zutritt zu Räumen nur dann zuzulassen, wenn eine Person sich in Begleitung befindet. Dies kann in sicherheitsrelevanten Laboratorien vorteilhaft sein, um die Gesamtsicherheit gegen Unfälle von einzelnen Personen zu erhöhen.

Es wurde vorstehend schon erwähnt, dass es vorteilhaft ist, wenn bestimmte elektrische Verbrauche einerseits über einen fest eingebauten Schalter bzw. Taster bedient werden können, der etwa in Form des vordiskutierten Dimmers am Ort einer üblichen Unterputzdose realisiert wird und andererseits eine Steuerung über ein Smartphone möglich ist.

Es sei diesbezüglich erwähnt, dass es häufig möglich ist, eine direkte Bedienung über das Mobilteil zuzulassen, etwa wenn eine Rollladensteuerung nachgerüstet wird, die selbst ein Bluetooth-fähiges Modul am Rollladenmotor umfasst und einen damit für feste Benützungen an einer vorhandenen Unterputzdose kommunizierenden, tastergesteuerten festinstallierten drahtlosen Taster bzw. Schalter umfasst. In einem solchen Fall kann ggf. die Kommunikation unmittelbar zwischen den Mobilteil und der Rollladensteuerung erfolgen. Man hat demnach eine besonders direkte Verbindung von Smartphone zu Verbraucher, wobei keine Relaisstation oder Rechner und Netzwerke vorhanden sein müssen. Dass dies im Übrigen auch gilt, d.h. eine zusatzrechnerfreie Betätigung möglich ist, wenn mit einem elektrischen Verbrauchen wie einem Rollladen über dessen herkömmlich (drahtlos)zu bedienenden Standard-Taster kommuniziert wird, sei erwähnt.

Es wurde, auch in den unter Bezug genommenen, vollumfänglich zu Offenbarungszwecken eingegliederten Dokumenten erwähnt, dass es vorteilhaft ist, Taster bzw. Schalter und/oder zugeordnete Dimmer und dergleichen so türnah anzuordnen und mit Sensorein bzw. - ausgängen vorzusehen, die zusätzlich realisiert sein können, bzw. die unter Heranziehung der vorhandenen Eingänge wie Tastereingänge realisiert sein können, vorteilhaft ist.

Als Sensoren brauchen nicht nur die Türzustände wie "Tür offen", "Tür verriegelt" oder "Tür unverriegelt geschlossen" erfassende Sensoren verstanden werden, sondern es ist auch möglich, weitere Sensoren vorzusehen. In einer besonders bevorzugten Variante wird dies genützt, um eine einfach zu konfigurierende und gleichwohl besonders sichere Alarmanlage preiswert bereitstellen zu können. Zu diesem Zweck wird ein kommunikationsfähiges Modul bereitgestellt, dass eine Vielzahl von Sensoren umfasst, die insbesondere auch zu anderen Zwecken bevorzugt einsetzbar sein können, und wobei die Module bevorzugt auf unterschiedliche Art und Weise miteinander kommunizieren können. Dies sei beispielhaft an einem Fenstermodul zur Anbringung an einem Fensterrahmen, insbesondere unauffällig an einer Fensterrahmenkante und/oder rahmennah auf einer Scheibe beschrieben.

Es sei als möglich erwähnt, dass ein solches Fenstermodul zunächst wenigstens zwei Batterien besitzt, zwischen welchen automatisch umgeschaltet werden kann, sofern eine momentan verwendete Batterie erschöpft ist. In einem solchen Fall wird die Umschaltung dann, und bevorzugt nur dann, erfolgen, wenn eine Batterie nahezu erschöpft ist und die andere Fallbackbatterie noch genügen Ladespannung besitzt. Um dies zu gewährleisten, können ggf. während Betriebs der ersten Batterie regelmäßig Überprüfungen durchgeführt werden, ob die zweite Batterie nicht zu stark entladen ist, was aufgrund der Selbstentladung durchaus passieren kann, sodass durch die regelmäßig Überprüfungen im Bedarfsfall tatsächlich genügend Energie aus der Zweitbatterie zur Verfügung steht.

Offenbart wird daher unter anderem auch ein (nicht beanspruchter) Alarmsensor zur drahtlosen Übertragung eines Alarmzustandes an wenigstens eine Gegenstelle mit einer batteriebasierten Energieversorgung, wobei dieser so ausgestaltet ist, dass der Sensor zumindest zwei separate, zu seiner Versorgung ausreichende Batterieanordnungen aufweist und ein Mittel zur Auswahl einer der Batterieanordnungen vorgesehen ist, das derart ausgestaltet ist, dass von den Batterieanordnungen eine betrieben wird und die andere als Reserve dient, und ein Reservezustand während des Alarmsensorbetriebes an die Gegenstelle übermittelt wird. Es sei des Weiteren betont, dass eine solche Batterieanordnung zwar vorliegend am Beispiel von Alarmmodulen erörtert wird, dass aber Vorteile ganz prinzipiell für jedwede Art von batteriebetriebenen oder zumindest im Notfall wie einem Stromausfall batteriebetriebenen Modulen erhalten werden und dies demnach nicht allein auf Alarmmodule anwendbar ist, wenngleich es dort einsichtiger Weise besondere Vorteile bietet.

Es kann vorgesehen sein, dass dann, falls eine Batterie als erschöpft oder für eine zumindest kurz- bis mittelfristige Notversorgung wie eine Versorgung des Moduls über einige Tage oder Wochen unzureichende Restkapazität vorliegt, eine Meldung abgesetzt wird. Bereits dies erhöht die Funktionssicherheit des Moduls für Alarmanlagen und dergleichen ganz massiv. Überdies hat der Benützer im Regelfall deutlich verlängerte Fristen, bis ein Batteriewechsel zur Funktionsgewährleistung unumgänglich wird. Eine bevorzugte Fenstermodulanordnung zu Alarmzwecken ist zusätzlich und/oder alternativ so ausgebildet, dass eine Mitteilung abgesetzt wird, wenn die Batterie erschöpft ist.

Als erschöpft ist eine Batterie bzw. ein Akku jedenfalls dann anzusehen, wenn die Ausgangsspannung einen bestimmten Wert unterschreitet. Gegebenenfalls kann zur Überprüfung, ob eine Batterie erschöpft ist, die Ausgangsspannung auch praktisch lastfrei bestimmt werden. Dies hat den Vorteil, dass gegebenenfalls nicht nur die Erschöpfung einer ersten, aktuell benutzten Batterie erfasst werden kann, die unter zumindest partieller Last ausgemessen werden kann, sondern dass auch die Ersatzbatterie gegebenenfalls auf Erschöpfung überprüft werden kann. Dies ist vorteilhaft, weil es bei Batterien (was insoweit gleichgesetzt wird mit wiederaufladbare Batterien) sowohl zu einer allmählichen Selbstentladung als auch zu einer Alterung oder dergleichen kommen kann, was gegebenenfalls dazu führen kann, dass eine als Reserve vorgesehene Batterie gar nicht benutzbar ist oder dass die Reservebatterie nicht so lange hält wie erwünscht. Vorteilhaft ist daher, auch die Reservebatterie unter allenfalls geringer Belastung regelmäßig zu überprüfen. Es sei angemerkt, dass im Regelfall eine Meldung abgesetzt wird, wenn die bei allenfalls geringer Last ermittelte Ausgangsspannung der Batterie auf ein Absinken der Spannung gegenüber einer frischen Batterie bereits hindeutet, aber noch davon aus gegangen werden kann, dass auch etwa in einem Alarmfall, in welchem ein Alarmgeber Schall- und/oder Leuchtsignale erzeugen soll, was eine vergleichsweise hohe Batteriebelastung ergibt, noch eine hinreichend große Ausgangsspannung zur Verfügung steht. Gegebenenfalls kann vorgesehen werden, jedenfalls dann, wenn ein Alarmzustand signalisiert wird, die erste und die zweite Batterie parallel zu betreiben, weil jedenfalls dann ausreichend Leistung zur Verfügung stehen muss und in einem solchen Fall die simultane Belastung beider Batterien unkritisch gegenüber dem Ausbleiben des Alarmsignals wäre.

Es wird einsichtig sein aus dem Vorstehenden, dass dies baulich so umgesetzt werden kann, dass an einem Steuer-Sensormodul Anschlüsse für zwei separate, separat für die Versorgung ausreichenden Batterien vorgesehen sind. Es wird eine Anordnung vorgesehen sein, mit welcher die Ausgangsspannung aus jeder Batterie unabhängig erfasst werden kann und es wird eine Sollwert-Vergleichsstufe vorgesehen sein, um ein batterieausgangsspannungsindikatives Signal zu vergleichen mit einem für eine Batterieausgangssollspannung indikativen Signal. Es sei darauf hingewiesen, dass dies mit konditionierten Signalen möglich ist, beispielsweise digital gewandelten Spannungen, wobei die Digitalwerte gegen einen Vergleichswert mit einer Logikschaltung verglichen werden und/oder dass etwa analog ein Komparator vorgesehen sein kann. Weiter wird eine Kommunikationseinheit vorgesehen sein, die dazu ausgebildet ist, im Ansprechen auf ein für eine Batterieerschöpfung indikatives Signal eine diesbezügliche Information an eine Gegenstelle zu übermitteln. Die Übermittlung kann bevorzugt über die gleichen Kanäle geschehen, über welche ansonsten ebenfalls mit einer Gegenstelle kommuniziert wird.

Im Hinblick darauf, dass ein zu häufig erforderlicher Batteriewechsel als unbequem empfunden wird, kann davon ausgegangen werden, dass die Batterieversorgung gerade bei Alarmmodulen, aber auch bei anderen autarken Modulen über mehrere Tage, typisch viele Wochen bis über mehrere Monate hinweg ausreichen wird, insbesondere dort, wo Maßnahmen zur Verringerung des Energieverbrauchs etwa zu Kommunikationszwecken oder Abstandmesszwecken ergriffen werden, sodass es im Regelfall ausreicht, auf eine Batterieerschöpfung allenfalls im Abstand mehrerer Stunden, typisch einmal täglich, zu prüfen.

Bevorzugt ist ein Alarmfenstermodul für einen Stromsparbetrieb ausgelegt, mit dem allenfalls zyklisch im Bereich bevorzugt mindestens einiger Sekunden Wiederholfrequenz dem System und/oder anderen Sensoren die eigene Funktionsfähigkeit mitgeteilt wird. Ein solches System ist im Standbybetrieb besonders stromsparend und wird bevorzugt durch Aktivieren, d.h. ansprechen eines seiner Sensoren aus dem Schlaf- in den Wachzustand versetzt. Viele Sensoren bzw. Sensormodule können so aufeinander bezüglich der Kommunikationszeitpunkte untereinander synchronisiert werden, um KommunikationsversuchskoIlisionen zu vermeiden. Dies kann durch zyklisches paarweises Kommunizieren erfolgen, sofern kein Alarmzustand zur Aufhebung einer solchen Synchronisation führt.

Als Sensoren kommen insbesondere ein Magnetkontakt für die Überwachung der Fensterstellung (z.B. auf geschlossen, verriegelt, offen, gekippt) in Frage. Weiter können Mikrophone vorgesehen sein, um Einbruchgeräusche wie Glasklirren, Türaufbruch usw. detektieren zu können. Auch das Aufbrechen von Türen ist im Regelfall mit charakteristischen Geräuschen verbunden. Weiter kann etwa ein Radarsensor oder IR-Abstandssensor zum Erkennen von Personen vor dem Fenster im Alarmmodul angeordnet werden. Vorteilhaft ist hier, wenn von der Gebäudeinnenseite her Vorgänge an der Außenseite erfasst werden können. Dies ist durch Rahmen hindurch möglich. Sofern nicht besonders unempfindliche Mikrophone aus Kostengründen gewählt werden, können diese ggf. auch zur Erfassung von Sprachsignalen aus dem Raum verwendet werden, etwa um diese für Kommunikationszwecke weiterzuleiten.

Ein Temperatursensor ist vorteilhaft, weil bei Einbruch oftmals schnelle Temperaturänderungen auftreten, insbesondere dann, falls im Gebäudeinneren im Winter geheizt oder im Sommer gekühlt wird. Durch Abgleich mit anderen Sensoren wie Fensteröffnungssensoren zur Erfassung des Fensterzustandes kann abgeschätzt werden, ob ein Temperatursensor aufgrund eines offenstehenden Fensters plötzlich eine Temperaturänderung erfährt oder ob etwa nach einem mit einem Mikrophon erfassten Geräusch, das als einbruchsindikativ gelten kann, eine Temperaturänderung erfasst wird.

Ob ein bestimmtes Geräusch als einbruchsindikativ gelten kann, wird im Regelfall von verschiedenen Dingen abhängen. So ist etwa in Nachtphasen in bestimmten Räumen einer Wohnung nicht mit Geräuschen zu rechnen, sodass gleichwohl erfasste Geräusche per se als kritisch einzustufen sind. Zudem können impulsartige Geräusche oder klirrende Geräusche aufgrund ihres Frequenzspektrums (mit vielen hohen Frequenzkomponenten des Klirrens) bzw. ihrer Dauer (bei impulsartigen Geräuschen) als kritisch angesehen werden, weil sie womöglich auf die Überwindung einer Barriere gegen Eindringen, etwa durch Aufstellen von Fenstern oder Türen oder das Einschlagen von Fenstern hindeuten. Hingegen können gleichmäßige, relativ leise Geräusche, die lang andauern, auf Hintergrundgeräusche aus dem Straßenverkehr gedeutet werden usw. Es kann vorteilhaft sein, an einer bestehenden Stelle über einen bestimmten Zeitraum typische Geräusche zu erfassen und insbesondere hinsichtlich ihres Frequenzspektrums und ihrer Dauer als Beispiele für unkritische Geräusche heranzuziehen. Eine Geräuschdiskriminierung muss nicht aufwändig sein und braucht keine große Rechenleistung zu erfordern. Hochfrequente Anteile können ohne weiteres entweder an einem digitalisierten Signal mit geringem Rechenaufwand bestimmt werden oder durch analoge Filterung. Ebenso ist es problemfrei möglich, die Dauer, während welcher ein Geräusch einen bestimmten Pegel überschreitet, mit geringstem Aufwand zu erfassen. Damit kann auch bei energiesparend zu betreibenden Modulen eine Auswertung der Geräusche vorgesehen werden.

Es sei diesbezüglich erwähnt, dass es besonders bevorzugt ist, wenn ein einzelnes Fenstermodul mit einer Mehrzahl anderer, vergleichbar aufgebauter Fenstermodule kommuniziert. Dies vermeidet, dass rein lokal bedingte Effekte auftreten bzw. als Fehlalarme erfasst werden. In einer offenbarten Variante umfasst das Fenstermodul zusätzlich und alternativ auch noch einen Helligkeitssensor, mit dem plötzliche Verschattungen erfasst werden können, die am Tag auf die Anwesenheit einer Person hindeuten. Es ist möglich, einerseits ein Modul auf eine Verschattung hin zu aktivieren und andererseits zeitabhängig auf eine unerwartete Belichtung hin zu aktivieren. Unerwartet wird insbesondere dann eine Helligkeitsänderung, insbesondere Helligkeitssteigerung sein, wenn eine geringe Resthelligkeit erfasst wird, die auf eine nächtliche Tageszeit hindeutet. Es sei erwähnt, dass es hier besonders vorteilhaft ist, eine Zeiteinheit im Fenstermodul vorzusehen, wobei diese nicht zwingend an eine Absolutzeit unmittelbar selbst gekoppelt sein muss, sondern es ausreicht, eine Systemzeit eines Gesamtsystems oder eine abgeschätzte Realzeit oder dergleichen am Fenstermodul vorzusehen.

In einer weiter offenbarten Variante hat das Fensteralarmmodul zusätzlich und/oder alternativ einen Infrarotsensor eingebaut, wodurch es besonders effizient auch als Brandmelder arbeiten kann.

Es sei erwähnt, dass bei herkömmlichen Alarmanlagen oftmals Fehlalarme als besonders störend angesehen werden. Derartige Fehlalarme können verschiedene Ursachen haben. In einem System, in welchem ein Alarm ausgelöst wird, wenn entweder eine durch Heizen hohe Temperatur innerhalb einer Wohnung kurzfristig nach unten abfällt, was gegebenenfalls auf das Öffnen einer Türe durch einen Eindringling hindeutet, in welchem Lichtschranken innerhalb der Wohnung aufgebaut sind, durch welche Eindringlinge laufen werden und in welchem Vibrationen an Scheiben erfasst werden, um ein Einbruch zu detektieren, können Fehlalarme auftreten, etwa weil ein Benutzer ohne Deaktivierung der Alarmanlage durch die Lichtschranke läuft, weil er ohne Deaktivierung ein Fenster zum Lüften öffnet oder weil beispielsweise ein Vogel heftig gegen eine mit Vibrationssensor versehene Scheibe fliegt. In jedem einzelnen Fall wird ein Alarm ausgelöst. Derartige Fehlalarme können vermieden werden, wenn gefordert wird, dass wenigstens zwei mögliche Alarmgründe kurz nacheinander erfasst werden. So kann etwa das Unterbrechen einer Lichtschranke dann als kritisch angesehen werden, wenn zuvor eine Vibration an der Scheibe erfasst wurde. Es versteht sich, dass für eine derartige Diskriminierung von Fehlalarmen und Alarmen die Sensoren Informationen über erfasste Ereignisse kommunizieren müssen. Weiter ist einzusehen, dass es bevorzugt ist, wenn in einer Steuerung vorgegeben werden kann, welche Bedingungen gemeinsam auftreten müssen, damit ein Alarm ausgelöst wird. Es ist insoweit vorteilhaft, mehrere unterschiedliche Bedingungen auswerten zu können, und diese Bedingungen auf unterschiedliche Sensoren zu stützen, weil damit einerseits eine Umgehung eines Alarmsystems schwieriger wird und andererseits gegebenenfalls nach aufgetretenen Fehlalarmen sukzessive eine Verbesserung beispielsweise durch Nachinstallation von Sensoren oder Verändern von Regeln verbessert werden kann.

In einer weiter offenbarten Variante ist das bevorzugte Fenstermodul alternativ und/oder zusätzlich mit einem stromsparenden Leuchtmittel wie einer LED versehen, um einerseits eine Notbeleuchtung realisieren zu können und ggf. auch, als Signalgeber im Haus zu dienen. Wo dies der Fall ist, und wo überdies ein Helligkeitssensor oder dergleichen vorgesehen ist, besteht insbesondere die Möglichkeit, dass mehrere Fenstermodule miteinander über gepulste Lichtsignale kommunizieren. Dazu kann es ggf. ausreichen, wenn nicht einmal eine direkte Sichtverbindung besteht, sondern lediglich so starke Helligkeitsschwankungen erfasst werden, dass diese als solche über einem Hintergrund gut erfassbar sind. Es ist dann bevorzugt, wenn jedes Fenstermodul mit gleicher Taktung für die Signalübertragung blinkt, und auf die Erfassung von Helligkeitsänderungen zunächst in einem Modul eine Zeitlang überprüft wird, ob eine wiederholte Helligkeitsänderung mit zunehmender bzw. abnehmender Helligkeit mit der erwarteten Taktung beobachtet wird. Auf diese lock-in-artige Technik wird eine Übertragung zwischen Fenstermodulen auch unabhängig von einer durch sogenannte Jammer leicht zu störenden Funkverbindung ermöglicht. Es sei erwähnt, dass entweder ein reines An/Ausblinken für die Signalübertragung verwendet werden kann, insbesondere dann, wenn die evtl. mit dem Helligkeitssensor erfasste Grundhelligkeit hoch ist und/oder eine Grundhelligkeit mit der LED vorgesehen werden kann, auf die die getakteten Signale aufmoduliert sind.

Es sei im Übrigen erwähnt, dass dort, wo optisch durch Blinken über einen tatsächlichen oder möglichen Alarmzustand informiert wird, eine Aufmodulation von Daten vorgesehen werden kann. So ist es etwa möglich, eine Sensor-Identifikation auf Lichtsignale aufzumodulieren, um anzugeben, wo ein Sensor anspricht und/oder welche Sensorart angesprochen hat.

Die LEDs in den Fenstermodulen dienen einerseits als Notbeleuchtung, etwa bei Ansprechen des Brandmelders, andererseits aber auch zur Abschreckung eines Eindringlings, was besonders effizient ist, wenn mehrere Fenstermodule optisch oder auf andere Weise etwa durch Funksignale miteinander kommunizieren und bei Einschalten der Beleuchtung an einem Fenstermodul veranlasst wird, dass auch andere Fenstermodule ihre Leuchtmittel erregen.

Dies führt zu einer insgesamt abschreckend hohen Helligkeit, auch wenn ein einzelnes Fenstermodul nicht sonderlich hell leuchten wird.

Eine weitere Anwendung für die Erregung der LED besteht als gezielter Signalgeber, etwa um eine Person mit verringerten Hörvermögen über klingelnde Besucher zu informieren, und/oder verabredete Kurzsignale an andere Bewohner eines Hauses zu senden, etwa um Kinder zum Essen zu rufen. Für solche Zwecke ist es vorteilhaft, wenn die Signale ggf. meshartig übertragen werden, weil damit ggf. auch größere Reichweiten überbrückt werden. Dies ist auch und gerade in Etagenwohnungen vorteilhaft, wo nicht gerufen werden soll, weil sich in einem Mehrparteienhaus andere Parteien gestört fühlen könnten und wo etagenweise Funkverbindungen wie Bluetooth besser funktionieren als zwischen durch Betondecken getrennten Etagen. Es sei im Übrigen erwähnt, dass es sehr leicht möglich ist, bestimmte Blue-tooth-Geräte einzubinden, nämlich etwa indem in einem Mobilteil Listen jener Sen-der/Empfänger aufgenommen werden, denen sich das Mobilteil besonders genähert hat und dann diese Listen jeweils ergänzt werden. Auf diese Weise kann einem Gerät mitgeteilt werden, dass und welche andere Geräte für die Kommunikation zugelassen werden können.

Was die Fenstermodule oder Türmodule mit Mehrfachsensoren angeht, so ist auch vorteilhaft., alternativ und/oder zusätzlich einen durch Rahmen oder Türblätter hindurch wirksamen Radarsensor vorzusehen, um Personen vor einem Fenster zu erkennen und ggf. im Ansprechen einen Alarmzustand zu erkennen.

Es sei erwähnt, dass es bevorzugt ist, wenn anhand eines Radarsensorsignals die Größe eines Objektes bzw. mehrerer Objekte vor dem Fenster und/oder deren Bewegung auf ein Fenster zu und/oder vom Fenster weg erkannt werden können. Dazu kann etwa ausgewertet werden, ob das Echosignal besonders groß ist, also eine bestimmte Schwelle überschreitet. Ein großes Signal spricht für ein nahes Objekt respektive ein großes Objekt. Dies lässt sich gegebenenfalls auch ohne Bezugnahme auf Laufzeiten, Dopplerverschiebung usw. erkennen. Weiter können Laufzeiten erfasst werden und/oder Dopplerverschiebungen, um Bewegungen bzw. Entfernungen abzuschätzen. Es ist auch mit einfachen Mitteln möglich, kleinere, gegebenenfalls schnell bewegte Objekte, etwa nahe eines Fensters sich bewegende Tiere wie Katzen oder Vögel, zu unterscheiden von großen Objekten, die sich langsam nähern, wie Menschen.

Bevorzugt ist ein zu Alarmierungszwecken ausgebildetes Fenstermodul in der Lage, eine aktuelle, tatsächliche oder grob genäherte Tageszeit und/oder ein Datum zu erfassen. Dies erlaubt es, etwa nachts zu typischen Einbruchzeiten anders zu reagieren, als zu Zeiten, in denen typisch Bewohner eines Hauses anwesend sind.

Auch können unkritische Zeiten definiert werden, in denen Dritte sich von außen ohne Alarmauslösung nähern dürfen, beispielsweise um Gärtnern oder Fensterputzen ein Tätigwerden ohne Alarm zu ermöglichen.

Es wurde vorstehend schon darauf hingewiesen, dass Fehlalarme besonders gut vermieden werden können, wenn die Signale mehrerer, gegebenenfalls auch unterschiedliche Größen erfassende Signale gemeinsam ausgewertet werden. Eine Möglichkeit, Fehlalarme zu vermeiden, kann darin bestehen, die Annäherung von Dritten dann zuzulassen, wenn diese identifizierbare Mobilteile mit sich tragen, was allgemein dafür spricht, dass der Träger der mobilen Einheit im System bekannt ist. Gegebenenfalls kann einleuchtender Weise auch in solchen Fällen eine PIN Eingabe oder dergleichen verlangt werden.

Dass ggf. für bestimmte Sensorsignale wie Fenstervibrationen eine Alarmierung dann ausgesetzt werden kann, sei erwähnt, etwa wenn die Funk- oder Bluetoothkennung eines vom Fensterputzer verwendeten Smartphones bekannt ist. Bevorzugt ist aber in jedem Fall, wenn wenigstens die Annäherung unbekannter, d.h. nicht vorab registrierter Bluetooth-Sender protokolliert wird, um später zu Einbrüchen ggf. entsprechende Informationen bereitstellen zu können. Es ist vorteilhaft, wenn derartige Informationen an wenigstens einige wenige Geräte innerhalb des Netzes, das als Meshnetzwerk aufgebaut sein kann, übertragen werden. Dies ist auch mit langsamer Kommunikation möglich, weil die entsprechenden Datenmengen sehr klein sein. Durch die Übertragung wird es sinnlos, einzelne Geräte zur Spurvernichtung außer Funktion zu setzen.

Es sei erwähnt, dass Einbrüche häufig als Einbruchsserien erfolgen und ganze Nachbarschaften über einen Zeitraum weniger Tage ausgeraubt werden. Die entsprechenden ausgeraubten Gebäude werden im Regelfall ausgekundschaftet. Dies kann einerseits genutzt werden um, ggf. auch automatisiert auf Wunsch der Benützer oder vollautomatisch durch ein Sicherheitsüberprüfungssystem festzustellen, ob die in einer bereits überfallenen und ausgeraubten Wohnung erfassten Kennungen auch in gefährdeten anderen Gegenden erfasst wurden. Überdies können unmittelbar beim Einbruch erfasste IDs zur sofortigen Alarmierung und ggf. auch Absetzen eines Alarms an eine Zentrale wie eine Polizeistelle genutzt werden. Im Übrigen ist es auch möglich, mit derartigen Modulen Aktivitäten im Inneren zu beobachten. Dies kann vorteilhaft sein, um die Sicherheit von Bewohnern eines Hauses zu erhöhen, wobei bevorzugt mehrere Zustände unterschieden werden, beispielsweise das Fehlen eines Aktivitätshinweises über einen bestimmten Zeitraum hinweg, was darauf hindeutet, dass ein Bewohner beispielsweise hilflos am Boden liegt; Aktivität während eines bestimmten, eigentlich als aktivitätsfrei erwarteten Zeitraumes, was beispielsweise der Fall ist, wenn trotz Abwesenheit aller Benützer eines Haues Aktivität beobachtet wird und, von besonderer Bedeutung, weil von besonderem Vorteil, Aktivität kurz vor Rückkehr und ordnungsgemäßer Einleitung einer Benützung wie ordnungsgemäßer Einleitung einer Türöffnung. Eine Aktivität kurz vor einer solchen ordnungsgemäßen Benützung spricht dafür, dass erst vor kurzem Fremde eingedrungen sind. Es können entsprechende Warnungen ausgegeben werden, die dazu beitragen, dass ein Bewohner sich durch die Begegnung mit Einbrechern gefährdet.

Die beschriebene Alarmanordnung als Haustechnikanordnung ist dann besonders vorteilhaft, wenn über wenigstens einen, bevorzugt mehrere unterschiedliche Kommunikationskanäle ein Kommunikationsaufbau mit anderen Einheiten insbesondere anderen Alarmmodulen erfolgen kann; und/oder wenn mehrere Sensoren im Fenstermodul vorhanden sind und diese gemeinsam ausgewertet werden, um durch unterschiedliche Hinweise auf unerwünschte Eindringlinge und dergleichen eine erhöhte Sicherheit gegen Fehlalarme zu gewährleisten, was wiederum dazu führt, dass dann noch auftretende Alarme tatsächlich ernst zu nehmen sind. Es wird einzuschätzen sein, dass es vorteilhaft ist, einzelne oder alle der beschriebenen Vorteile in einem Fenstermodul zu implementieren. Es sei auch erwähnt, dass ein Fenstermodul dazu ausgebildet sein kann, einen über Funk kommunizierenden Sender zu aktivieren, um netzbasiert Licht zu schalten. Auch dies kann ggf. zur Signalübertragung getaktet erfolgen. Dass eine akustische Alarmierung vom Fenstermodul selbst ausgehen kann durch geeignete akustische Signalgeber und/oder über andere Geräte auf Anforderung hin, sei erwähnt. Es sei auch erwähnt, dass bevorzugt ist, das Alarmmodul zu synchronisieren mit anderen Geräten, um zumindest näherungsweise gleiche Zeiten der Module nach vorheriger Einstellung zu gewährleisten. Als näherungsweise gleiche Zeiten wird angesehen, wenn gemeinsam verwendete Module allenfalls wenige Minuten Tageszeitdifferenzen besitzen und, sofern ein Datum implementiert ist, außer gegen Mitternacht das gleiche Datum besitzen.

Es sei erwähnt, dass ein Alarmsensor zur drahtlosen Übertragung eines Alarmzustandes an wenigstens eine Gegenstelle mit einer batteriebasierten Energieversorgung bevorzugt so ausgestaltet ist, dass der Sensor zwei separate, zu seiner Versorgung ausreichende Batterieanordnung aufweist und ein Mittel zur Auswahl einer der Batterieanordnungen, das derart ausgestaltet ist, dass von den Batterieanordnungen eine betrieben wird und die andere als Reserve dient und ein Reservezustand während des Alarmsensorbetriebs an eine Gegenstelle übermittelt wird. Es sei überdies erwähnt, dass dort, wo in einem entsprechenden Modul wie einem Fenstermodul sowohl Mikrophone als auch akustische Signalgeber, insbesondere ggf. auch lediglich kleine Lautsprecher vorgesehen sind, eine Gegensprechanlage oder ein sogenanntes Babyphone zur Kinderüberwachung realisiert werden kann. In einem solchen Fall wird selten eine hohe Audioqualität erforderlich sein, sodass ggf. mit der Anordnung in beschränkter Bandbreite ausreichend Signale übertragen werden, um Eltern über ein Unwohlsein des Kindes zu informieren oder eine Kommunikation zu ermöglichen. Es ist im Übrigen auch möglich, eine entsprechende Verbindung zwischen einem - ggf. lokalisierten elterlichen Benützer - und einem bestimmten, typisch fest im Kinderzimmer installierten Modul als "Gegensprechanlage" zu realisieren, die, bei älteren Kindern, auch nur dann aktiviert werden muss, wenn sehr große Lautstärken im Zimmer erfasst werden, was beispielsweise darauf hindeutet, dass ein Kind unmittelbar in das Mikrophon spricht. Eine Implementierung als Wecker durch Leuchtsignale und/oder akustische Signale aus dem Lautsprecher sei ebenso erwähnt wie die Möglichkeit, Durchsagen als Broadcast-Durchsagen an eine Vielzahl oder alle angebundenen Stationen zu ermöglichen. Dies erlaubt auch in größeren Gebäuden eine praktisch verzögerungsfreie Übertragung von Signalen wie Zeitgongs, Ansagen und dergleichen.

Erwähnt sei auch, dass durch Übertragung von Rufsignalen bestimmte Notfunktionen wie Notschließfunktionen für Türen bei Amoklauf in einem öffentlichen Gebäude möglich sind; dies gilt insbesondere dort, wo eine Haustechnikanordnung mit Türschließern verbunden ist. Weiter sei erwähnt, dass mit dem vorbeschriebenen Alarmmodul auch die Alarmierung externer Einheiten wie Polizeidienststellen oder Wachdiensten ohne weiteres möglich ist. Für einen solchen Zweck muss das Einzelmodul nicht zwingend selbst mit einer langreichweitigen Schnittstelle wie einer GSM oder UMTS-Schnittstelle verbunden sein. Es wird im Regelfall reichen, wenn eine kurzreichweitige Verbindung, beispielsweise über Bluetooth zu einem in der Nähe befindlichen Smartphone aufgebaut wird, das seinerseits bereits für die Kommunikation mit entfernten Gegenstellen und somit zur Verwendung als Gateway ausgerüstet ist, sei es über WLAN oder über Funktelefonnetze die UMTS und GSM. Soweit Notrufe abgesetzt werden sollen, ist dafür nicht einmal eine kostenpflichtige Verbindung erforderlich, was wiederum die Benützung abgelegter Mobiltelefone ermöglicht, sofern diese für das Absetzen standardisierter Nachrichten programmiert bzw. konfiguriert werden können, eine geeignete kurzreichweitige Schnittstelle aufweisen und eine langreichweitige Telefonnetzverbindung oder WLAN-Verbindung aufzubauen in der Lage sind.

Es sei erwähnt, dass eine Synchronisierung von Einheiten selbst dort möglich ist, wo kein regelmäßiger Austausch mit anderen Einheiten möglich ist, etwa beispielsweise bei an Gartentoren montierten Einheiten. Wenn diese außerhalb der Reichweite anderer, beispielsweise in einem Haus benutzter kurzreichweitig kommunizierender Geräte wie Bluetooth-Geräten angeordnet sind, kann eine Synchronisation immer dann erfolgen, wenn ein Benutzer mit einem Mobilgerät das Gartentor passiert. Dabei sind zwei Arten der Synchronisation möglich. Zum einen kann - quasi blind - eine Synchronisation auf die Zeit des Mobilelementes eines Smartphones erfolgen, ggf. lediglich dann, wenn dieses per se an der entsprechenden Stelle bekannt ist; vorteilhaft ist allerdings, wenn eine Synchronisation derart vorgenommen wird, dass zunächst das Mobilteil zeitlich abgeglichen wird auf die anderen Geräte eines Systems. Dies kann ggf. auch ohne Umstellung der Zeit ins System oder Mobilteil erfolgen, beispielsweise durch Vermerk von Daten, die darauf hinweisen, dass ein Mobilteil wie ein Smartphone gegenüber der Systemzeit um mehrere Minuten, beispielsweise drei Minuten vorgeht. In die-sein Fall sind also alle hausinternen Zeiten drei Minuten hinter der Mobiltelephonzeit.

Alternativ kann eine Synchronisation nicht durch Übertragung von einer Zeit des Smartphones einerseits und andererseits der Angabe, wie weit die Smartphonezeit von der Systemzeit abweicht, erreicht werden, sondern indem unmittelbar die aus aktueller Smartphonezeit und im Smartphone bekannter Abweichung bestimmte Systemzeit an das zu synchronisierende Modul übertragen wird.

Es kann wünschenswert sein, einen Zeitversatz zwischen Smartphonezeit und Systemzeit zu belassen. Dem Smartphone wird dann z.B. mitgeteilt, dass es drei Minuten von der verwendeten Systemzeit abweicht und die Richtung der Abweichung wird ebenfalls mitgeteilt. Wenn dieses Smartphone am entfernt angeordneten, mit den restlichen Geräten des Systems nicht mehr direkt über die drahtlose kurzreichweitige Verbindung kommunikationsfähigen Element wie einem mittels vorgeschriebenen Dimmer realisierten Klingelmodul vorbeigeführt wird, kann dieses synchronisiert werden durch Übertragung von einerseits der Smartphonezeit und andererseits der Angabe, wie weit die Smartphonezeit von der Systemzeit abweicht. Da die entsprechende Kommunikation ohne Weiteres sicher zu verschlüsseln ist, wird eine sichere Synchronisation auf das Restsystem gewährleistet. Die Zeit wird also, wie dies auch mit anderen Daten möglich ist, bevorzugt durch rucksackartige Übertragung von Daten auf besonders günstige Weise synchronisiert. Dass eine Synchronisation auch anders möglich ist, wurde diskutiert.

Es sei erwähnt, dass die Übertragung wegen einer bevorzugten Variante nicht daran gebunden ist, dass ein ganz bestimmter Benutzer die Daten mittels seines Mobilteils an eine außerhalb der Standardreichweite liegenden Station transportiert und dort - ggf. ohne sein Wissen und Zutun nach lediglich vorheriger Installation einer entsprechenden Applikation bzw. seines Bekanntmachens im System die Daten überträgt. Vielmehr reicht es, wenn der entsprechende Benutzer zufällig ausgewählt ist. Für die Aktualisierung von Systemen kann dies dazu führen, das nicht sicher ist, ob ein Benutzer, dem Daten, welche an einer entfernten Station benötigt werden, übertragen wurden, tatsächlich zu dieser gelangt sind, insbesondere innerhalb einer bestimmten Zeit. Daher ist es vorteilhaft, wenn entsprechende, an eine entfernte Station zu übertragende Daten einer Vielzahl, insbesondere zufälligen Benutzern übertragen wird, insbesondere allen Benutzern bzw. deren mitgeführten Mobilteilen, und zwar bevorzugt mit einem Zeitstempel oder anderen Indikator, wann der oder die zufällig ausgewählten Benutzer die Daten für die Übertragung erhalten haben.

Es kann dann sicher gestellt werden, durch Mitübertragung der entsprechenden Zeitdaten oder an die entfernte Station beim Vorbeigehen der zufälligen Benutzer daran, dass eine Reaktion der entfernten Station, beispielsweise eine Aktualisierung nur dann erfolgt, wenn die Daten nicht bereits überholt oder veraltet sind, was durch Mitabspeichern eines "Mindesthaltbarkeitsdatum" oder Vergleich mit einer Versionsnummer oder dergleichen festgestellt werden kann. Wenn valide Daten an die entfernte Station übertragen werden, kann diese gegenüber weiteren, folgenden Benutzern entsprechend reagieren, d.h. die Datenübertragung an den ersten zufälligen Benutzer vom festen System aus erfolgt nicht ausschließlich, damit diesem eine besondere Benutzung gestattet wird oder ermöglicht wird. Es sei im Übrigen erwähnt, dass nach einer Aktualisierung einer entfernten Station ggf. an dieser passierende Benutzer, die sich in Richtung des entfernten Systems bewegen, eine Mitteilung in Datenform auf der Mo-bilteil gespeist werden kann, um anzuzeigen, dass eine weitere Aktualisierung nicht erforderlich ist. Damit können ggf. bereits an zufällige Benutzer übertragene Daten entwertet werden oder gelöscht werden und ggf sogar stattdessen andere Daten übermittelt werden, was gerade bei umfangreichen Systemaktualisierungen von Vorteil sein kann.

Es sei weiter erwähnt, dass mit einer Haustechnikanordnung bzw. einem Haustechniksystem Vorteile erhalten werden, wenn zusätzlich oder alternativ jeder mobile Nutzer respektive die funkfähigen Geräte, die sich identifizieren lassen, jedes Nutzers registriert werden. Dies kann gg£ automatisch und/ oder mit einer Teilnehmernummer geschehen. Eine Registrierung einer Vielzahl von Nutzern kann für die statistische Auswertung herangezogen werden.Einerseits kann zu einem einzelnen Benutzer eine statistische Erfassung seines Zeitprofils erfolgen, etwas um festzustellen, wann einzelne Benutzer ein Firmengebäude betreten; hier kann interessant sein, festzustellen, ob eine momentane Lokalisierung einem typischen Profil entspricht, d.h. das einem bestimmten Benutzer zugeordnete Mobilgerät tatsächlich auch kurz nach Betreten eines Firmengeländes in seinem Büro lokalisiert wird, was dafür spricht, dass der Benutzer tatsächlich arbeitet, oder ob dieses Gerät eine Zeitlang an Stellen verbleibt oder zunächst an eine andere Stelle gebracht wird, weil ein Kollege zu Täuschungszwecken lediglich das Mobilgerät mitgenommen hat.

Neben einer Einzelprofilerfassung sind aber auch statistische Auswertungen ganzer Gruppen vorteilhaft. So können in Kaufhäusern Kundenströme erfasst werden. In Gebäuden wie Schulen kann ermittelt werden, ob unerwartete Bewegungen stattfinden, etwa weil in Panik geratene Schulklassen sich mit hoher Geschwindigkeit in die Gänge bewegen, was zu schnellen Bewegungen vieler Personen außerhalb üblicher Pausenzeit führt. Vorliegend wird also eine statistische Auswertung von In-Haus-Benutzerbewegungen, insbesondere unter Berücksichtigung typischer Bewegungshistorien, vorgeschlagen, um bestimmte Reaktionen zu erzeugen. So ist es möglich, in einem solchen Fall entweder sofort Alarm auszulösen oder eine zur Alarmauslösung befugte Person, beispielsweise im Schulsekretariat zu einer Überwachung aufzufordern, beispielsweise durch Blick auf einen Überwachungsmonitor. Es ist auch möglich, Warnungen auszusprechen, wenn bestimmte Bereiche betreten werden, wie Keller, Funktionsräume usw., sofern die Personen dazu nicht vorab registriert und zugelassen sind. Sofern anzunehmen ist, dass, insbesondere aufgrund des Zurücklegens unerwarteter Wege eine Person in einem Gebäude die Orientierung verloren hat, kann eine Übertragung einer Gebäudekarte unter Angabe der Lokalisierung der Person und, ggf. eines vorab eingegebenen oder abgefragten Ziels, wie einer Raumnummer übertragen werden. Es ist möglich, allgemein nach dem Aufenthalt unbekannter bzw. registrierter Personen und/oder Objekte zu suchen, zu fragen, welche Benutzer, ggf. zu welcher Zeit, gemeinsam anwesend sind oder waren und es können benutzerabhängige Szenarien wie etwa Musik, Licht, Lüftung, Klima und/oder Klingeltöne geschaltet werden. Zudem sind bestimmte Zonen zu sperren, entweder durch reine Zeichen, wie Ampelzeichen oder faktisches Sperren von Durchgängen. Die entsprechenden Möglichkeiten können gemeinsam oder einzeln genutzt werden.

Weiter ist es möglich, zu verlangen, das bestimmte Personen mehrere Mobilgeräte, beispielsweise eine Smartwatch und ein Smartphone tragen, damit sie ohne Probleme in Bereiche gelangen können oder diese verlassen können. Dies ist vorteilhaft, weil es unwahrscheinlich ist, dass ohne Gewalt mehrere Geräte gleichzeitig abhanden kommen oder entwendet werden.

Entsprechend kann ggf. ein Alarm ausgelöst werden. Ein Alarm kann auch ausgelöst werden, wenn sich eine Person zu schnell bewegt, oder schneller als sonst, insbesondere schneller als die Person sich typisch bewegt und/ oder in Begleitung von mehreren Personen eine zu schnelle Bewegung erfolgt. Überdies kann es sinnvoll sein, ein Signal zu erzeugen, wenn sich eine Person entgegen einer typischen Wegrichtung bewegt. Dies ist etwa auf großen Geländen wie Flughäfen vorteilhaft, wo Passagierströme sich typisch in eine einzige feste Richtung, beispielsweise von einem Flugzeug, das gerade gelandet ist, zu einer Passkontrolle hin, bewegen.

Es wird aus dem Vorausstehenden ersichtlich sein, dass es besonders vorteilhaft ist, dass die Konfiguration besonders einfach ist und insbesondere keine Signalübertragung erforderlich ist, die IP-Adressen erfordert usw. Es sei im Übrigen erwähnt, dass dort, wo große Datenmengen übertragen werden müssen und/ oder eine schnelle Übertragung erforderlich ist, ggf für kritische Applikationen mehrere Geräte wie mehrere GSM-fähige Telefone parallel für die Datenübertragung benutzt werden können, was dort vorteilhaft ist, wo noch veraltete Funktelefonnetze existieren.

Es sei weiter das Folgende angemerkt:
Offenbart wird auch ein (nicht beanspruchtes) Verfahren zur Bestimmung der räumlichen Position einer Baugruppe, die dicht zusammen mit anderen Baugruppe angeordnet ist, wobei die Baugruppe einen optischen Signalsequenzgeber aufweist, wobei das Verfahren so ausgestaltet ist, dass der optische Signalsequenzgeber zur Erzeugung einer die Baugruppenidentifizierung ermöglichenden Signalsequenz erregt wird, eine Bildfolge aufgenommen wird, die optische Signalsequenz in der Bildfolge ermittelt wird und die Baugruppenposition in der Bildfolge anhand der ermittelten Signalsequenz bestimmt wird. Eine solche Ausgestaltung ist in einem Gesamtsystem vorteilhaft und auch ohne weiteres bei einer Leistungssteuervorrichtung wie einem Mehrkanaldimmer einsetzbar und vorteilhaft.

Es wurde als vorteilhaft erkannt, wenn bei dem hier ebenfalls offenbarten Verfahren zusätzlich und/oder alternativ zu dem vorstehenden vorgesehen ist, dass ein Verfahren für eine Baugruppe, die einen Nahfeldempfänger aufweist, so ausgestaltet ist, dass vor der Aufnahme der Bildsequenz ein näherungsindikatives Signal mit dem Nahfeldempfänger empfangen wird, die Signalsequenzerzeugung auf den Empfang des näherungsindikativen Signals ausgelöst und der optische Signalgeber mit der die Baugruppenidentifzierung ermöglichenden Signalsequenz aufgenommen wird.

Es wurde als vorteilhaft erkannt, wenn dabei vorgesehen ist, dass ein Verfahren für eine Baugruppe, die konfigurierbar ist, so ausgestaltet ist, dass Konfigurationsinformation während der oder zeitlich nahe zur optischen Signalsequenzerzeugung insbesondere mit den Nahefeldsignalen übertragen wird.

Es wurde als vorteilhaft erkannt, wenn dabei zusätzlich und/oder alternativ zu dem vorstehenden vorgesehen ist, dass ein Verfahren so ausgestaltet ist, dass mehrere Baugruppen simultan eine optische Signalsequenz erzeugen, zu jedem Modul die zugehörige Signalsequenz an die Bildaufnahmevorrichtung übertragen wird und bei der Bildfolgenauswertung berücksichtigt wird.

Vorstehend wurde bereits erörtert, dass eine Konfiguration insbesondere dadurch erfolgen kann, dass sich mit einem Mobilgerät einen fest installierten Element sehr nahe genähert wird, wobei bei entsprechender Erfassung der Abstände durch Signalstärke oder andere Methoden ein Konfigurationsmodus in sowohl einem Mobilteil-Programm als auch bei einem fest installierten Modul ausgelöst werden kann. Dies ist vorteilhaft bei leicht erreichbar angeordneten Systemen, jedoch nicht ohne weiteres praktikabel dort, wo sehr viele Module eng beieinanderliegen, etwa dort, wo eine Dimmeranordnung nicht in einer Unterputzdose verwendet wird, sondern als Hutschienenmodul in einem Schaltschrank neben vielen anderen entsprechenden Hutschienenmodulen. Ebenso ist es unpraktisch dort, wo bestimmte Module nur schlecht erreicht werden können, etwa weil sie oberhalb einer von einem Benutzer erreichbaren Höhe verbaut sind.

Daher wird es bevorzugt, wenn ein bestimmter "Zuordnungsmodus" aktivierbar ist in einem mit Kamera ausgerüsteten Mobilgerät wie einem Smartphone. Ein solcher "Zuordnungsmodus" kann zur Suche nach einem einzelnen Modul nur dieses zum Blinken veranlassen oder aber einen ganzen Satz von Modulen, die dann simultan zugeordnet werden können.

Die zu konfigurierende Gegenstelle wird in einem solchen Fall typisch wenigstens eine zur Aussendung einer Blinkfolge geeignete LED besitzen. Die Blinkfolge der LED wird so gewählt sein, dass binnen kurzer Zeit eine Modulnummer wie eine BluetoothID durch Blinken übertragen werden kann.

Es reicht dann, einen kurzen Videofilm von einer Anordnung aufzunehmen, innerhalb des Filmes das Blinken zu erkennen und dem die LED tragenden Modul zuzuordnen. Danach kann, falls gewünscht, aus dem Videofilm heraus ein Standbild generiert werden und die Grenze des oder jedes blinkenden Module darin insbesondere z.B. durch Kantendetektion ermittelt werden, so dass die Umrisse des blinkenden Moduls im Bild markiert werden können. Damit sind die jeweiligen Module in einem Bild identifiziert und können und beispielsweise bei Anzeige des Standbildes auf dem Smartphone-Bildschirm angeklickt und somit ausgewählt werden. Es können so auch schlecht erreichbare Module und/oder viele eng beieinander angeordnete Module leicht ausgewählt und identifiziert werden.

Dies ist auch dort vorteilhaft, wo eine ordnungsgemäße Dokumentation komplexer Anlagen und/oder von deren Konfigurationen erforderlich ist, beispielsweise in komplexen Industrieanlagen wie Fertigungsstrassen, Walzstrassen, Kraftwerken, Industrieanlagen usw.

Die einzelnen Hutschienenmodule und dergleichen können später gegebenenfalls auch eineindeutig aus einer Schaltzentrale ohne direkten Kontakt angesprochen werden, beispielsweise durch Übermittlung des die Modul identifizierenden, anklickbaren Bildes vom Mobilteil an die Zentrale und durch spätere Auswahl eines Moduls durch Anklicken im in der Zentrale angezeigten Bild. Dies gilt, wenn entsprechende Kommunikationswege, beispielsweise über LAN-Verbindungen mit TCP/IP Protokoll oder dergleichen vorgesehen sind und/oder die Module beispielsweise über ein Meshnetzwerk erreichbar sind.

Die Dokumentation kann durch automatisches Abrufen und/oder Abspeichern einer letzten Konfiguration, Informationen über Konfigurationsänderungen und gegebenenfalls Angaben zu denjenigen, die die Konfiguration geändert haben bzw. zu deren Mobilgeräten erstellt werden.

Dass bei sehr großen Anlagen gegebenenfalls die Bilder eines aufgenommenen Videos gestitched werden können und dass auf Vibrationen der gegebenenfalls handgehaltenen Kamera bei der Analyse von Blinkssignalen im Video kompensiert werden kann, sei der Vollständigkeit halber erwähnt.

Es wird also unter anderem vorgeschlagen ein Verfahren zur Bestimmung der räumlichen Position einer Baugruppe, die dicht zusammen mit anderen Baugruppen angeordnet ist, wobei vorgesehen ist, dass die Baugruppe einen optischen Signalsequenzgeber aufweist, der optisch Signalsequenzgeber zur Erzeugung einer Baugruppenidentifizierung ermöglichenden Signalsequenz erregt wird, eine Bildfolge aufgenommen wird, die optischen Signalsequenz in der Bildfolge ermittelt wird und die Baugruppenpositionen der Bildfolge anhand der ermittelten Signalsequenz bestimmt wird.

Es versteht sich für den Fachmann, dass die Bildfolgenfrequenz und die Blinkfrequenz so gewählt wird, dass keine Fehler durch Aliasing bei der Bildauswertung auftreten.

Es ist besonders vorteilhaft, wenn die entsprechende Baugruppe dabei einen Nahfeldempfänger aufweist, vor der Aufnahme der Bildsequenz entfernungsindikative Signale mit dem Nahfeldempfänger empfangen bzw. unter Verwendung desselben erzeugt werden, die Erzeugung der Sequenz der optischen Signale auf den Empfang des entfernungsindikativen Signales an der Baugruppe ausgelöst und der optische Signalgeber mit der die Baugruppen-Identifzierung ermöglichenden Signalsequenz mittels Kamera aufgenommen wird. Dabei ist es besonders bevorzugt, dann, wenn die Baugruppe konfigurierbar ist, Konfigurationsinformationen während der oder zeitlich nahe zur optischen Signalsequenzerzeugung insbesondere mit den Nahfeldsignalen zu übertragen. Das Verfahren kann bevorzugt vorsehen, dass mehrere Baugruppen simultan eine optische Signalsequenz erzeugen, zu jedem Modul die zugehörige Signalsequenz an die Bildaufnahmevorrichtung übertragen wird und bei der Bildfolgeauswertung berücksichtigt wird.

Dort, wo hochkomplexe Anlagen vorliegen, beispielsweise Industrieanlagen, ist es vorteilhaft, auch noch die lokalisierte Position des Mobilgerätes zu erfassen und in Übereinstimmung mit einer Karte d.h. einem Umgebungsplan, zu bringen, d.h. dort einzutragen. Dies trägt dazu bei, dass eine Industrieanlage sehr leicht dokumentiert werden kann, was bei der Behebung von Störfällen und dergleichen von besonderem Vorteil ist.

Was den Daten-Rucksack, der vorstehend beschrieben wurde, angeht, so sei darauf hingewiesen, dass die Datenpakete gegebenenfalls zerteilt und sequenziell über unterschiedliche Smartphones und Nutzer nacheinander übertragen werden können, was gegebenenfalls auch zur Erhöhung der Sicherheit beitragen kann. Eine Aktivierung neuer Daten braucht dann erst bei Vorliegen aller Datenteile und nach positiver Kontrolle aller Prüfsummen erfolgen. Eine entsprechende Datenübertragung ist insbesondere vorteilhaft bei der Steuerung von Zutrittsberechtigungen, wie diese in Hotels oder großen Firmengelände erforderlich ist. So können in Hotels die Zugangsberechtigung zu Wellnessbereichen, Zimmern oder Service-Räumen leicht geregelt werden. Eine drahtgebundene Kommunikation ist nicht erforderlich, wobei darauf hingewiesen sei, dass die Daten gegebenenfalls von Station zu Station aus einer Zentrale auch an außerhalb der Grundreichweite der Zentrale liegende Stationen übertragen werden können, ohne dass eine Drahtanbindung einer einzelnen Türsteuerung oder dergl. erforderlich ist.

Es sei erwähnt, dass beispielsweise auch von einer entfernten Stationen wie einem Garten- oder Fabriktor Foto-Daten des Öffnenden lokal auf dessen Smartphone datenrucksackartig übertragen werden können, um sie bei Annäherung an den eigentlichen Zentralbereich an die Zentrale zu übermitteln. Dies kann nach geeigneten Bildvergleich verwendet werden, um einen Abgleich zwischen dem aufgrund des Mobilgerätes bzw. der Mobilgeräte-Kennung erwarteten Benutzer und dem tatsächlichen bzw. fotografiert fotografische erfassten Benutzer vorzunehmen.

Beschrieben wurde somit unter anderem ein Verfahren zum Datenabgleich zwischen einer zentralen Einleitung einer Station, die zur Zentrale keine dauerhafte direkte Verbindung aufweist, wobei die Daten zunächst drahtlos zwischen der Zentrale und einer bzw. mehreren mobilen Einheiten übertragen werden und Daten danach von zumindest einer mobilen Einheit bei Annäherung derselben an die entfernte Station an diese übertragen werden.

Es wurde weiter ein Verfahren zum Datenabgleich zwischen einer Zentrale bzw. zentralen Einheit und einer Station vorgeschlagen, wobei die Station zur zentralen Einheit keine dauerhafte direkte Verbindung aufweist, und der Datenabgleich durch die Verwendung mobiler Einheiten erfolgt, wobei Daten zunächst drahtlos zwischen der zentralen Einheit und einer oder mehreren mobilen Einheiten übertragen werden und dann Daten von zumindest einer mobilen einer bei Annäherung derselben an die entfernte Station übertragen werden. Es ist dann möglich, dass die Zentraleinheit eine Zeitvorgabe-Einrichtung ist oder aufweist, die mobilen Einheiten von dieser als Daten zeitindikative Signale mittelbar oder unmittelbar erhalten und die Station durch die Übertragung der Daten von der zumindest einen mobilen Einheit bei Annäherung derselben an die Station auf die Zentraleinheit synchronisiert wird, ohne dass eine direkt dauerhafte Verbindung zur Zeitvorgabe-Einrichtung erforderlich ist. Es wird damit auch ein Verfahren ermöglicht, bei dem die Zentraleinheit auf eine Dritt-Referenz synchronisiert wird, bevor die mobile Einheit auf die Zentraleinheit synchronisiert wird. Es ist also beispielsweise nur ein DCF-77 Empfänger in einem System erforderlich.

Auch wurde ein Verfahren beschrieben, bei welchem zusätzlich vorgesehen ist, dass eine mobile Einheit mit der Zentraleinheit synchronisiert wird, die mobile Einheit nach der Synchronisation mit einer eigenen Taktung betrieben wird und dann die von der mobilen Einheit an die Station übertragenen Daten im Ansprechen auf die Synchronisation und die eigene Taktung bestimmt werden. Dies ist dort vorteilhaft, wo beispielsweise durch starke Temperatur Änderungen im Außenbereich aufgrund der tageszeitlichen Schwankungen der Temperatur die Zeitgeber per se "weglaufen".

## Patentansprüche

1. Leistungssteuervorrichtung (1)
für eine Vielzahl unabhängig betreibbarer Lasten (2a,2b)
eines zweiphasigen Wechselstrom-Lichtnetzes,
die für die unabhängig betreibbaren Lasten
eine gemeinsame Kontrollanordnung (3)
und
separate Leistungsschaltungsanordnungen (1a,1b) aufweist,
wobei
die Leistungsschaltungsanordnungen (1a,1b) jeweils Leistungshalbleiter (1a1,1b1),
eine Ansteuerschaltung(1a2,1b2),
die als
die Leistungshalbleiter (1a1,1b1) leitend
oder nichtleitend steuernde Treiberschaltung (1a2,1b2) gebildet ist, und
eine zugeordnete Netzteilschaltung (1a3, 1b3) aufweisen, und wobei
die Kontrollanordnung (3) eine weitere Netzteilschaltung (3a) aufweist,
wobei
die Netzteilschaltungen (1a3,1b3,3a) separate Bezugspotentiale für die Leistungsschaltungsanordnungen (1a,1b) und die Kontrollanordnung (3) aufweisen,
und zwar derart, dass
von einer ersten Lichtnetzphase die Bezugspotenziale für die Netzteilschaltungen der Leistungsschaltungsanordnungen abgeleitet sind, und
von der zweiten Lichtnetzphase das Bezugspotenzial für die Netzteilschaltung der Kontrollanordnung (3) abgeleitet ist,
wobei das Bezugspotenzial für die Netzteilschaltung (3a) der Kontrollanordnung (3) jeweils
von jenem der Leistungsschaltungsanordnungen differiert, und
wobei
für die Übertragung
von Ansteuersignalen
aus der Kontrollanordnung (3)
an die Ansteuerschaltungen (1a2,1b2) zwischen Kontrollanordnung (3)
und Ansteuerschaltungen
jeweils ein Optokoppler (4a,4b) oder ein Übertrager vorgesehen ist.

2. Leistungssteuervorrichtung (1) nach dem vorhergehenden Anspruch, **dadurch gekennzeichnet, dass** die Leistungshalbleiter der Leistungsschaltungsanordnungen jeweils Leistungshalbleiterpaare (1a1,1b1) sind und der Potentialpunkt der Leistungshalbleiterpaare, der von dem Bezugspotential der Netzteilschaltung differiert, zwischen den in Serie geschalteten Leistungshalbleitern des Leistungshalbleiterpaares liegt.

3. Leistungssteuervorrichtung (1) nach dem vorhergehenden Anspruch, **dadurch gekennzeichnet, dass** die Kontrollanordnung (3) dazu ausgebildet ist, ein Signal auszugeben, das so lange einen ersten binären Wert besitzt, wie ein leitender Zustand fiir die Leistungshalbleiter gewünscht wird, und so lange den zweiten binären Wert besitzt, wie ein nichtleitender Zustand ftir die Leistungshalbleiter gewünscht wird.

4. Leistungssteuervorrichtung (1) nach einem der vorhergehenden Ansprüche, **dadurch gekennzeichnet, dass** die Ansteuerungsschaltungen (1a2,1b2) dazu ausgelegt sind, protokollfreie Signale zu erhalten, die einen Phasenan- bzw. - abschnittszeitpunkt unmittelbar selbst bestimmen.

5. Leistungssteuervorrichtung (1) nach einem der vorhergehenden Ansprüche, **dadurch gekennzeichnet, dass** jeder der unabhängigen Lasten (2a,2b) ein Shunt-Widerstand (5a,5b) zugeordnet ist, der zwischen der Phase, aus der die Kontrollanordnung (3) im Betrieb leistungsversorgt wird, und den Leistungshalbleitern dieses Kanals vorgesehen ist.

6. Leistungssteuervorrichtung (1) nach einem der vorhergehenden Ansprüche, **dadurch gekennzeichnet, dass**
zu einer Mehrzahl der separat steuerbaren Lasten (2a,2b),
bevorzugt zu jeder der separat steuerbaren Lasten (2a,2b)
jeweils eine Strommess-Stufe (6a,6b) vorgesehen ist, die dazu angeordnet ist, ein stromindikatives Signal an die Kontrollanordnung (3) zu speisen.

7. Leistungssteuervorrichtung (1) nach einem der vorhergehenden Ansprüche, **dadurch gekennzeichnet, dass** ein Kurzschlussabschaltungsmittel (7a,7b) vorgesehen ist, um unabhängig von einer Auswertung eines Strommess-Signals in der Kontrollanordnung (3) eine separate Kurzschlussabschaltung zu ermöglichen.

8. Leistungssteuervorrichtung (1) nach dem vorhergehenden Anspruch, **dadurch gekennzeichnet, dass** das Kurzschlussabschaltungsmittel (7a,7b) so ausgebildet ist, dass dann, wenn ein über den Shunt (5a,5b) fließender Strom zu groß wird, eine Weiterleitung eines die Treiberstufe zu leitender Ansteuerung der Leistungshalbleiter veranlassenden Signales über die Optokoppler (4a,4b) an die Treiberstufen unterbunden wird.

9. Leistungssteuervorrichtung (1) nach einem der vorhergehenden Ansprüche, **dadurch gekennzeichnet, dass** die Kontrollanordnung (3) dazu ausgebildet ist, im Ansprechen auf Strommess-Signale (6a,6b) zumindest eines durchzuführen von:
Wahl zwischen Phasenanschnitt- oder -abschnitt-Steuerung,
Erkennen einer Last als induktive, kapazitive oder ohmsche Last,
Erfassen einer an eine Last gespeisten Leistung,
Reagieren auf eine an eine Last gespeiste Leistung,
Ausgabe des aktuellen Leistungsverbrauches,
Erfassung des Stromverbrauchs und Ausgabe darauf bezogener Signale,
Begrenzung einer Gesamtverlustleistung in der Leistungssteuervorrichtung,
Begrenzung eines Gesamtstromes durch die Leistungssteuervorrichtung,
Ansteuerung eines Ersatzkanals, falls in einem eigentlich gewünschten Kanal ein Versagen detektiert wird oder wurde.

10. Leistungssteuervorrichtung (1) nach einem der vorhergehenden Ansprüche, **dadurch gekennzeichnet, dass** sie ein für den Einbau in eine Unterputzdose ausgebildetes Gehäuse umfasst, wobei zwei Phaseneingänge sowie erforderlichenfalls eine Erdungsleitung vorgesehen sind, und entsprechende Ausgänge für jede der Lasten (2a,2b).

11. Leistungssteuervorrichtung (1) nach einem der vorhergehenden Ansprüche, **dadurch gekennzeichnet, dass** zumindest eine Schnittstelle für drahtlose Kommunikation vorgesehen ist, wobei die
Leistungssteuervorrichtung bevorzugt dazu ausgebildet ist,
über die Schnittstelle für drahtlose Kommunikation
anderen Leistungsanordnungen zumindest eines aus der Gruppe
eigenes einwandfreies Funktionieren der Lastansteuerung,
einwandfreies Funktionieren dritter Leistungssteuervorrichtungen,
Ausfallen dritter Leistungssteuervorrichtungen,
Signalstärken eines beweglichen Signalsenders,
Signalstärken eines beweglichen Bluetooth-Senders,
eine Triangulation eines beweglichen Bluetooth-Senders ermöglichende Signalstärken,
Steuersignale für die Laststeuerung zur gemeinsamen Steuerung mehrerer unabhängig betreibbarer, aber gemeinsam betriebener Lasten darstellen,
Steuersignale für die Ansteuerung von Ersatzkanälen ausgefallener oder ungenügend anzusteuernder eigener Kanäle,
eine Konfiguration anderer Leistungssteuervorrichtungen bewirkende Signale Statistiken über Störungen der eigenen Kommunikationsschnittstellen Statistiken über Störungen fremder Kommunikationsschnittstellen
zu kommunizieren
und/oder
eine Gatewayverbindung zwischen unterschiedlichen Schnittstellen zu ermöglichen und/oder wobei
die Schnittstelle für drahtlose Kommunikation für Kommunikation nach zumindest einem Standard aus der Gruppe
Bluetooth
und
WLAN
ausgebildet ist.

12. Leistungssteuervorrichtung (1) nach einem der vorhergehenden Ansprüche, **dadurch gekennzeichnet, dass** wenigstens ein zusätzlicher Sensor vorgesehen ist, der ausgewählt ist aus der Gruppe
Temperatursensor,
Temperatursensor zur Erzeugung von auf die Temperatur der Leistungssteuervorrichtung bezogenen Temperatursignalen,
und
induktiver bzw. Magnet-Sensor zur Erfassung der Stärke eines Magnetfeldes an der Unterputzdose,
Hall-Sensor zur Erfassung der Stärke eines Magnetfeldes an der Unterputzdose,
Magnet-Sensor zur Erfassung der Stärke eines Magnetfeldes an der Unterputzdose mit einer Genauigkeit, die bei türnaher Montage der Leistungssteuervorrichtung und Anbringung eines Magneten in einem Türblatt eine Unterscheidung zumindest einer geschlossenen von einer offenen Türstellung ermöglicht, bevorzugt zusätzlich auch einer angelehnten bzw. halboffenen Türstellung ermöglicht,
Vibrationssensor,
Schocksensor,
Beschleunigungssensor,
Drucksensor.

13. Leistungssteuervorrichtung nach einem der vorhergehenden Ansprüche,
die als Mehrkanal-Leistungssteuervorrichtung und dadurch als Dimmer ausgebildet ist, dass sie dazu ausgebildet ist, Licht auf einer erforderlichen Helligkeit einzuschalten,
wobei die Leistungssteuervorrichtung einen Speicher für eine aktuelle Dimmstufe aufweist,
**dadurch gekennzeichnet, dass**
der Speicher als stromausfallsicherer Speicher gebildet ist und
die Leistungssteuervorrichtung
zur Gewährleistung des Einschaltens auf einer sinnvollen Dimmstufe nach Stromausfällen
ein Mittel aufweist, um die Dauer eines gerade beendeten Stromausfalls zu bestimmen oder abzuschätzen,
und ein Mittel, um die bestimmte oder abgeschätzte Stromausfalldauer als kurz oder nichtkurz zu bewerten, wobei die nichtkurze Stromausfalldauer länger als eine kurze Stromausfalldauer ist,
und wobei die Leistungssteuervorrichtung dazu ausgebildet ist, auf Wiedereintreten der Stromversorgung
genau dann einen Weiterbetrieb auf der Dimmstufe im stromausfallsicheren Speicher zu gewährleisten, wenn die bestimmte oder abgeschätzte Stromausfalldauer kurz war.

14. Leistungssteuervorrichtung nach dem vorhergehenden Anspruch, **dadurch gekennzeichnet, dass**
die Leistungssteuervorrichtung dazu ausgebildet ist, Temperaturen sukzessive zu erfassen und ein Wiedereintreten der Stromversorgung und/oder die Dauer eines Stromausfalls im Ansprechen auf den Temperaturverlauf der sukzessiven Messungen zu bestimmen
und/oder dazu ausgebildet ist,
eine längere Ausphase im Ansprechen auf eine abrupte Temperaturabnahme
zwischen zwei nacheinander beobachteten Temperaturmessungen zu erfassten wird:.
und/oder dazu ausgebildet ist,
auf einen schnellen Temperaturanstieg nach dem Einschalten auf eine längere auszeichnende Auszeit zu schließen
und/oder
mit
einem Überstrom- bzw. Kurzschlussdetektionsmittel
und
einer kurzfristigen Überstromabschaltung versehen ist,
wobei
eine Überstromereignis-Fehlklassifikations-Vermeidungs- Zähleranordnung vorgesehen ist, um durch Zählen das Klassifizieren von Überstromereignisse als vermeintlichem Kurzschluss zu vermeiden, und wobei das Überstrom-bzw. Kurzschlussdetektionsmittel dazu ausgebildet ist, einen tatsächlichen Kurzschluss erst bei Erreichen eines hinreichend hohen Zählwertes mit der Zähleranordnung festzustellen, wobei weiter die Zähleranordnung dazu ausgebildet ist, eine Takt- oder Halbwellenzahl nach Anschalten und/oder eine Anzahl vermeintlicher Überstromereignisse zu zählen,
wobei bevorzugt die Leistungssteuervorrichtung dazu ausgebildet ist, dass eine kurzfristige Abschaltung von Überstrom je Halbwelle erfolgt und/oder wobei bevorzugt
das Überstrom-bzw. Kurzschlussdetektionsmittel dazu ausgebildet ist, nach Einschalten der Leistungssteuervorrichtung eine höhere Anzahl vermeintliche Kurzschlüsse zu zulassen als in einem Zustand, in dem schon über geraume Zeit Strom geflossen ist und/oder wobei bevorzugt
die Leistungssteuervorrichtung
dazu ausgebildet ist, dann, wenn ein vermeintlicher Kurzschluss in einer unmittelbar zurückliegenden Phase oder einige Phasen zuvor aufgetreten ist, der an eine Last gespeisten Strom verringert wird,
und/oder wobei bevorzugt
die Leistungssteuervorrichtung
dazu ausgebildet ist, einen vermeintlichen Kurzschluss festzustellen,
wenn ein gemäß Grenzwerten nicht vorgesehener Strom durch einen Verbraucher fliesst, und/oder
dazu ausgebildet ist, auf einen tatsächlichen Kurzschluss hin entsprechende Signale abzusetzen.

15. Haustechnikinstallationsanordnung insbesondere für Altbausanierung
mit einer als Dimmer ausgestalteten Leistungssteuervorrichtung nach einem der vorhergehenden Ansprüche,
der von seiner Steuerung in mehreren Betriebszuständen eingeschaltet betreibbar ist,
und
einer
von einem Schalter zum Dimmer führenden
Leitung,
**dadurch gekennzeichnet, dass**
die Leitung einphasig vorn Schalter zum Dimmer führt,
der Schalter die Leitung einphasig austastet
und
die Steuerung so ausgebildet bzw. programmiert ist, dass sie den Dimmer zumindest auf ein kurzes Ausschalten zyklisch um einen der mehreren Betriebszustände weiterwechselt, wobei bevorzugt
der Dimmer einen bei Netzspannungsunterbrechung nicht flüchtigen Speicher für seinen letzten Betriebszustand aufweist und eine Anordnung, um bei Beendigung einer Netzspannungsunterbrechung einen neuen Betriebszustand im Ansprechen auf den gespeicherten letzten Betriebszustand zu festzulegen
und/oder
der Dimmer dazu ausgebildet ist, auf Netzspannungsunterbrechung in Stufen zwischen Hell und Dunkel zu schalten
und/oder
der Dimmer dazu ausgebildet ist,
in 3 bis 5 Stufen zwischen Hell und Dunkel zu schalten und/oder wobei bevorzugt
ein
vom Dimmer betriebenes
Leuchtmittel vorhanden ist,
wobei
der Dimmer dazu ausgebildet ist,
eine Helligkeitskennlinie
für die Abhängigkeit des
Dimmgrades
vom Helligkeitsgrad des angeschlossenen Leuchtmittels zu speichern.

## Claims

1. Power control device (1)
for a multiplicity of independently operable loads (2a, 2b) of a two-phase AC lighting network,
which power control device has, for the independently operable loads,
a common monitoring arrangement (3)
and
separate power circuit arrangements (1a, 1b),
wherein
the power circuit arrangements (1a, 1b) each have
power semiconductors (1a1, 1b1),
an actuating circuit (1a2, 1b2)
formed as a driver circuit (1a2, 1b2) that controls
the power semiconductors (1a1, 1b1)
into an on
or
off state,
and
an associated power supply unit circuit (1a3, 1b3), and wherein
the monitoring arrangement (3) has a further power supply unit circuit (3a),
wherein
the power supply unit circuits (1a3, 1b3, 3a) have separate reference potentials
for the power circuit arrangements (1a, 1b)
and the monitoring arrangement (3),
specifically such that
the reference potentials for the power supply unit circuits of the power circuit arrangements are derived from a first lighting network phase,
and
the reference potential for the power supply unit circuit of the monitoring arrangement (3) is derived from the second lighting network phase,
wherein the reference potential for the power supply unit circuit (3a) of the monitoring arrangement (3) respectively differs from that of the power circuit arrangements,
and
wherein
an optical coupler (4a, 4b) or a transformer is respectively provided between the monitoring arrangement (3) and the actuation circuits for the transmission of actuation signals from the monitoring arrangement (3) to the actuation circuits (1a2, 1b2).

2. Power control device (1) according to the preceding claim, **characterized in that** the power semiconductors of the power circuit arrangements are each power semiconductor pairs (1a1, 1b1) and the potential point of the power semiconductor pairs, which differs from the reference potential of the power supply unit circuit, is between the power semiconductors of the power semiconductor pair that are connected in series.

3. Power control device (1) according to the preceding claim, **characterized in that** the monitoring arrangement (3) is designed to output a signal that has a first binary value as long as an on state is desired for the power semiconductors, and has the second binary value as long as an off state is desired for the power semiconductors.

4. Power control device (1) according to one of the preceding claims, **characterized in that** the actuation circuits (1a2, 1b2) are designed to receive protocol-free signals which directly themselves determine a phase gating or phase chopping time.

5. Power control device (1) according to one of the preceding claims, **characterized in that** each of the independent loads (2a, 2b) is assigned a shunt resistor (5a, 5b) which is provided between the phase, from which the monitoring arrangement (3) is supplied with power during operation, and the power semiconductors of this channel.

6. Power control device (1) according to one of the preceding claims, **characterized in that** a current measurement stage (6a, 6b) is respectively provided
for a plurality of the separately controllable loads (2a, 2b),
preferably for each of the separately controllable loads (2a, 2b),
and is arranged to feed a signal indicative of the current to the monitoring arrangement (3).

7. Power control device (1) according to one of the preceding claims, **characterized in that** a short-circuit disconnection means (7a, 7b) is provided in order to enable a separate short-circuit disconnection independently of an evaluation of a current measurement signal in the monitoring arrangement (3).

8. Power control device (1) according to the preceding claim, **characterized in that** the short-circuit disconnection means (7a, 7b) is designed such that, when a current flowing across the shunt (5a, 5b) becomes too large, a signal that causes the driver stage to actuate the power semiconductors into an on state is prevented from being forwarded via the optocouplers (4a, 4b) to the driver stages.

9. Power control device (1) according to one of the preceding claims, **characterized in that** the monitoring arrangement (3) is designed to carry out at least one of the following in response to current measurement signals (6a, 6b):
choosing between phase gating or phase chopping control,
identifying a load as an inductive, capacitive or resistive load,
capturing a power fed to a load,
reacting to a power fed to a load,
outputting the current power consumption,
capturing the current consumption and outputting signals based thereon,
limiting a total power loss in the power control device,
limiting a total current through the power control device,
actuating a replacement channel if failure is or was detected in an actually desired channel.

10. Power control device (1) according to one of the preceding claims, **characterized in that** it comprises a housing designed for installation in a flush-mounted box, wherein two phase inputs and, if necessary, an earthing line are provided, as well as corresponding outputs for each of the loads (2a, 2b).

11. Power control device (1) according to one of the preceding claims, **characterized in that** at least one interface for wireless communication is provided, wherein the power control device is preferably designed to communicate, to other power arrangements via the interface for wireless communication, at least one from the following group
its own proper operation of the load control,
proper operation of third power control devices,
failure of third power control devices,
signal strengths of a movable signal transmitter,
signal strengths of a movable Bluetooth transmitter,
signal strengths enabling triangulation of a movable Bluetooth transmitter,
control signals for the load control for jointly controlling a plurality of independently operable, but jointly operated loads,
control signals for actuating replacement channels for its own channels that have failed or cannot be sufficiently actuated,
signals causing a configuration of other power control devices,
statistics relating to faults in its own communication interfaces,
statistics relating to faults in external communication interfaces,
and/or
to enable a gateway connection between different interfaces,
and/or wherein
the interface for wireless communication is designed for communication according to at least one standard from the following group
Bluetooth
and
WLAN.

12. Power control device (1) according to one of the preceding claims, **characterized in that** at least one additional sensor is provided and is selected from the following group
temperature sensor,
temperature sensor for generating temperature signals based on the temperature of the power control device,
and
inductive or magnetic sensor for capturing the strength of a magnetic field at the flush-mounted box,
Hall sensor for capturing the strength of a magnetic field at the flush-mounted box,
magnetic sensor for capturing the strength of a magnetic field at the flush-mounted box with an accuracy which, when the power control device is installed close to the door and a magnet is fitted in a door leaf, makes it possible to distinguish at least a closed door position from an open door position, preferably also an ajar or half-open door position,
vibration sensor,
shock sensor,
acceleration sensor,
pressure sensor.

13. Power control device according to one of the preceding claims, which is in the form of a multi-channel power control device and, as a result, is in the form of a dimmer, wherein it is designed to switch on light at a required brightness, wherein the power control device has a memory for a current dimming level, **characterized in that** the memory is in the form of a non-volatile memory, and the power control device,
in order to ensure switching-on at a useful dimming level after power failures,
has a means for determining or estimating the duration of a power failure that has just ended,
and a means for assessing the determined or estimated power failure duration as short or not short, wherein the power failure duration that is not short is longer than a short power failure duration,
and wherein the power control device is designed, in response to the power supply being available again, to ensure continued operation at the dimming level in the non-volatile memory precisely when the determined or estimated power failure duration was short.

14. Power control device according to the preceding claim, **characterized in that** the power control device
is designed to successively capture temperatures and to determine when the power supply is available again and/or the duration of a power failure in response to the temperature profile of the successive measurements,
and/or is designed
to capture a longer off-phase in response to an abrupt temperature decrease between two temperature measurements observed in succession,
and/or is designed
to infer from a fast temperature increase after switching-on a longer distinguishing off-time,
and/or is provided
with
an overcurrent or short-circuit detection means
and
a short-term overcurrent disconnection,
wherein
an overcurrent-event-misclassification-avoidance-counter arrangement is provided in order to avoid overcurrent events being classified as an alleged short circuit by means of counting, and wherein the overcurrent or short-circuit detection means is designed to determine an actual short circuit only when a sufficiently high count value is achieved with the counter arrangement, wherein the counter arrangement is also designed to count a number of clock pulses or half-cycles after switching-on and/or a number of alleged overcurrent events,
wherein the power control device is preferably designed such that overcurrent is briefly disconnected for each half-cycle, and/or wherein the overcurrent or short-circuit detection means is preferably designed, after the power control device has been switched on, to allow a higher number of alleged short circuits than in a state in which current has already flowed for some time,
and/or wherein the power control device is preferably designed such that, when an alleged short circuit has occurred in an immediately preceding phase or some phases beforehand, the current fed to a load is reduced,
and/or wherein the power control device is preferably designed to determine an alleged short circuit if a current not provided according to limit values flows through a consumer, and/or
is designed to transmit corresponding signals in response to an actual short circuit.

15. Building services installation arrangement, in particular for renovating old buildings, having a power control device according to one of the preceding claims in the form of a dimmer, which, when switched on, can be operated in a plurality of operating states by its controller, and a line leading from a switch to the dimmer,
**characterized in that**
the line leads, in one phase, from the switch to the dimmer,
the switch probes the line in one phase,
and
the controller is designed or programmed such that it continues to change the dimmer cyclically by one of the plurality of operating states at least in response to brief switching-off,
wherein
the dimmer preferably has a memory, which is non-volatile when the network voltage is interrupted, for its last operating state and an arrangement in order to determine a new operating state in response to the stored last operating state when a network voltage interruption is ended,
and/or
the dimmer is designed to switch in stages between light and dark in response to an interruption in the network voltage
and/or
the dimmer is designed
to switch between light and dark in 3 to 5 stages, ,
and/or wherein there is preferably
a luminous means operated by the dimmer,
wherein
the dimmer is designed to store a brightness characteristic curve for the dependence of the degree of dimming on the degree of brightness of the connected luminous means

## Revendications

1. Dispositif de commande de puissance (1)
pour une pluralité de charges (2a, 2b) pouvant fonctionner indépendamment
d'un réseau d'éclairage à courant alternatif biphasé,
qui possède, pour les charges pouvant fonctionner indépendamment,
un arrangement de contrôle (3) commun
et
des arrangements de circuit de puissance (1a, 1b) séparés,
les arrangements de circuit de puissance (1a, 1b)
possédant respectivement
des semiconducteurs de puissance (1a1, 1b1),
un circuit d'amorçage (1a2, 1b2),
qui est réalisé en tant que circuit de pilotage (1a2, 1b2) qui commande
les semiconducteurs de puissance (1a1, 1b1)
à l'état passant
ou
à l'état bloqué,
et
un circuit d'alimentation secteur (1a3, 1b3) associé,
et
l'arrangement de contrôle (3) possédant un circuit d'alimentation secteur supplémentaire (3a),
les circuits d'alimentation secteur (1a3, 1b3, 3a) possédant des potentiels de référence distincts pour les arrangements de circuit de puissance (1a, 1b)
et l'arrangement de contrôle (3),
et ce de telle sorte que
les potentiels de référence pour les circuits d'alimentation secteur des arrangements de circuit de puissance
sont dérivés d'une première phase de réseau d'éclairage,
et
le potentiel de référence pour le circuit d'alimentation secteur de l'arrangement de contrôle (3) est dérivé
de la deuxième phase de circuit d'éclairage,
le potentiel de référence
pour le circuit d'alimentation secteur (3a) de l'arrangement de contrôle (3)
étant respectivement différent
de celui des arrangements de circuit de puissance,
et
un optocoupleur (4a, 4b)
ou un transmetteur
étant respectivement prévu
entre
l'arrangement de contrôle (3)
et
les circuits d'amorçage
pour la transmission
de signaux d'amorçage
depuis l'arrangement de contrôle (3)
aux circuits d'amorçage (1a2, 1b2).

2. Dispositif de commande de puissance (1) selon la revendication précédente, **caractérisé en ce que** les semiconducteurs de puissance des arrangements de circuit de puissance sont respectivement des paires de semiconducteurs de puissance (1a1, 1b1) et le point de potentiel des paires de semiconducteurs de puissance, qui est différent du potentiel de référence du circuit d'alimentation secteur, se trouve entre les semiconducteurs de puissance branchés en série des paires de semiconducteurs de puissance.

3. Dispositif de commande de puissance (1) selon la revendication précédente, **caractérisé en ce que** l'arrangement de contrôle (3) est configuré pour délivrer un signal qui possède une première valeur binaire aussi longtemps qu'un état passant est souhaité pour les semiconducteurs de puissance, et qui possède une deuxième valeur binaire aussi longtemps qu'un état bloqué est souhaité pour les semiconducteurs de puissance.

4. Dispositif de commande de puissance (1) selon l'une des revendications précédentes, **caractérisé en ce que** les circuits d'amorçage (1a2, 1b2) sont conçus pour obtenir des signaux exempts de protocole, qui déterminent directement eux-mêmes un instant de début de phase ou de fin de phase.

5. Dispositif de commande de puissance (1) selon l'une des revendications précédentes, **caractérisé en ce qu'**une résistance shunt (5a, 5b) est associée à chacune des charges (2a, 2b) indépendantes, laquelle est présente entre la phase depuis laquelle l'arrangement de contrôle (3) en fonctionnement est alimenté en puissance et les semiconducteurs de puissance de ce canal.

6. Dispositif de commande de puissance (1) selon l'une des revendications précédentes, **caractérisé en ce que**
un étage de mesure du courant (6a, 6b) est respectivement présent
pour une pluralité des charges (2a, 2b) pouvant être commandées séparément,
de préférence pour chacune des charges (2a, 2b) pouvant être commandées séparément,
lequel est disposé de manière à alimenter l'arrangement de contrôle (3) avec un signal indicateur de courant.

7. Dispositif de commande de puissance (1) selon l'une des revendications précédentes, **caractérisé en ce qu'**un moyen de déconnexion sur court-circuit (7a, 7b) est présent, afin de rendre possible une déconnexion sur court-circuit séparée indépendamment d'une interprétation d'un signal de mesure du courant dans l'arrangement de contrôle (3).

8. Dispositif de commande de puissance (1) selon la revendication précédente, **caractérisé en ce que** le moyen de déconnexion sur court-circuit (7a, 7b) est configuré de telle sorte que lorsqu'un courant qui circule par le shunt (5a, 5b) devient trop grand, une retransmission, par le biais de l'optocoupleur (4a, 4b) aux étages de pilotage, d'un signal qui amène l'étage de pilotage à l'amorçage d'un état passant des semiconducteurs de puissance est inhibée.

9. Dispositif de commande de puissance (1) selon l'une des revendications précédentes, **caractérisé en ce que** l'arrangement de contrôle (3) est configuré pour, en réaction à des signaux de mesure du courant (6a, 6b), effectuer au moins l'une des opérations parmi :
sélection entre une commande en début de phase ou en fin de phase,
reconnaissance d'une charge en tant que charge inductive, capacitive ou ohmique,
détection d'une puissance qui alimente une charge,
réaction à une puissance qui alimente une charge,
délivrance en sortie de la puissance consommée actuelle,
détection du courant consommé et délivrance en sortie de signaux qui s'y réfèrent,
limitation d'une puissance dissipée totale dans le dispositif de commande de puissance,
limitation d'un courant total à travers le dispositif de commande de puissance,
commande d'un canal de substitution dans le cas où une défaillance est ou a été détectée dans un canal réellement souhaité.

10. Dispositif de commande de puissance (1) selon l'une des revendications précédentes, **caractérisé en ce qu'**il comporte un boîtier configuré pour le montage dans une boîte à encastrer, deux entrées de phase et, si nécessaire, une ligne de mise à la terre étant présentes, ainsi que des sorties correspondantes pour chacune des charges (2a, 2b).

11. Dispositif de commande de puissance (1) selon l'une des revendications précédentes, **caractérisé en ce qu'**au moins une interface pour la communication sans fil est présente,
le dispositif de commande de puissance étant de préférence configuré pour,
par le biais de l'interface pour la communication sans fil,
communiquer à d'autres arrangements de puissance au moins une information issue du groupe
parfait fonctionnement propre de la commande de charge,
parfait fonctionnement de troisièmes dispositifs de commande de puissance,
pannes de troisièmes dispositifs de commande de puissance,
intensités de signal d'un émetteur de signal mobile,
intensités de signal d'un émetteur Bluetooth mobile,
intensités de signal rendant possible une triangulation d'un émetteur Bluetooth mobile,
signaux de commande pour la commande de charge destinés à une commande commune de plusieurs charges pouvant fonctionner indépendamment, mais fonctionnant en commun,
signaux de commande pour l'amorçage de canaux de substitution de canaux propres tombés en panne ou ne pouvant pas être suffisamment amorcés,
signaux provoquant une configuration d'autres dispositifs de commande de puissance,
statistiques à propos de perturbations des interfaces de communication propres,
statistiques à propos de perturbations des interfaces de communication externes,
et/ou
rendre possible une connexion par passerelle entre différentes interfaces
et/ou
l'interface pour la communication sans fil étant configurée pour la communication selon au moins une norme issue du groupe
Bluetooth
et
WLAN.

12. Dispositif de commande de puissance (1) selon l'une des revendications précédentes, **caractérisé en ce qu'**au moins un capteur supplémentaire est présent, lequel est choisi dans le groupe
capteur de température,
capteur de température destiné à générer des signaux de température rapportés à la température du dispositif de commande de puissance,
et
capteur inductif ou magnétique destiné à détecter l'intensité d'un champ magnétique au niveau de la boîte à encastrer,
capteur à effet Hall destiné à détecter l'intensité d'un champ magnétique au niveau de la boîte à encastrer,
capteur magnétique destiné à détecter l'intensité d'un champ magnétique au niveau de la boîte à encastrer avec une précision qui, dans le cas d'un montage proche d'une porte du dispositif de commande de puissance et d'une installation d'un aimant dans un vantail de porte, rend possible une différentiation entre au moins une position fermée et une position ouverte de la porte, de préférence rend en plus également possible une position en appui ou à moitié ouverte de la porte,
capteur de vibrations,
capteur de choc,
capteur d'accélération,
capteur de pression.

13. Dispositif de commande de puissance selon l'une des revendications précédentes,
lequel est configuré en tant que dispositif de commande de puissance multicanaux et, de ce fait, en tant que gradateur, qui est configuré pour
mettre en circuit un luminaire à une luminosité nécessaire,
le dispositif de commande de puissance
possédant une mémoire pour un niveau de gradation actuel,
**caractérisé en ce que**
la mémoire est réalisée sous la forme d'une mémoire à l'épreuve des pannes électriques et
le dispositif de commande de puissance,
en vue de garantir la mise en circuit à un niveau de gradation raisonnable après des pannes électriques,
possède un moyen destiné à déterminer ou à estimer la durée d'une panne électrique qui vient de se terminer
et un moyen destiné à évaluer la durée déterminée ou estimée de la panne électrique comme étant courte ou non courte, la durée non courte de la panne électrique étant plus longue qu'une durée courte de la panne électrique,
et le dispositif de commande de puissance étant configuré pour,
lors du rétablissement de l'alimentation électrique,
garantir alors exactement une poursuite du fonctionnement au niveau de gradation dans la mémoire à l'épreuve des pannes électriques lorsque la durée déterminée ou estimée de la panne électrique était courte.

14. Dispositif de commande de puissance selon la revendication précédente, **caractérisé en ce que**
le dispositif de commande de puissance
est configuré pour détecter successivement des températures et déterminer un rétablissement de l'alimentation électrique et/ou la durée d'une panne électrique en réaction à l'évolution de la température des mesures successives
et/ou est configuré pour
détecter une phase d'arrêt plus longue en réaction à une diminution soudaine de la température entre deux mesures de température observées l'une après l'autre
et/ou est configuré pour,
en présence d'une augmentation de température rapide après la mise en circuit, déduire un temps d'arrêt distingué plus long
et/ou
est pourvu
d'un moyen de détection de surintensité ou de court-circuit
et
d'une mise hors circuit sur surintensité de courte durée,
un arrangement compteur de prévention de classification d'événement de surintensité étant présent afin de, par comptage, éviter la classification d'événements de surintensité en tant que court-circuit supposé, et le moyen de détection de surintensité ou de court-circuit étant configuré pour ne constater un court-circuit effectif que lorsqu'une valeur de comptage suffisamment élevée est atteinte avec l'arrangement compteur, l'arrangement compteur étant en outre configuré pour compter un nombre de cycles ou de demi-ondes après la connexion et/ou un nombre d'événements de surintensité supposés,
le dispositif de commande de puissance étant de préférence
configuré de telle sorte qu'une mise hors circuit de courte durée d'une surintensité
est effectuée pour chaque demi-onde et/ou
le moyen de détection de surintensité ou de court-circuit étant de préférence configuré pour, après la mise en circuit du dispositif de commande de puissance, autoriser un nombre plus élevé de courts-circuits supposés que dans un état dans lequel un courant a déjà circulé pendant un temps considérable
et/ou
le dispositif de commande de puissance étant de préférence configuré pour, lorsqu'un court-circuit supposé s'est produit dans une phase directement antérieure ou quelques phases précédentes, que le courant qui alimente une charge soit réduit,
et/ou le dispositif de commande de puissance étant de préférence configuré pour constater un court-circuit supposé lorsqu'un courant non prévu selon des valeurs limites circule à travers un récepteur et/ou
étant configuré pour interrompre des signaux correspondants en présence d'un court-circuit effectif.

15. Arrangement d'installation domotique, notamment pour la rénovation d'une construction ancienne,
comprenant un dispositif de commande de puissance selon l'une des revendications précédentes réalisé sous la forme d'un gradateur,
lequel peut être mis en fonctionnement par une commande dans plusieurs états de fonctionnement,
et
une
ligne
qui mène d'un commutateur au gradateur,
**caractérisé en ce que**
la ligne mène du commutateur au gradateur sous forme monophasée,
le commutateur module la ligne sur une phase
et
la commande est configurée ou programmée de telle sorte que, au moins sur une courte mise hors tension, elle continue de changer le gradateur cycliquement d'un des plusieurs états de fonctionnement,
le gradateur possédant de préférence une mémoire non volatile dans le cas d'une interruption de l'alimentation par le réseau pour son dernier état de fonctionnement et un arrangement destiné à spécifier, lors de la fin d'une interruption de l'alimentation par le réseau, un nouvel état de fonctionnement en réaction au dernier état de fonctionnement mémorisé
et/ou
le gradateur étant configuré pour, sur une interruption de l'alimentation par le réseau, commuter en niveaux entre clair et sombre
et/ou
le gradateur étant configuré pour
commuter en 3 à 5 niveaux entre clair et sombre
et/ou
un
luminaire
commandé par le gradateur
étant de préférence présent,
le gradateur étant configuré pour
mémoriser une courbe caractéristique de luminosité
pour la dépendance du
degré de gradation
au degré de luminosité du luminaire raccordé.
